(19) Europäisches Patentamt / European Patent Office / Office européen des brevets

(11) **EP 4 412 208 A1**

(12) **EUROPEAN PATENT APPLICATION**
published in accordance with Art. 153(4) EPC

(43) Date of publication:
**07.08.2024  Bulletin 2024/32**

(21) Application number: **22878989.7**

(22) Date of filing: **11.10.2022**

(51) International Patent Classification (IPC):
**H04N 19/426** (2014.01)   **H04N 19/70** (2014.01)
**H04N 19/96** (2014.01)   **H04N 19/119** (2014.01)
**H04N 19/30** (2014.01)   **H04N 19/54** (2014.01)
**H04N 19/167** (2014.01)

(52) Cooperative Patent Classification (CPC):
**H04N 19/119; H04N 19/167; H04N 19/30;
H04N 19/426; H04N 19/54; H04N 19/70;
H04N 19/96**

(86) International application number:
**PCT/KR2022/015259**

(87) International publication number:
**WO 2023/059168 (13.04.2023 Gazette 2023/15)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.10.2021  KR 20210134385**

(71) Applicant: **LG Electronics Inc.**
**Yeongdeungpo-gu**
**Seoul 07336 (KR)**

(72) Inventor: **OH, Hyunmook**
**Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **POINT CLOUD DATA TRANSMISSION METHOD, POINT CLOUD DATA TRANSMISSION DEVICE, POINT CLOUD DATA RECEPTION METHOD, AND POINT CLOUD DATA RECEPTION DEVICE**

(57)  A point cloud data transmission method according to embodiments may comprise the steps of: encoding point cloud data; and transmitting a bitstream including the point cloud data. In addition, a point cloud data transmission device according to embodiments may comprise: an encoder which encodes point cloud data; and a transmitter which transmits a bitstream including the point cloud data.

FIG. 1

**Description**

[Technical Field]

Embodiments relate to a method and device for processing point cloud content.

[Background Art]

Point cloud content is content represented by a point cloud, which is a set of points belonging to a coordinate system representing a three-dimensional space. The point cloud content may express media configured in three dimensions, and is used to provide various services such as virtual reality (VR), augmented reality (AR), mixed reality (MR), and self-driving services. However, tens of thousands to hundreds of thousands of point data are required to represent point cloud content. Therefore, there is a need for a method for efficiently processing a large amount of point data.

[Disclosure]

[Technical Problem]

Embodiments provide a device and method for efficiently processing point cloud data. Embodiments provide a point cloud data processing method and device for addressing latency and encoding/decoding complexity.
The technical scope of the embodiments is not limited to the aforementioned technical objects, and may be extended to other technical objects that may be inferred by those skilled in the art based on the entire contents disclosed herein.

[Technical Solution]

To achieve these objects and other advantages and in accordance with the purpose of the disclosure, as embodied and broadly described herein, a method of transmitting point cloud data may include encoding point cloud data, and transmitting a bitstream containing the point cloud data. In another aspect of the present disclosure, a method of receiving point cloud data may include receiving a bitstream containing point cloud data, and decoding the point cloud data.

[Advantageous Effects]

Devices and methods according to embodiments may process point cloud data with high efficiency.
The devices and methods according to the embodiments may provide a high-quality point cloud service.
The devices and methods according to the embodiments may provide point cloud content for providing general-purpose services such as a VR service and a self-driving service.

[Description of Drawings]

The accompanying drawings, which are included to provide a further understanding of the disclosure and are incorporated in and constitute a part of this application, illustrate embodiment(s) of the disclosure and together with the description serve to explain the principle of the disclosure. For a better understanding of various embodiments described below, reference should be made to the description of the following embodiments in connection with the accompanying drawings. The same reference numbers will be used throughout the drawings to refer to the same or like parts.
The accompanying drawings, which are included to provide a further understanding of the disclosure and are incorporated in and constitute a part of this application, illustrate embodiment(s) of the disclosure and together with the description serve to explain the principle of the disclosure. For a better understanding of various embodiments described below, reference should be made to the description of the following embodiments in connection with the accompanying drawings. The same reference numbers will be used throughout the drawings to refer to the same or like parts. In the drawings:

FIG. 1 shows an exemplary point cloud content providing system according to embodiments;
FIG. 2 is a block diagram illustrating a point cloud content providing operation according to embodiments;
FIG. 3 illustrates an exemplary process of capturing a point cloud video according to embodiments;
FIG. 4 illustrates an exemplary point cloud encoder according to embodiments;
FIG. 5 shows an example of voxels according to embodiments;

FIG. 6 shows an example of an octree and occupancy code according to embodiments;

FIG. 7 shows an example of a neighbor node pattern according to embodiments;

FIG. 8 illustrates an example of point configuration in each LOD according to embodiments;

FIG. 9 illustrates another example of point configuration in each LOD according to embodiments;

FIG. 10 illustrates a point cloud decoder according to embodiments;

FIG. 11 illustrates a point cloud decoder according to embodiments;

FIG. 12 illustrates a point cloud data transmission device according to embodiments;

FIG. 13 illustrates a point cloud data reception device according to embodiments;

FIG. 14 illustrates an exemplary structure operable in connection with point cloud data transmission/reception methods/devices according to embodiments;

FIG. 15 illustrates a process of encoding, transmission, and decoding point cloud data according to embodiments;

FIG. 16 shows a layer-based point cloud data configuration and a structure of geometry and attribute bitstreams according to embodiments;

FIG. 17 shows a configuration of a bitstream according to embodiments;

FIG. 18 illustrates a bitstream sorting method according to embodiments;

FIG. 19 illustrates a method of selecting geometry data and attribute data according to embodiments;

FIG. 20 illustrates a method of configuring a slice including point cloud data according to embodiments;

FIG. 21 illustrates a single slice-based geometry tree structure and a segmented slice-based geometry tree structure according to embodiments;

FIG. 22 illustrates a layer group of a geometry tree and an independent layer group structure of an attribute coding tree according to embodiments;

FIG. 23 illustrates a structure of a layer group and subgroups according to embodiments;

FIG. 24 illustrates an example of context reference between groups according to embodiments;

FIG. 25 illustrates an example of context reference between groups according to embodiments;

FIG. 26 illustrates an example of context buffer management according to embodiments;

FIG. 27 illustrates an example of context buffer management according to embodiments;

FIG. 28 illustrates an example of context buffer management according to embodiments;

FIG. 29 shows a table comparing context memory usage of a context buffer according to embodiments;

FIG. 30 shows a table comparing context memory usage of a context buffer according to embodiments;

FIG. 31 shows a table presenting a result of context buffer management according to embodiments;

FIG. 32 shows a table presenting a result of context buffer management according to embodiments;

FIG. 33 illustrates a bitstream according to embodiments;

FIG. 34 shows a syntax of a sequence parameter set according to embodiments;

FIG. 35 shows a syntax of a sequence parameter set according to embodiments;

FIG. 36 shows a syntax of a geometry data unit header according to embodiments;

FIG. 37 shows a syntax of a layer group structure inventory according to embodiments;

FIG. 38 illustrates a point cloud data transmission device/method according to embodiments;

FIG. 39 illustrates a point cloud data reception device/method according to embodiments;

FIG. 40 illustrates a point cloud data reception method according to embodiments;

FIG. 41 illustrates a method of transmitting and receiving point cloud data according to embodiments;

FIG. 42 illustrates devices/methods for transmitting and receiving point cloud data according to embodiments;

FIG. 43 illustrates devices/methods for transmitting and receiving point cloud data according to embodiments;

FIG. 44 illustrates devices/methods for transmitting and receiving point cloud data according to embodiments;

FIG. 45 illustrates a method of transmitting point cloud data according to embodiments; and

FIG. 46 illustrates a method of receiving point cloud data according to embodiments.

[Best Mode]

Reference will now be made in detail to the preferred embodiments of the present disclosure, examples of which are illustrated in the accompanying drawings. The detailed description, which will be given below with reference to the accompanying drawings, is intended to explain exemplary embodiments of the present disclosure, rather than to show the only embodiments that may be implemented according to the present disclosure. The following detailed description includes specific details in order to provide a thorough understanding of the present disclosure. However, it will be apparent to those skilled in the art that the present disclosure may be practiced without such specific details.

Although most terms used in the present disclosure have been selected from general ones widely used in the art, some terms have been arbitrarily selected by the applicant and their meanings are explained in detail in the following description as needed. Thus, the present disclosure should be understood based upon the intended meanings of the terms rather than their simple names or meanings.

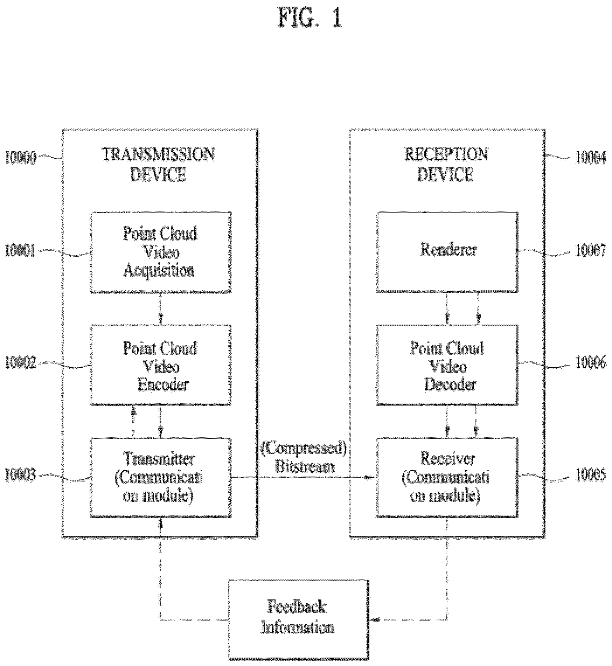

FIG. 1 shows an exemplary point cloud content providing system according to embodiments.

The point cloud content providing system illustrated in FIG. 1 may include a transmission device 10000 and a reception device 10004. The transmission device 10000 and the reception device 10004 are capable of wired or wireless communication to transmit and receive point cloud data.

The point cloud data transmission device 10000 according to the embodiments may secure and process point cloud video (or point cloud content) and transmit the same. According to embodiments, the transmission device 10000 may include a fixed station, a base transceiver system (BTS), a network, an artificial intelligence (AI) device and/or system, a robot, an AR/VR/XR device and/or server. According to embodiments, the transmission device 10000 may include a device, a robot, a vehicle, an AR/VR/XR device, a portable device, a home appliance, an Internet of Thing (IoT) device, and an AI device/server which are configured to perform communication with a base station and/or other wireless devices using a radio access technology (e.g., 5G New RAT (NR), Long Term Evolution (LTE)).

The transmission device 10000 according to the embodiments includes a point cloud video acquirer 10001, a point cloud video encoder 10002, and/or a transmitter (or communication module) 10003.

The point cloud video acquirer 10001 according to the embodiments acquires a point cloud video through a processing process such as capture, synthesis, or generation. The point cloud video is point cloud content represented by a point cloud, which is a set of points positioned in a 3D space, and may be referred to as point cloud video data, point cloud data, or the like. The point cloud video according to the embodiments may include one or more frames. One frame represents a still image/picture. Therefore, the point cloud video may include a point cloud image/frame/picture, and may be referred to as a point cloud image, frame, or picture.

The point cloud video encoder 10002 according to the embodiments encodes the acquired point cloud video data. The point cloud video encoder 10002 may encode the point cloud video data based on point cloud compression coding. The point cloud compression coding according to the embodiments may include geometry-based point cloud compression (G-PCC) coding and/or video-based point cloud compression (V-PCC) coding or next-generation coding. The point cloud compression coding according to the embodiments is not limited to the above-described embodiment. The point cloud video encoder 10002 may output a bitstream containing the encoded point cloud video data. The bitstream may contain not only the encoded point cloud video data, but also signaling information related to encoding of the point cloud video data.

The transmitter 10003 according to the embodiments transmits the bitstream containing the encoded point cloud video data. The bitstream according to the embodiments is encapsulated in a file or segment (e.g., a streaming segment), and is transmitted over various networks such as a broadcasting network and/or a broadband network. Although not shown in the figure, the transmission device 10000 may include an encapsulator (or an encapsulation module) configured to perform an encapsulation operation. According to embodiments, the encapsulator may be included in the transmitter 10003. According to embodiments, the file or segment may be transmitted to the reception device 10004 over a network, or stored in a digital storage medium (e.g., USB, SD, CD, DVD, Blu-ray, HDD, SSD, etc.). The transmitter 10003 according to the embodiments is capable of wired/wireless communication with the reception device 10004 (or the receiver 10005) over a network of 4G, 5G, 6G, etc. In addition, the transmitter may perform a necessary data processing operation according to the network system (e.g., a 4G, 5G or 6G communication network system). The transmission device 10000 may transmit the encapsulated data in an on-demand manner.

The reception device 10004 according to the embodiments includes a receiver 10005, a point cloud video decoder 10006, and/or a renderer 10007. According to embodiments, the reception device 10004 may include a device, a robot, a vehicle, an AR/VR/XR device, a portable device, a home appliance, an Internet of Things (IoT) device, and an AI device/server which are configured to perform communication with a base station and/or other wireless devices using a radio access technology (e.g., 5G New RAT (NR), Long Term Evolution (LTE)).

The receiver 10005 according to the embodiments receives the bitstream containing the point cloud video data or the file/segment in which the bitstream is encapsulated from the network or storage medium. The receiver 10005 may perform necessary data processing according to the network system (e.g., a communication network system of 4G, 5G, 6G, etc.). The receiver 10005 according to the embodiments may decapsulate the received file/segment and output a bitstream. According to embodiments, the receiver 10005 may include a decapsulator (or a decapsulation module) configured to perform a decapsulation operation. The decapsulator may be implemented as an element (or component) separate from the receiver 10005.

The point cloud video decoder 10006 decodes the bitstream containing the point cloud video data. The point cloud video decoder 10006 may decode the point cloud video data according to the method by which the point cloud video data is encoded (e.g., in a reverse process of the operation of the point cloud video encoder 10002). Accordingly, the point cloud video decoder 10006 may decode the point cloud video data by performing point cloud decompression coding, which is the reverse process to the point cloud compression. The point cloud decompression coding includes G-PCC coding.

The renderer 10007 renders the decoded point cloud video data. The renderer 10007 may output point cloud content by rendering not only the point cloud video data but also audio data. According to embodiments, the renderer 10007 may include a display configured to display the point cloud content. According to embodiments, the display may be implemented as a separate device or component rather than being included in the renderer 10007.

The arrows indicated by dotted lines in the drawing represent a transmission path of feedback information acquired by the reception device 10004. The feedback information is information for reflecting interactivity with a user who consumes the point cloud content, and includes information about the user (e.g., head orientation information, viewport information, and the like). In particular, when the point cloud content is content for a service (e.g., self-driving service, etc.) that requires interaction with the user, the feedback information may be provided to the content transmitting side (e.g., the transmission device 10000) and/or the service provider. According to embodiments, the feedback information may be used in the reception device 10004 as well as the transmission device 10000, or may not be provided.

The head orientation information according to embodiments is information about the user's head position, orientation, angle, motion, and the like. The reception device 10004 according to the embodiments may calculate the viewport information based on the head orientation information. The viewport information may be information about a region of a point cloud video that the user is viewing. A viewpoint is a point through which the user is viewing the point cloud video, and may refer to a center point of the viewport region. That is, the viewport is a region centered on the viewpoint, and the size and shape of the region may be determined by a field of view (FOV). Accordingly, the reception device 10004 may extract the viewport information based on a vertical or horizontal FOV supported by the device in addition to the head orientation information. Also, the reception device 10004 performs gaze analysis or the like to check the way the user consumes a point cloud, a region that the user gazes at in the point cloud video, a gaze time, and the like. According to embodiments, the reception device 10004 may transmit feedback information including the result of the gaze analysis to the transmission device 10000. The feedback information according to the embodiments may be acquired in the rendering and/or display process. The feedback information according to the embodiments may be secured by one or more sensors included in the reception device 10004. According to embodiments, the feedback information may be secured by the renderer 10007 or a separate external element (or device, component, or the like). The dotted lines in FIG. 1 represent a process of transmitting the feedback information secured by the renderer 10007. The point cloud content providing system may process (encode/decode) point cloud data based on the feedback information. Accordingly, the point cloud video data decoder 10006 may perform a decoding operation based on the feedback information. The reception device 10004 may transmit the feedback information to the transmission device 10000. The transmission device 10000 (or the point cloud video data encoder 10002) may perform an encoding operation based on the feedback information. Accordingly, the point cloud content providing system may efficiently process necessary data (e.g., point cloud data corresponding to the user's head position) based on the feedback information rather than processing (encoding/decoding) the entire point cloud data, and provide point cloud content to the user.

According to embodiments, the transmission device 10000 may be called an encoder, a transmission device, a transmitter, or the like, and the reception device 10004 may be called a decoder, a receiving device, a receiver, or the like.

The point cloud data processed in the point cloud content providing system of FIG. 1 according to embodiments (through a series of processes of acquisition/encoding/transmission/decoding/rendering) may be referred to as point cloud content data or point cloud video data. According to embodiments, the point cloud content data may be used as a concept covering metadata or signaling information related to the point cloud data.

The elements of the point cloud content providing system illustrated in FIG. 1 may be implemented by hardware, software, a processor, and/or a combination thereof.

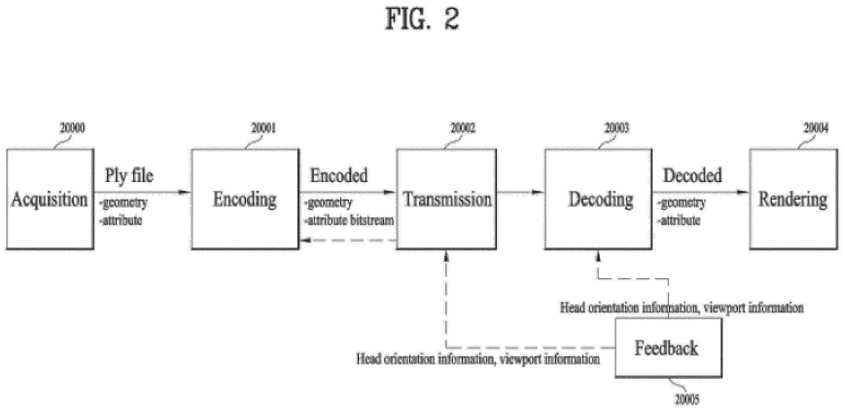

FIG. 2 is a block diagram illustrating a point cloud content providing operation according to embodiments.

The block diagram of FIG. 2 shows the operation of the point cloud content providing system described in FIG. 1. As described above, the point cloud content providing system may process point cloud data based on point cloud compression coding (e.g., G-PCC).

The point cloud content providing system according to the embodiments (e.g., the point cloud transmission device 10000 or the point cloud video acquirer 10001) may acquire a point cloud video (20000). The point cloud video is represented by a point cloud belonging to a coordinate system for expressing a 3D space. The point cloud video according to the embodiments may include a Ply (Polygon File format or the Stanford Triangle format) file. When the point cloud video has one or more frames, the acquired point cloud video may include one or more Ply files. The Ply files contain point cloud data, such as point geometry and/or attributes. The geometry includes positions of points. The position of each point may be represented by parameters (e.g., values of the X, Y, and Z axes) representing a three-dimensional coordinate system (e.g., a coordinate system composed of X, Y and Z axes). The attributes include attributes of points (e.g., information about texture, color (in YCbCr or RGB), reflectance r, transparency, etc. of each point). A point has one or more attributes. For example, a point may have an attribute that is a color, or two attributes that are color and reflectance. According to embodiments, the geometry may be called positions, geometry information, geometry data, position information, position data, or the like, and the attribute may be called attributes, attribute information, attribute data, or the like. The point cloud content providing system (e.g., the point cloud transmission device 10000 or the point cloud video acquirer 10001) may secure point cloud data from information (e.g., depth information, color information, etc.) related to the acquisition process of the point cloud video.

The point cloud content providing system (e.g., the transmission device 10000 or the point cloud video encoder 10002) according to the embodiments may encode the point cloud data (20001). The point cloud content providing system may encode the point cloud data based on point cloud compression coding. As described above, the point cloud data may include the geometry information and attribute information about a point. Accordingly, the point cloud content providing system may perform geometry encoding of encoding the geometry and output a geometry bitstream. The point cloud content providing system may perform attribute encoding of encoding attributes and output an attribute bitstream. According to embodiments, the point cloud content providing system may perform the attribute encoding based on the geometry encoding. The geometry bitstream and the attribute bitstream according to the embodiments may be multiplexed and output as one bitstream. The bitstream according to the embodiments may further contain signaling information related to the geometry encoding and attribute encoding.

The point cloud content providing system (e.g., the transmission device 10000 or the transmitter 10003) according to the embodiments may transmit the encoded point cloud data (20002). As illustrated in FIG. 1, the encoded point cloud data may be represented by a geometry bitstream and an attribute bitstream. In addition, the encoded point cloud data may be transmitted in the form of a bitstream together with signaling information related to encoding of the point cloud data (e.g., signaling information related to the geometry encoding and the attribute encoding). The point cloud content providing system may encapsulate a bitstream that carries the encoded point cloud data and transmit the same in the form of a file or segment.

The point cloud content providing system (e.g., the reception device 10004 or the receiver 10005) according to the embodiments may receive the bitstream containing the encoded point cloud data. In addition, the point cloud content providing system (e.g., the reception device 10004 or the receiver 10005) may demultiplex the bitstream.

The point cloud content providing system (e.g., the reception device 10004 or the point cloud video decoder 10005) may decode the encoded point cloud data (e.g., the geometry bitstream, the attribute bitstream) transmitted in the bitstream. The point cloud content providing system (e.g., the reception device 10004 or the point cloud video decoder 10005) may decode the point cloud video data based on the signaling information related to encoding of the point cloud video data contained in the bitstream. The point cloud content providing system (e.g., the reception device 10004 or the point cloud video decoder 10005) may decode the geometry bitstream to reconstruct the positions (geometry) of points. The point cloud content providing system may reconstruct the attributes of the points by decoding the attribute bitstream based on the reconstructed geometry. The point cloud content providing system (e.g., the reception device 10004 or the point cloud video decoder 10005) may reconstruct the point cloud video based on the positions according to the reconstructed geometry and the decoded attributes.

The point cloud content providing system according to the embodiments (e.g., the reception device 10004 or the renderer 10007) may render the decoded point cloud data (20004). The point cloud content providing system (e.g., the reception device 10004 or the renderer 10007) may render the geometry and attributes decoded through the decoding process, using various rendering methods. Points in the point cloud content may be rendered to a vertex having a certain thickness, a cube having a specific minimum size centered on the corresponding vertex position, or a circle centered on the corresponding vertex position. All or part of the rendered point cloud content is provided to the user through a display (e.g., a VR/AR display, a general display, etc.).

The point cloud content providing system (e.g., the reception device 10004) according to the embodiments may secure feedback information (20005). The point cloud content providing system may encode and/or decode point cloud data based on the feedback information. The feedback information and the operation of the point cloud content providing system according to the embodiments are the same as the feedback information and the operation described with reference to FIG. 1, and thus detailed description thereof is omitted.

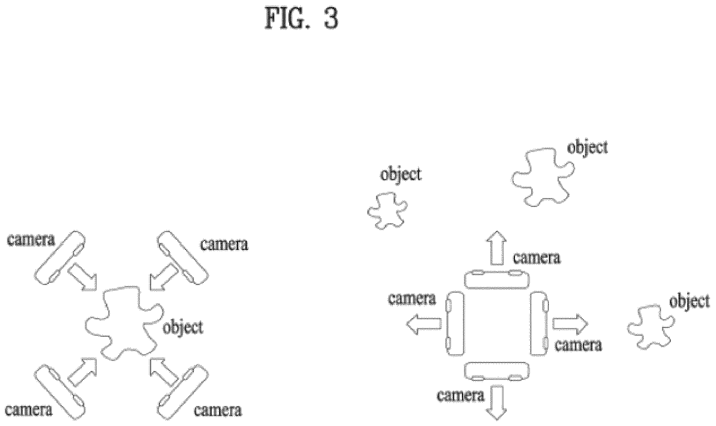

FIG. 3 illustrates an exemplary process of capturing a point cloud video according to embodiments.

FIG. 3 illustrates an exemplary point cloud video capture process of the point cloud content providing system described with reference to FIGS. 1 to 2.

Point cloud content includes a point cloud video (images and/or videos) representing an object and/or environment located in various 3D spaces (e.g., a 3D space representing a real environment, a 3D space representing a virtual environment, etc.). Accordingly, the point cloud content providing system according to the embodiments may capture a point cloud video using one or more cameras (e.g., an infrared camera capable of securing depth information, an RGB camera capable of extracting color information corresponding to the depth information, etc.), a projector (e.g., an infrared pattern projector to secure depth information), a LiDAR, or the like. The point cloud content providing system according to the embodiments may extract the shape of geometry composed of points in a 3D space from the depth information and extract the attributes of each point from the color information to secure point cloud data. An image and/or video according to the embodiments may be captured based on at least one of the inward-facing technique and the outward-facing technique.

The left part of FIG. 3 illustrates the inward-facing technique. The inward-facing technique refers to a technique of capturing images a central object with one or more cameras (or camera sensors) positioned around the central object. The inward-facing technique may be used to generate point cloud content providing a 360-degree image of a key object to the user (e.g., VR/AR content providing a 360-degree image of an object (e.g., a key object such as a character, player, object, or actor) to the user).

The right part of FIG. 3 illustrates the outward-facing technique. The outward-facing technique refers to a technique of capturing images an environment of a central object rather than the central object with one or more cameras (or camera sensors) positioned around the central object. The outward-facing technique may be used to generate point cloud content for providing a surrounding environment that appears from the user's point of view (e.g., content representing an external environment that may be provided to a user of a self-driving vehicle).

As shown in the figure, the point cloud content may be generated based on the capturing operation of one or more cameras. In this case, the coordinate system may differ among the cameras, and accordingly the point cloud content providing system may calibrate one or more cameras to set a global coordinate system before the capturing operation. In addition, the point cloud content providing system may generate point cloud content by synthesizing an arbitrary image and/or video with an image and/or video captured by the above-described capture technique. The point cloud content providing system may not perform the capturing operation described in FIG. 3 when it generates point cloud content representing a virtual space. The point cloud content providing system according to the embodiments may perform post-processing on the captured image and/or video. In other words, the point cloud content providing system may remove an unwanted area (e.g., a background), recognize a space to which the captured images and/or videos are connected, and, when there is a spatial hole, perform an operation of filling the spatial hole.

The point cloud content providing system may generate one piece of point cloud content by performing coordinate transformation on points of the point cloud video secured from each camera. The point cloud content providing system may perform coordinate transformation on the points based on the coordinates of the position of each camera. Accordingly, the point cloud content providing system may generate content representing one wide range, or may generate point cloud content having a high density of points.

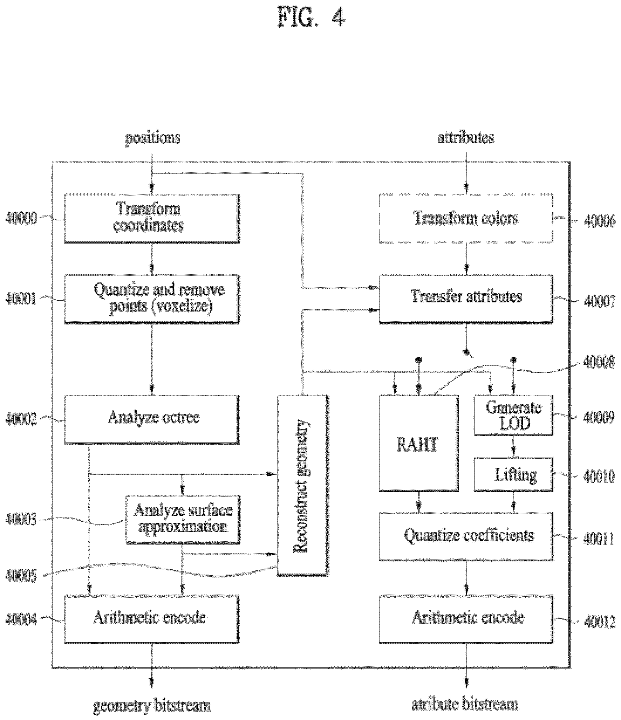

FIG. 4 illustrates an exemplary point cloud encoder according to embodiments.

FIG. 4 shows an example of the point cloud video encoder 10002 of FIG. 1. The point cloud encoder reconstructs and encodes point cloud data (e.g., positions and/or attributes of the points) to adjust the quality of the point cloud content (to, for example, lossless, lossy, or near-lossless) according to the network condition or applications. When the overall size of the point cloud content is large (e.g., point cloud content of 60 Gbps is given for 30 fps), the point cloud content providing system may fail to stream the content in real time. Accordingly, the point cloud content providing system may reconstruct the point cloud content based on the maximum target bitrate to provide the same in accordance with the network environment or the like.

As described with reference to FIGS. 1 and 2, the point cloud encoder may perform geometry encoding and attribute encoding. The geometry encoding is performed before the attribute encoding.

The point cloud encoder according to the embodiments includes a coordinate transformer (Transform coordinates) 40000, a quantizer (Quantize and remove points (voxelize)) 40001, an octree analyzer (Analyze octree) 40002, and a surface approximation analyzer (Analyze surface approximation) 40003, an arithmetic encoder (Arithmetic encode) 40004, a geometry reconstructor (Reconstruct geometry) 40005, a color transformer (Transform colors) 40006, an attribute transformer (Transform attributes) 40007, a RAHT transformer (RAHT) 40008, an LOD generator (Generate LOD) 40009, a lifting transformer (Lifting) 40010, a coefficient quantizer (Quantize coefficients) 40011, and/or an arithmetic encoder (Arithmetic encode) 40012.

The coordinate transformer 40000, the quantizer 40001, the octree analyzer 40002, the surface approximation analyzer 40003, the arithmetic encoder 40004, and the geometry reconstructor 40005 may perform geometry encoding. The geometry encoding according to the embodiments may include octree geometry coding, predictive tree geometry coding, direct coding, trisoup geometry encoding, and entropy encoding. The direct coding and trisoup geometry encoding are applied selectively or in combination. The geometry encoding is not limited to the above-described example.

As shown in the figure, the coordinate transformer 40000 according to the embodiments receives positions and transforms the same into coordinates. For example, the positions may be transformed into position information in a three-dimensional space (e.g., a three-dimensional space represented by an XYZ coordinate system). The position information in the three-dimensional space according to the embodiments may be referred to as geometry information.

The quantizer 40001 according to the embodiments quantizes the geometry. For example, the quantizer 40001 may quantize the points based on a minimum position value of all points (e.g., a minimum value on each of the X, Y, and Z axes). The quantizer 40001 performs a quantization operation of multiplying the difference between the minimum position value and the position value of each point by a preset quantization scale value and then finding the nearest integer value by rounding the value obtained through the multiplication. Thus, one or more points may have the same quantized position (or position value). The quantizer 40001 according to the embodiments performs voxelization based on the quantized positions to reconstruct quantized points. As in the case of a pixel, which is the minimum unit containing 2D image/video information, points of point cloud content (or 3D point cloud video) according to the embodiments may be included in one or more voxels. The term voxel, which is a compound of volume and pixel, refers to a 3D cubic space generated when a 3D space is divided into units (unit=1.0) based on the axes representing the 3D space (e.g., X-axis, Y-axis, and Z-axis). The quantizer 40001 may match groups of points in the 3D space with voxels. According to embodiments, one voxel may include only one point. According to embodiments, one voxel may include one or more points. In order to express one voxel as one point, the position of the center of a voxel may be set based on the positions of one or more points included in the voxel. In this case, attributes of all positions included in one voxel may be combined and assigned to the voxel.

The octree analyzer 40002 according to the embodiments performs octree geometry coding (or octree coding) to present voxels in an octree structure. The octree structure represents points matched with voxels, based on the octal tree structure.

The surface approximation analyzer 40003 according to the embodiments may analyze and approximate the octree. The octree analysis and approximation according to the embodiments is a process of analyzing a region containing a plurality of points to efficiently provide octree and voxelization.

The arithmetic encoder 40004 according to the embodiments performs entropy encoding on the octree and/or the approximated octree. For example, the encoding scheme includes arithmetic encoding. As a result of the encoding, a geometry bitstream is generated.

The color transformer 40006, the attribute transformer 40007, the RAHT transformer 40008, the LOD generator 40009, the lifting transformer 40010, the coefficient quantizer 40011, and/or the arithmetic encoder 40012 perform attribute encoding. As described above, one point may have one or more attributes. The attribute encoding according to the embodiments is equally applied to the attributes that one point has. However, when an attribute (e.g., color) includes one or more elements, attribute encoding is independently applied to each element. The attribute encoding according to the embodiments includes color transform coding, attribute transform coding, region adaptive hierarchical transform (RAHT) coding, interpolation-based hierarchical nearest-neighbor prediction (prediction transform) coding, and interpolation-based hierarchical nearest-neighbor prediction with an update/lifting step (lifting transform) coding. Depending on the point cloud content, the RAHT coding, the prediction transform coding and the lifting transform coding described above may be selectively used, or a combination of one or more of the coding schemes may be used. The attribute encoding according to the embodiments is not limited to the above-described example.

The color transformer 40006 according to the embodiments performs color transform coding of transforming color values (or textures) included in the attributes. For example, the color transformer 40006 may transform the format of color information (for example, from RGB to YCbCr). The operation of the color transformer 40006 according to embodiments may be optionally applied according to the color values included in the attributes.

The geometry reconstructor 40005 according to the embodiments reconstructs (decompresses) the octree and/or the approximated octree. The geometry reconstructor 40005 reconstructs the octree/voxels based on the result of analyzing the distribution of points. The reconstructed octree/voxels may be referred to as reconstructed geometry (restored geometry).

The attribute transformer 40007 according to the embodiments performs attribute transformation to transform the attributes based on the reconstructed geometry and/or the positions on which geometry encoding is not performed. As described above, since the attributes are dependent on the geometry, the attribute transformer 40007 may transform the attributes based on the reconstructed geometry information. For example, based on the position value of a point included in a voxel, the attribute transformer 40007 may transform the attribute of the point at the position. As described above, when the position of the center of a voxel is set based on the positions of one or more points included in the voxel, the attribute transformer 40007 transforms the attributes of the one or more points. When the trisoup geometry encoding is performed, the attribute transformer 40007 may transform the attributes based on the trisoup geometry encoding.

The attribute transformer 40007 may perform the attribute transformation by calculating the average of attributes or attribute values of neighboring points (e.g., color or reflectance of each point) within a specific position/radius from the position (or position value) of the center of each voxel. The attribute transformer 40007 may apply a weight according to the distance from the center to each point in calculating the average. Accordingly, each voxel has a position and a calculated attribute (or attribute value).

The attribute transformer 40007 may search for neighboring points existing within a specific position/radius from the position of the center of each voxel based on the K-D tree or the Morton code. The K-D tree is a binary search tree and supports a data structure capable of managing points based on the positions such that nearest neighbor search (NNS) can be performed quickly. The Morton code is generated by presenting coordinates (e.g., (x, y, z)) representing 3D positions of all points as bit values and mixing the bits. For example, when the coordinates representing the position of a point are (5, 9, 1), the bit values for the coordinates are (0101, 1001, 0001). Mixing the bit values according to the bit index in order of z, y, and x yields 010001000111. This value is expressed as a decimal number of 1095. That is, the Morton code value of the point having coordinates (5, 9, 1) is 1095. The attribute transformer 40007 may order the points based on the Morton code values and perform NNS through a depth-first traversal process. After the attribute transformation operation, the K-D tree or the Morton code is used when the NNS is needed in another transformation process for attribute coding.

As shown in the figure, the transformed attributes are input to the RAHT transformer 40008 and/or the LOD generator 40009.

The RAHT transformer 40008 according to the embodiments performs RAHT coding for predicting attribute information based on the reconstructed geometry information. For example, the RAHT transformer 40008 may predict attribute information of a node at a higher level in the octree based on the attribute information associated with a node at a lower level in the octree.

The LOD generator 40009 according to the embodiments generates a level of detail (LOD) to perform prediction transform coding. The LOD according to the embodiments is a degree of detail of point cloud content. As the LOD value decrease, it indicates that the detail of the point cloud content is degraded. As the LOD value increases, it indicates that the detail of the point cloud content is enhanced. Points may be classified by the LOD.

The lifting transformer 40010 according to the embodiments performs lifting transform coding of transforming the attributes a point cloud based on weights. As described above, lifting transform coding may be optionally applied.

The coefficient quantizer 40011 according to the embodiments quantizes the attribute-coded attributes based on coefficients.

The arithmetic encoder 40012 according to the embodiments encodes the quantized attributes based on arithmetic coding.

Although not shown in the figure, the elements of the point cloud encoder of FIG. 4 may be implemented by hardware including one or more processors or integrated circuits configured to communicate with one or more memories included in the point cloud providing device, software, firmware, or a combination thereof. The one or more processors may perform at least one of the operations and/or functions of the elements of the point cloud encoder of FIG. 4 described above. Additionally, the one or more processors may operate or execute a set of software programs and/or instructions for performing the operations and/or functions of the elements of the point cloud encoder of FIG. 4. The one or more memories according to the embodiments may include a high speed random access memory, or include a non-volatile memory (e.g., one or more magnetic disk storage devices, flash memory devices, or other non-volatile solid-state memory devices).

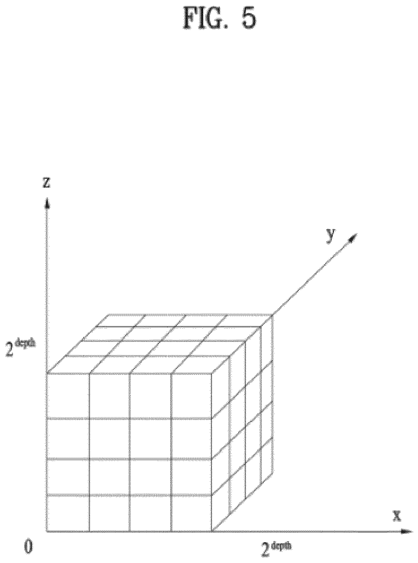

FIG. 5 shows an example of voxels according to embodiments.

FIG. 5 shows voxels positioned in a 3D space represented by a coordinate system composed of three axes, which are the X-axis, the Y-axis, and the Z-axis. As described with reference to FIG. 4, the point cloud encoder (e.g., the quantizer 40001) may perform voxelization. Voxel refers to a 3D cubic space generated when a 3D space is divided into units (unit=1.0) based on the axes representing the 3D space (e.g., X-axis, Y-axis, and Z-axis). FIG. 5 shows an example of voxels generated through an octree structure in which a cubical axis-aligned bounding box defined by two poles (0, 0, 0) and (2d, 2d, 2d) is recursively subdivided. One voxel includes at least one point. The spatial coordinates of a voxel may be estimated from the positional relationship with a voxel group. As described above, a voxel has an attribute (such as color or reflectance) like pixels of a 2D image/video. The details of the voxel are the same as those described with reference to FIG. 4, and therefore a description thereof is omitted.

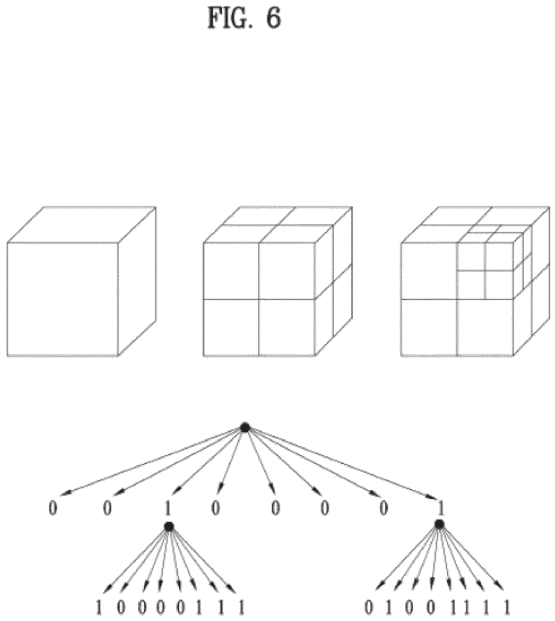

FIG. 6 shows an example of an octree and occupancy code according to embodiments.

As described with reference to FIGS. 1 to 4, the point cloud content providing system (point cloud video encoder 10002) or the point cloud encoder (e.g., the octree analyzer 40002) performs octree geometry coding (or octree coding) based on an octree structure to efficiently manage the region and/or position of the voxel.

The upper part of FIG. 6 shows an octree structure. The 3D space of the point cloud content according to the embodiments is represented by axes (e.g., X-axis, Y-axis, and Z-axis) of the coordinate system. The octree structure is created by recursive subdividing of a cubical axis-aligned bounding box defined by two poles (0, 0, 0) and $(2^d, 2^d, 2^d)$. Here, $2^d$ may be set to a value constituting the smallest bounding box surrounding all points of the point cloud content (or point cloud video). Here, d denotes the depth of the octree. The value of d is determined in the following equation. In the following equation, $(x^{int}_n, y^{int}_n, z^{int}_n)$ denotes the positions (or position values) of quantized points.

$$d = \mathrm{Ceil}\left(\mathrm{Log2}\left(\mathrm{Max}\left(x^{int}_n, y^{int}_n, z^{in}_n, n = 1, ..., N\right) + 1\right)\right)$$

As shown in the middle of the upper part of FIG. 6, the entire 3D space may be divided into eight spaces according to partition. Each divided space is represented by a cube with six faces. As shown in the upper right of FIG. 6, each of the eight spaces is divided again based on the axes of the coordinate system (e.g., X-axis, Y-axis, and Z-axis). Accordingly, each space is divided into eight smaller spaces. The divided smaller space is also represented by a cube with six faces. This partitioning scheme is applied until the leaf node of the octree becomes a voxel.

The lower part of FIG. 6 shows an octree occupancy code. The occupancy code of the octree is generated to indicate whether each of the eight divided spaces generated by dividing one space contains at least one point. Accordingly, a single occupancy code is represented by eight child nodes. Each child node represents the occupancy of a divided space, and the child node has a value in 1 bit. Accordingly, the occupancy code is represented as an 8-bit code. That is, when at least one point is contained in the space corresponding to a child node, the node is assigned a value of 1. When no point is contained in the space corresponding to the child node (the space is empty), the node is assigned a value of 0. Since the occupancy code shown in FIG. 6 is 00100001, it indicates that the spaces corresponding to the third child node and the eighth child node among the eight child nodes each contain at least one point. As shown in the figure, each of the third child node and the eighth child node has eight child nodes, and the child nodes are represented by an 8-bit occupancy code. The figure shows that the occupancy code of the third child node is 10000111, and the occupancy code of the eighth child node is 01001111. The point cloud encoder (e.g., the arithmetic encoder 40004) according to the embodiments may perform entropy encoding on the occupancy codes. In order to increase the compression efficiency, the point cloud encoder may perform intra/inter-coding on the occupancy codes. The reception device (e.g., the reception device 10004 or the point cloud video decoder 10006) according to the embodiments reconstructs the octree based on the occupancy codes.

The point cloud encoder (e.g., the point cloud encoder of FIG. 4 or the octree analyzer 40002) according to the embodiments may perform voxelization and octree coding to store the positions of points. However, points are not always evenly distributed in the 3D space, and accordingly there may be a specific region in which fewer points are present. Accordingly, it is inefficient to perform voxelization for the entire 3D space. For example, when a specific region contains few points, voxelization does not need to be performed in the specific region.

Accordingly, for the above-described specific region (or a node other than the leaf node of the octree), the point cloud encoder according to the embodiments may skip voxelization and perform direct coding to directly code the positions of points included in the specific region. The coordinates of a direct coding point according to the embodiments are referred to as direct coding mode (DCM). The point cloud encoder according to the embodiments may also perform trisoup geometry encoding, which is to reconstruct the positions of the points in the specific region (or node) based on voxels, based on a surface model. The trisoup geometry encoding is geometry encoding that represents an object as a series of triangular meshes. Accordingly, the point cloud decoder may generate a point cloud from the mesh surface. The direct coding and trisoup geometry encoding according to the embodiments may be selectively performed. In addition, the direct coding and trisoup geometry encoding according to the embodiments may be performed in combination with octree geometry coding (or octree coding).

To perform direct coding, the option to use the direct mode for applying direct coding should be activated. A node to which direct coding is to be applied is not a leaf node, and points less than a threshold should be present within a specific node. In addition, the total number of points to which direct coding is to be applied should not exceed a preset threshold. When the conditions above are satisfied, the point cloud encoder (or the arithmetic encoder 40004) according to the embodiments may perform entropy coding on the positions (or position values) of the points.

The point cloud encoder (e.g., the surface approximation analyzer 40003) according to the embodiments may determine a specific level of the octree (a level less than the depth d of the octree), and the surface model may be used staring with that level to perform trisoup geometry encoding to reconstruct the positions of points in the region of the node based on voxels (Trisoup mode). The point cloud encoder according to the embodiments may specify a level at which trisoup geometry encoding is to be applied. For example, when the specific level is equal to the depth of the octree, the point cloud encoder does not operate in the trisoup mode. In other words, the point cloud encoder according to the embodiments may operate in the trisoup mode only when the specified level is less than the value of depth of the octree. The 3D cube region of the nodes at the specified level according to the embodiments is called a block. One block may include one or more voxels. The block or voxel may correspond to a brick. Geometry is represented as a surface within each block. The surface according to embodiments may intersect with each edge of a block at most once.

One block has 12 edges, and accordingly there are at least 12 intersections in one block. Each intersection is called a vertex (or apex). A vertex present along an edge is detected when there is at least one occupied voxel adjacent to the edge among all blocks sharing the edge. The occupied voxel according to the embodiments refers to a voxel containing a point. The position of the vertex detected along the edge is the average position along the edge of all voxels adjacent to the edge among all blocks sharing the edge.

Once the vertex is detected, the point cloud encoder according to the embodiments may perform entropy encoding on the starting point (x, y, z) of the edge, the direction vector ($\Delta x$, $\Delta y$, $\Delta z$) of the edge, and the vertex position value (relative position value within the edge). When the trisoup geometry encoding is applied, the point cloud encoder according to the embodiments (e.g., the geometry reconstructor 40005) may generate restored geometry (reconstructed geometry) by performing the triangle reconstruction, up-sampling, and voxelization processes.

The vertices positioned at the edge of the block determine a surface that passes through the block. The surface according to the embodiments is a non-planar polygon. In the triangle reconstruction process, a surface represented by a triangle is reconstructed based on the starting point of the edge, the direction vector of the edge, and the position values of the vertices. The triangle reconstruction process is performed by: i) calculating the centroid value of each vertex, ii) subtracting the center value from each vertex value, and iii) estimating the sum of the squares of the values obtained by the subtraction.

$$\text{i)} \begin{bmatrix} \mu_x \\ \mu_y \\ \mu_z \end{bmatrix} = \frac{1}{n}\sum_{i=1}^{n} \begin{bmatrix} x_i \\ y_i \\ z_i \end{bmatrix}; \quad \text{ii)} \begin{bmatrix} \bar{x}_i \\ \bar{y}_i \\ \bar{z}_i \end{bmatrix} = \begin{bmatrix} x_i \\ y_i \\ z_i \end{bmatrix} - \begin{bmatrix} \mu_x \\ \mu_y \\ \mu_z \end{bmatrix}; \quad \text{iii)} \begin{bmatrix} \sigma_x^2 \\ \sigma_y^2 \\ \sigma_z^2 \end{bmatrix} = \sum_{i=1}^{n} \begin{bmatrix} \bar{x}_i^2 \\ \bar{y}_i^2 \\ \bar{z}_i^2 \end{bmatrix}$$

The minimum value of the sum is estimated, and the projection process is performed according to the axis with the minimum value. For example, when the element x is the minimum, each vertex is projected on the x-axis with respect to the center of the block, and projected on the (y, z) plane. When the values obtained through projection on the (y, z) plane are (ai, bi), the value of θ is estimated through atan2(bi, ai), and the vertices are ordered based on the value of θ. The table below shows a combination of vertices for creating a triangle according to the number of the vertices. The vertices are ordered from 1 to n. The table below shows that for four vertices, two triangles may be constructed according to combinations of vertices. The first triangle may consist of vertices 1, 2, and 3 among the ordered vertices, and the second triangle may consist of vertices 3, 4, and 1 among the ordered vertices.

Triangles formed from vertices ordered 1,...,n

| n | triangles |
|---|---|
| 3 | (1,2,3) |
| 4 | (1,2,3), (3,4,1) |
| 5 | (1,2,3), (3,4,5), (5,1,3) |
| 6 | (1,2,3), (3,4,5), (5,6,1), (1,3,5) |
| 7 | (1,2,3), (3,4,5), (5,6,7), (7,1,3), (3,5,7) |
| 8 | (1,2,3), (3,4,5), (5,6,7), (7,8,1), (1,3,5), (5,7,1) |
| 9 | (1,2,3), (3,4,5), (5,6,7), (7,8,9), (9,1,3), (3,5,7), (7,9,3) |
| 10 | (1,2,3), (3,4,5), (5,6,7), (7,8,9), (9,10,1), (1,3,5), (5,7,9), (9,1,5) |
| 11 | (1,2,3), (3,4,5), (5,6,7), (7,8,9), (9,10,11), (11,1,3), (3,5,7), (7,9,11), (11,3,7) |
| 12 | (1,2,3), (3,4,5), (5,6,7), (7,8,9), (9,10,11), (11,12,1), (1,3,5), (5,7,9), (9,11,1), (1,5,9) |

The upsampling process is performed to add points in the middle along the edge of the triangle and perform voxelization. The added points are generated based on the upsampling factor and the width of the block. The added points are called refined vertices. The point cloud encoder according to the embodiments may voxelize the refined vertices. In addition, the point cloud encoder may perform attribute encoding based on the voxelized positions (or position values).

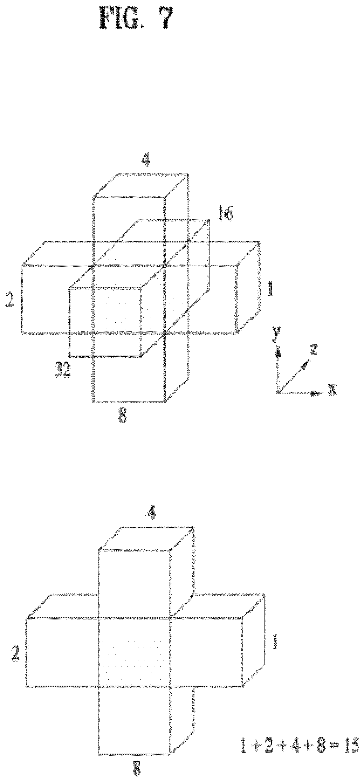

FIG. 7 shows an example of a neighbor node pattern according to embodiments.

In order to increase the compression efficiency of the point cloud video, the point cloud encoder according to the embodiments may perform entropy coding based on context adaptive arithmetic coding.

As described with reference to FIGS. 1 to 6, the point cloud content providing system or the point cloud encoder (e.g., the point cloud video encoder 10002, the point cloud encoder or arithmetic encoder 40004 of FIG. 4) may perform entropy coding on the occupancy code immediately. In addition, the point cloud content providing system or the point cloud encoder may perform entropy encoding (intra encoding) based on the occupancy code of the current node and the occupancy of neighboring nodes, or perform entropy encoding (inter encoding) based on the occupancy code of the previous frame. A frame according to embodiments represents a set of point cloud videos generated at the same time. The compression efficiency of intra encoding/inter encoding according to the embodiments may depend on the number of neighboring nodes that are referenced. When the bits increase, the operation becomes complicated, but the encoding may be biased to one side, which may increase the compression efficiency. For example, when a 3-bit context is given, coding needs to be performed using $2^3 = 8$ methods. The part divided for coding affects the complexity of implementation. Accordingly, it is necessary to meet an appropriate level of compression efficiency and complexity.

FIG. 7 illustrates a process of obtaining an occupancy pattern based on the occupancy of neighbor nodes. The point cloud encoder according to the embodiments determines occupancy of neighbor nodes of each node of the octree and obtains a value of a neighbor pattern. The neighbor node pattern is used to infer the occupancy pattern of the node. The upper part of FIG. 7 shows a cube corresponding to a node (a cube positioned in the middle) and six cubes (neighbor nodes) sharing at least one face with the cube. The nodes shown in the figure are nodes of the same depth. The numbers shown in the figure represent weights (1, 2, 4, 8, 16, and 32) associated with the six nodes, respectively. The weights are assigned sequentially according to the positions of neighboring nodes.

The lower part of FIG. 7 shows neighbor node pattern values. A neighbor node pattern value is the sum of values multiplied by the weight of an occupied neighbor node (a neighbor node having a point). Accordingly, the neighbor node pattern values are 0 to 63. When the neighbor node pattern value is 0, it indicates that there is no node having a point (no occupied node) among the neighbor nodes of the node. When the neighbor node pattern value is 63, it indicates that all neighbor nodes are occupied nodes. As shown in the figure, since neighbor nodes to which weights 1, 2, 4, and 8 are assigned are occupied nodes, the neighbor node pattern value is 15, the sum of 1, 2, 4, and 8. The point cloud encoder may perform coding according to the neighbor node pattern value (for example, when the neighbor node pattern value is 63, 64 kinds of coding may be performed). According to embodiments, the point cloud encoder may reduce coding complexity by changing a neighbor node pattern value (for example, based on a table by which 64 is changed to 10 or 6).

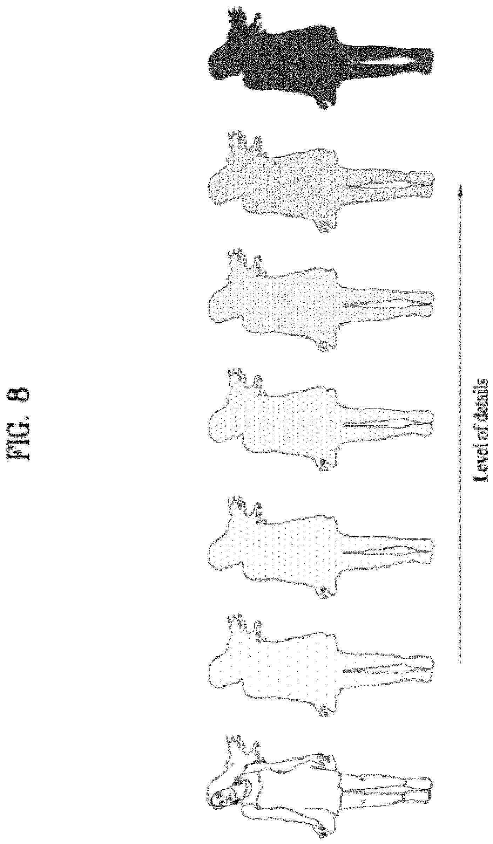

FIG. 8 illustrates an example of point configuration in each LOD according to embodiments.

As described with reference to FIGS. 1 to 7, encoded geometry is reconstructed (decompressed) before attribute encoding is performed. When direct coding is applied, the geometry reconstruction operation may include changing the placement of direct coded points (e.g., placing the direct coded points in front of the point cloud data). When trisoup geometry encoding is applied, the geometry reconstruction process is performed through triangle reconstruction, up-sampling, and voxelization. Since the attribute depends on the geometry, attribute encoding is performed based on the reconstructed geometry.

The point cloud encoder (e.g., the LOD generator 40009) may classify (or reorganize) points by LOD. The figure shows the point cloud content corresponding to LODs. The leftmost picture in the figure represents original point cloud content. The second picture from the left of the figure represents distribution of the points in the lowest LOD, and the rightmost picture in the figure represents distribution of the points in the highest LOD. That is, the points in the lowest LOD are sparsely distributed, and the points in the highest LOD are densely distributed. That is, as the LOD rises in the direction pointed by the arrow indicated at the bottom of the figure, the space (or distance) between points is narrowed.

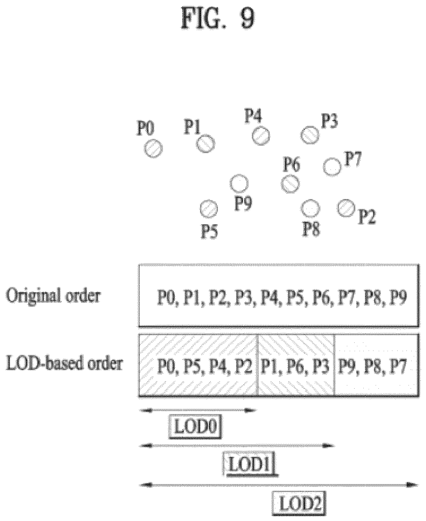

FIG. 9 illustrates an example of point configuration for each LOD according to embodiments.

As described with reference to FIGS. 1 to 8, the point cloud content providing system, or the point cloud encoder (e.g., the point cloud video encoder 10002, the point cloud encoder of FIG. 4, or the LOD generator 40009) may generates an LOD. The LOD is generated by reorganizing the points into a set of refinement levels according to a set LOD distance value (or a set of Euclidean distances). The LOD generation process is performed not only by the point cloud encoder, but also by the point cloud decoder.

The upper part of FIG. 9 shows examples (P0 to P9) of points of the point cloud content distributed in a 3D space. In FIG. 9, the original order represents the order of points P0 to P9 before LOD generation. In FIG. 9, the LOD based order represents the order of points according to the LOD generation. Points are reorganized by LOD. Also, a high LOD contains the points belonging to lower LODs. As shown in FIG. 9, LOD0 contains P0, P5, P4 and P2. LOD1 contains the points of LOD0, P1, P6 and P3. LOD2 contains the points of LOD0, the points of LOD1, P9, P8 and P7.

As described with reference to FIG. 4, the point cloud encoder according to the embodiments may perform prediction transform coding, lifting transform coding, and RAHT transform coding selectively or in combination.

The point cloud encoder according to the embodiments may generate a predictor for points to perform prediction transform coding for setting a predicted attribute (or predicted attribute value) of each point. That is, N predictors may be generated for N points. The predictor according to the embodiments may calculate a weight (=1/distance) based on the LOD value of each point, indexing information about neighboring points present within a set distance for each LOD, and a distance to the neighboring points.

The predicted attribute (or attribute value) according to the embodiments is set to the average of values obtained by multiplying the attributes (or attribute values) (e.g., color, reflectance, etc.) of neighbor points set in the predictor of each point by a weight (or weight value) calculated based on the distance to each neighbor point. The point cloud encoder according to the embodiments (e.g., the coefficient quantizer 40011) may quantize and inversely quantize the residuals (which may be called residual attributes, residual attribute values, or attribute prediction residuals, attribute residuals) obtained by subtracting a predicted attribute (attribute value) from the attribute (attribute value) of each point. The quantization process is configured as shown in the following table.

TABLE 1 Attribute prediction residuals quantization pseudo code

| int PCCQuantization(int value, int quantStep) { |
| --- |
| if( value >=0) { |
| return floor(value / quantStep + 1.0 / 3.0); |
| } else { |
| return -floor(-value / quantStep + 1.0 / 3.0); |
| } |

(continued)

```
}
```

TABLE 2 Attribute prediction residuals inverse quantization pseudo code

```
int PCCInverseQuantization(int value, int quantStep) {
if( quantStep ==0) {
return value;
} else {
return value * quantStep;
}
}
```

When the predictor of each point has neighbor points, the point cloud encoder (e.g., the arithmetic encoder 40012) according to the embodiments may perform entropy coding on the quantized and inversely quantized residual values as described above. When the predictor of each point has no neighbor point, the point cloud encoder according to the embodiments (e.g., the arithmetic encoder 40012) may perform entropy coding on the attributes of the corresponding point without performing the above-described operation. The point cloud encoder according to the embodiments (e.g., the lifting transformer 40010) may generate a predictor of each point, set the calculated LOD and register neighbor points in the predictor, and set weights according to the distances to neighbor points to perform lifting transform coding. The lifting transform coding according to the embodiments is similar to the above-described prediction transform coding, but differs therefrom in that weights are cumulatively applied to attribute values. The process of cumulatively applying weights to the attribute values according to embodiments is configured as follows.

1) Create an array Quantization Weight (QW) for storing the weight value of each point. The initial value of all elements of QW is 1.0. Multiply the QW values of the predictor indexes of the neighbor nodes registered in the predictor by the weight of the predictor of the current point, and add the values obtained by the multiplication.
2) Lift prediction process: Subtract the value obtained by multiplying the attribute value of the point by the weight from the existing attribute value to calculate a predicted attribute value.
3) Create temporary arrays called updateweight and update and initialize the temporary arrays to zero.
4) Cumulatively add the weights calculated by multiplying the weights calculated for all predictors by a weight stored in the QW corresponding to a predictor index to the updateweight array as indexes of neighbor nodes. Cumulatively add, to the update array, a value obtained by multiplying the attribute value of the index of a neighbor node by the calculated weight.
5) Lift update process: Divide the attribute values of the update array for all predictors by the weight value of the updateweight array of the predictor index, and add the existing attribute value to the values obtained by the division.
6) Calculate predicted attributes by multiplying the attribute values updated through the lift update process by the weight updated through the lift prediction process (stored in the QW) for all predictors. The point cloud encoder (e.g., coefficient quantizer 40011) according to the embodiments quantizes the predicted attribute values. In addition, the point cloud encoder (e.g., the arithmetic encoder 40012) performs entropy coding on the quantized attribute values.

The point cloud encoder (for example, the RAHT transformer 40008) according to the embodiments may perform RAHT transform coding in which attributes of nodes of a higher level are predicted using the attributes associated with nodes of a lower level in the octree. RAHT transform coding is an example of attribute intra coding through an octree backward scan. The point cloud encoder according to the embodiments scans the entire region from the voxel and repeats the merging process of merging the voxels into a larger block at each step until the root node is reached. The merging process according to the embodiments is performed only on the occupied nodes. The merging process is not performed on the empty node. The merging process is performed on an upper node immediately above the empty node.

The equation below represents a RAHT transformation matrix. In the equation, $g_{l_{x,y,z}}$ denotes the average attribute value of voxels at level l. $g_{l_{x,y,z}}$ may be calculated based on $g_{l+1\ 2x,y,z}$ and $g_{l+1\ 2x+1,y,z}$. The weights for $g_{l2x,y,z}$ and $g_{l2x+1,y,z}$ are w1 = $w_{l\ 2x,y,z}$ and w2 = $w_{l\ 2x+l,y,z}$.

$$\begin{bmatrix} g_{l-1\,x,y,z} \\ h_{l-1\,x,y,z} \end{bmatrix} = T_{w1\,w2} \begin{bmatrix} g_{l\,2x,y,z} \\ g_{l\,2x+1,y,z} \end{bmatrix}, \quad T_{w1\,w2} = \frac{1}{\sqrt{w1+w2}} \begin{bmatrix} \sqrt{w1} & \sqrt{w2} \\ -\sqrt{w2} & \sqrt{w1} \end{bmatrix}$$

Here, $g_{l-1\,x,y,z}$ is a low-pass value and is used in the merging process at the next higher level. $h_{l-1\,x,y,z}$ denotes high-pass coefficients. The high-pass coefficients at each step are quantized and subjected to entropy coding (e.g., encoding by the arithmetic encoder 400012). The weights are calculated as $w_{l-1\,x,y,z} = w_{l\,2x,y,z} + w_{l\,2x+1,y,z}$. The root node is created through the $g_{1\,0,0,0}$ and $g_{1\,0,0,1}$ as follows.

$$\begin{bmatrix} gDC \\ h_{0_{0,0,0}} \end{bmatrix} = T_{w1000\,w1001} \begin{bmatrix} g_{1\,0,0,0z} \\ g_{1_{0,0,1}} \end{bmatrix}$$

The value of gDC is also quantized and subjected to entropy coding like the high-pass coefficients.

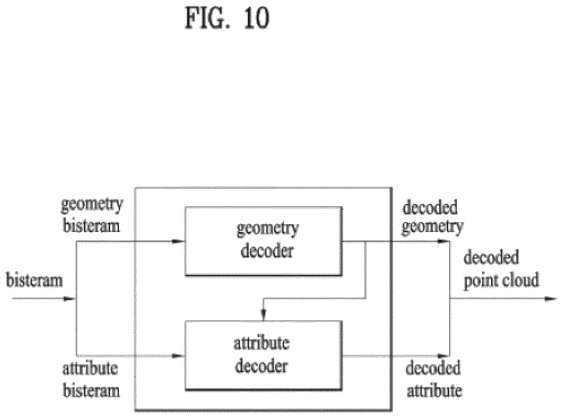

FIG. 10 illustrates a point cloud decoder according to embodiments.

The point cloud decoder illustrated in FIG. 10 is an example of the point cloud video decoder 10006 described in FIG. 1, and may perform the same or similar operations as the operations of the point cloud video decoder 10006 illustrated in FIG. 1. As shown in the figure, the point cloud decoder may receive a geometry bitstream and an attribute bitstream contained in one or more bitstreams. The point cloud decoder includes a geometry decoder and an attribute decoder. The geometry decoder performs geometry decoding on the geometry bitstream and outputs decoded geometry. The attribute decoder performs attribute decoding based on the decoded geometry and the attribute bitstream, and outputs decoded attributes. The decoded geometry and decoded attributes are used to reconstruct point cloud content (a decoded point cloud).

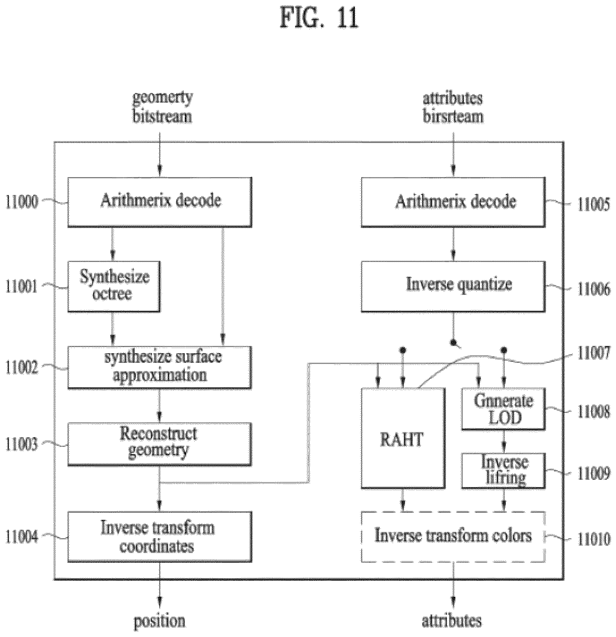

FIG. 11 illustrates a point cloud decoder according to embodiments.

The point cloud decoder illustrated in FIG. 11 is an example of the point cloud decoder illustrated in FIG. 10, and may perform a decoding operation, which is a reverse process to the encoding operation of the point cloud encoder illustrated in FIGS. 1 to 9.

As described with reference to FIGS. 1 and 10, the point cloud decoder may perform geometry decoding and attribute decoding. The geometry decoding is performed before the attribute decoding.

The point cloud decoder according to the embodiments includes an arithmetic decoder (Arithmetic decode) 11000, an octree synthesizer (Synthesize octree) 11001, a surface approximation synthesizer (Synthesize surface approximation) 11002, and a geometry reconstructor (Reconstruct geometry) 11003, a coordinate inverse transformer (Inverse transform coordinates) 11004, an arithmetic decoder (Arithmetic decode) 11005, an inverse quantizer (Inverse quantize) 11006, a RAHT transformer 11007, an LOD generator (Generate LOD) 11008, an inverse lifter (inverse lifting) 11009, and/or a color inverse transformer (Inverse transform colors) 11010.

The arithmetic decoder 11000, the octree synthesizer 11001, the surface approximation synthesizer 11002, and the geometry reconstructor 11003, and the coordinate inverse transformer 11004 may perform geometry decoding. The geometry decoding according to the embodiments may include direct decoding and trisoup geometry decoding. The direct coding and trisoup geometry decoding are selectively applied. The geometry decoding is not limited to the above-described example, and is performed as a reverse process to the geometry encoding described with reference to FIGS. 1 to 9.

The arithmetic decoder 11000 according to the embodiments decodes the received geometry bitstream based on the arithmetic coding. The operation of the arithmetic decoder 11000 corresponds to the reverse process to the arithmetic encoder 40004.

The octree synthesizer 11001 according to the embodiments may generate an octree by acquiring an occupancy code from the decoded geometry bitstream (or information on the geometry secured as a result of decoding). The occupancy code is configured as described in detail with reference to FIGS. 1 to 9.

When the trisoup geometry encoding is applied, the surface approximation synthesizer 11002 according to the embodiments may synthesize a surface based on the decoded geometry and/or the generated octree.

The geometry reconstructor 11003 according to the embodiments may regenerate geometry based on the surface and/or the decoded geometry. As described with reference to FIGS. 1 to 9, direct coding and trisoup geometry encoding are selectively applied. Accordingly, the geometry reconstructor 11003 directly imports and adds position information about the points to which direct coding is applied. When the trisoup geometry encoding is applied, the geometry reconstructor 11003 may reconstruct the geometry by performing the reconstruction operations of the geometry reconstructor 40005, for example, triangle reconstruction, up-sampling, and voxelization. Details are the same as those described with reference to FIG. 6, and thus description thereof is omitted. The reconstructed geometry may include a point cloud picture or frame that does not contain attributes.

The coordinate inverse transformer 11004 according to the embodiments may acquire positions of the points by transforming the coordinates based on the reconstructed geometry.

The arithmetic decoder 11005, the inverse quantizer 11006, the RAHT transformer 11007, the LOD generator 11008, the inverse lifter 11009, and/or the color inverse transformer 11010 may perform the attribute decoding described with reference to FIG. 10. The attribute decoding according to the embodiments includes region adaptive hierarchical transform (RAHT) decoding, interpolation-based hierarchical nearest-neighbor prediction (prediction transform) decoding, and interpolation-based hierarchical nearest-neighbor prediction with an update/lifting step (lifting transform) decoding. The three decoding schemes described above may be used selectively, or a combination of one or more decoding schemes may be used. The attribute decoding according to the embodiments is not limited to the above-described example.

The arithmetic decoder 11005 according to the embodiments decodes the attribute bitstream by arithmetic coding.

The inverse quantizer 11006 according to the embodiments inversely quantizes the information about the decoded attribute bitstream or attributes secured as a result of the decoding, and outputs the inversely quantized attributes (or attribute values). The inverse quantization may be selectively applied based on the attribute encoding of the point cloud encoder.

According to embodiments, the RAHT transformer 11007, the LOD generator 11008, and/or the inverse lifter 11009 may process the reconstructed geometry and the inversely quantized attributes. As described above, the RAHT transformer 11007, the LOD generator 11008, and/or the inverse lifter 11009 may selectively perform a decoding operation corresponding to the encoding of the point cloud encoder.

The color inverse transformer 11010 according to the embodiments performs inverse transform coding to inversely transform a color value (or texture) included in the decoded attributes. The operation of the color inverse transformer 11010 may be selectively performed based on the operation of the color transformer 40006 of the point cloud encoder.

Although not shown in the figure, the elements of the point cloud decoder of FIG. 11 may be implemented by hardware including one or more processors or integrated circuits configured to communicate with one or more memories included in the point cloud providing device, software, firmware, or a combination thereof. The one or more processors may perform at least one or more of the operations and/or functions of the elements of the point cloud decoder of FIG. 11 described above. Additionally, the one or more processors may operate or execute a set of software programs and/or instructions for performing the operations and/or functions of the elements of the point cloud decoder of FIG. 11.

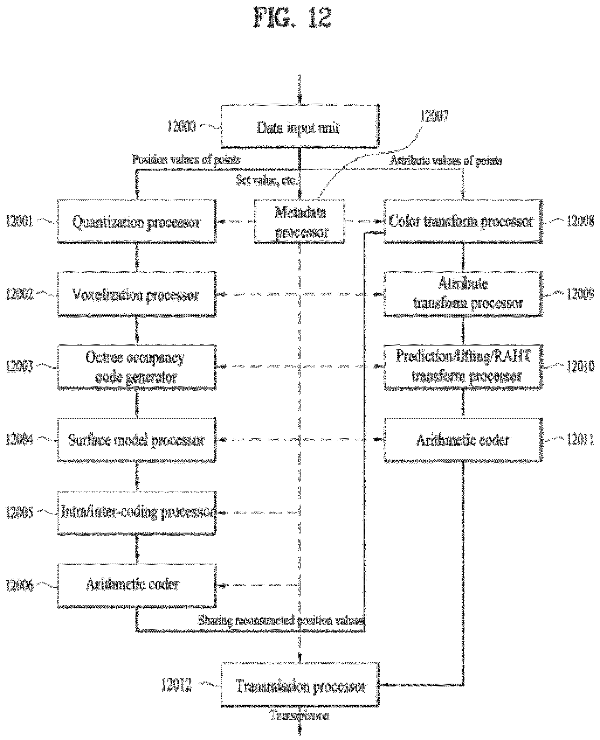

FIG. 12 illustrates a transmission device according to embodiments.

The transmission device shown in FIG. 12 is an example of the transmission device 10000 of FIG. 1 (or the point cloud encoder of FIG. 4). The transmission device illustrated in FIG. 12 may perform one or more of the operations and methods the same as or similar to those of the point cloud encoder described with reference to FIGS. 1 to 9. The transmission device according to the embodiments may include a data input unit 12000, a quantization processor 12001, a voxelization processor 12002, an octree occupancy code generator 12003, a surface model processor 12004, an intra/inter-coding processor 12005, an arithmetic coder 12006, a metadata processor 12007, a color transform processor 12008, an attribute transform processor 12009, a prediction/lifting/RAHT transform processor 12010, an arithmetic coder 12011 and/or a transmission processor 12012.

The data input unit 12000 according to the embodiments receives or acquires point cloud data. The data input unit 12000 may perform an operation and/or acquisition method the same as or similar to the operation and/or acquisition method of the point cloud video acquirer 10001 (or the acquisition process 20000 described with reference to FIG. 2).

The data input unit 12000, the quantization processor 12001, the voxelization processor 12002, the octree occupancy code generator 12003, the surface model processor 12004, the intra/inter-coding processor 12005, and the arithmetic coder 12006 perform geometry encoding. The geometry encoding according to the embodiments is the same as or similar to the geometry encoding described with reference to FIGS. 1 to 9, and thus a detailed description thereof is omitted.

The quantization processor 12001 according to the embodiments quantizes geometry (e.g., position values of points). The operation and/or quantization of the quantization processor 12001 is the same as or similar to the operation and/or quantization of the quantizer 40001 described with reference to FIG. 4. Details are the same as those described with reference to FIGS. 1 to 9.

The voxelization processor 12002 according to the embodiments voxelizes the quantized position values of the points. The voxelization processor 12002 may perform an operation and/or process the same or similar to the operation and/or the voxelization process of the quantizer 40001 described with reference to FIG. 4. Details are the same as those described with reference to FIGS. 1 to 9.

The octree occupancy code generator 12003 according to the embodiments performs octree coding on the voxelized positions of the points based on an octree structure. The octree occupancy code generator 12003 may generate an occupancy code. The octree occupancy code generator 12003 may perform an operation and/or method the same as or similar to the operation and/or method of the point cloud encoder (or the octree analyzer 40002) described with reference to FIGS. 4 and 6. Details are the same as those described with reference to FIGS. 1 to 9.

The surface model processor 12004 according to the embodiments may perform trisoup geometry encoding based on a surface model to reconstruct the positions of points in a specific region (or node) on a voxel basis. The surface model processor 12004 may perform an operation and/or method the same as or similar to the operation and/or method of the point cloud encoder (e.g., the surface approximation analyzer 40003) described with reference to FIG. 4. Details are the same as those described with reference to FIGS. 1 to 9.

The intra/inter-coding processor 12005 according to the embodiments may perform intra/inter-coding on point cloud data. The intra/inter-coding processor 12005 may perform coding the same as or similar to the intra/inter-coding described with reference to FIG. 7. Details are the same as those described with reference to FIG. 7. According to embodiments, the intra/inter-coding processor 12005 may be included in the arithmetic coder 12006.

The arithmetic coder 12006 according to the embodiments performs entropy encoding on an octree of the point cloud data and/or an approximated octree. For example, the encoding scheme includes arithmetic encoding. The arithmetic coder 12006 performs an operation and/or method the same as or similar to the operation and/or method of the arithmetic encoder 40004.

The metadata processor 12007 according to the embodiments processes metadata about the point cloud data, for example, a set value, and provides the same to a necessary processing process such as geometry encoding and/or attribute encoding. Also, the metadata processor 12007 according to the embodiments may generate and/or process signaling information related to the geometry encoding and/or the attribute encoding. The signaling information according to the embodiments may be encoded separately from the geometry encoding and/or the attribute encoding. The signaling information according to the embodiments may be interleaved.

The color transform processor 12008, the attribute transform processor 12009, the prediction/lifting/RAHT transform processor 12010, and the arithmetic coder 12011 perform the attribute encoding. The attribute encoding according to the embodiments is the same as or similar to the attribute encoding described with reference to FIGS. 1 to 9, and thus a detailed description thereof is omitted.

The color transform processor 12008 according to the embodiments performs color transform coding to transform color values included in attributes. The color transform processor 12008 may perform color transform coding based on the reconstructed geometry. The reconstructed geometry is the same as described with reference to FIGS. 1 to 9. Also, it performs an operation and/or method the same as or similar to the operation and/or method of the color transformer 40006 described with reference to FIG. 4 is performed. A detailed description thereof is omitted.

The attribute transform processor 12009 according to the embodiments performs attribute transformation to transform the attributes based on the reconstructed geometry and/or the positions on which geometry encoding is not performed. The attribute transform processor 12009 performs an operation and/or method the same as or similar to the operation and/or method of the attribute transformer 40007 described with reference to FIG. 4. A detailed description thereof is omitted. The prediction/lifting/RAHT transform processor 12010 according to the embodiments may code the transformed attributes by any one or a combination of RAHT coding, prediction transform coding, and lifting transform coding. The prediction/lifting/RAHT transform processor 12010 performs at least one of the operations the same as or similar to the operations of the RAHT transformer 40008, the LOD generator 40009, and the lifting transformer 40010 described with reference to FIG. 4. In addition, the prediction transform coding, the lifting transform coding, and the RAHT transform coding are the same as those described with reference to FIGS. 1 to 9, and thus a detailed description thereof is omitted.

The arithmetic coder 12011 according to the embodiments may encode the coded attributes based on the arithmetic coding. The arithmetic coder 12011 performs an operation and/or method the same as or similar to the operation and/or method of the arithmetic encoder 400012.

The transmission processor 12012 according to the embodiments may transmit each bitstream containing encoded geometry and/or encoded attributes and metadata information, or transmit one bitstream configured with the encoded geometry and/or the encoded attributes and the metadata information. When the encoded geometry and/or the encoded attributes and the metadata information according to the embodiments are configured into one bitstream, the bitstream may include one or more sub-bitstreams. The bitstream according to the embodiments may contain signaling information including a sequence parameter set (SPS) for signaling of a sequence level, a geometry parameter set (GPS) for signaling of geometry information coding, an attribute parameter set (APS) for signaling of attribute information coding, and a tile parameter set (TPS) for signaling of a tile level, and slice data. The slice data may include information about one or more slices. One slice according to embodiments may include one geometry bitstream Geom0$^0$ and one or more attribute bitstreams Attr0$^0$ and Attr1$^0$.

A slice refers to a series of syntax elements representing the entirety or part of a coded point cloud frame.

The TPS according to the embodiments may include information about each tile (e.g., coordinate information and height/size information about a bounding box) for one or more tiles. The geometry bitstream may contain a header and a payload. The header of the geometry bitstream according to the embodiments may contain a parameter set identifier (geom_parameter_set_id), a tile identifier (geom_tile_id) and a slice identifier (geom_slice_id) included in the GPS, and information about the data contained in the payload. As described above, the metadata processor 12007 according to the embodiments may generate and/or process the signaling information and transmit the same to the transmission processor 12012. According to embodiments, the elements to perform geometry encoding and the elements to perform attribute encoding may share data/information with each other as indicated by dotted lines. The transmission processor 12012 according to the embodiments may perform an operation and/or transmission method the same as or similar to the operation and/or transmission method of the transmitter 10003. Details are the same as those described with reference to FIGS. 1 and 2, and thus a description thereof is omitted.

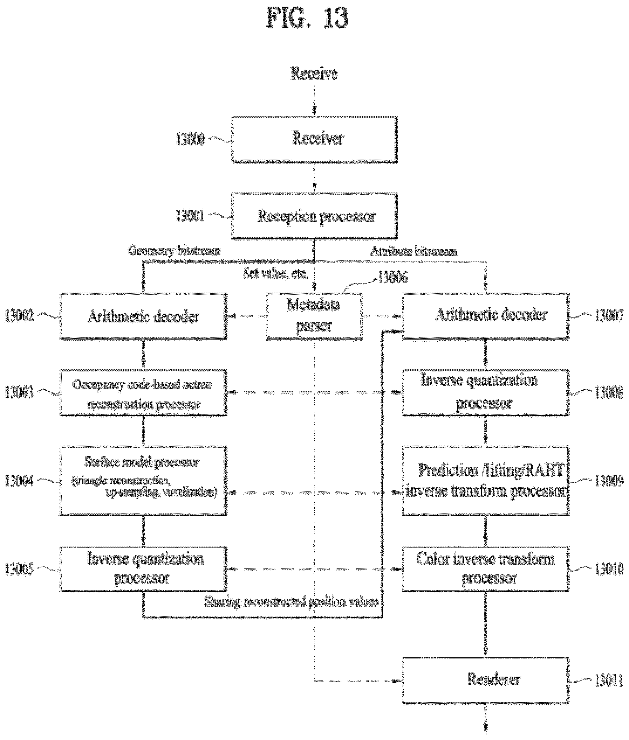

FIG. 13 illustrates a reception device according to embodiments.

The reception device illustrated in FIG. 13 is an example of the reception device 10004 of FIG. 1 (or the point cloud decoder of FIGS. 10 and 11). The reception device illustrated in FIG. 13 may perform one or more of the operations and methods the same as or similar to those of the point cloud decoder described with reference to FIGS. 1 to 11.

The reception device according to the embodiment may include a receiver 13000, a reception processor 13001, an arithmetic decoder 13002, an occupancy code-based octree reconstruction processor 13003, a surface model processor (triangle reconstruction, up-sampling, voxelization) 13004, an inverse quantization processor 13005, a metadata parser 13006, an arithmetic decoder 13007, an inverse quantization processor 13008, a prediction/lifting/RAHT inverse transform processor 13009, a color inverse transform processor 13010, and/or a renderer 13011. Each element for decoding according to the embodiments may perform a reverse process to the operation of a corresponding element for encoding according to the embodiments.

The receiver 13000 according to the embodiments receives point cloud data. The receiver 13000 may perform an operation and/or reception method the same as or similar to the operation and/or reception method of the receiver 10005 of FIG. 1. The detailed description thereof is omitted.

The reception processor 13001 according to the embodiments may acquire a geometry bitstream and/or an attribute bitstream from the received data. The reception processor 13001 may be included in the receiver 13000.

The arithmetic decoder 13002, the occupancy code-based octree reconstruction processor 13003, the surface model processor 13004, and the inverse quantization processor 1305 may perform geometry decoding. The geometry decoding according to embodiments is the same as or similar to the geometry decoding described with reference to FIGS. 1 to 10, and thus a detailed description thereof is omitted.

The arithmetic decoder 13002 according to the embodiments may decode the geometry bitstream based on arithmetic coding. The arithmetic decoder 13002 performs an operation and/or coding the same as or similar to the operation and/or coding of the arithmetic decoder 11000.

The occupancy code-based octree reconstruction processor 13003 according to the embodiments may reconstruct an octree by acquiring an occupancy code from the decoded geometry bitstream (or information about the geometry secured as a result of decoding). The occupancy code-based octree reconstruction processor 13003 performs an operation and/or method the same as or similar to the operation and/or octree generation method of the octree synthesizer 11001. When the trisoup geometry encoding is applied, the surface model processor 13004 according to the embodiments may perform trisoup geometry decoding and related geometry reconstruction (e.g., triangle reconstruction, up-sampling, voxelization) based on the surface model method. The surface model processor 13004 performs an operation the same as or similar to that of the surface approximation synthesizer 11002 and/or the geometry reconstructor 11003.

The inverse quantization processor 13005 according to the embodiments may inversely quantize the decoded geometry.

The metadata parser 13006 according to the embodiments may parse metadata contained in the received point cloud data, for example, a set value. The metadata parser 13006 may pass the metadata to geometry decoding and/or attribute decoding. The metadata is the same as that described with reference to FIG. 12, and thus a detailed description thereof is omitted.

The arithmetic decoder 13007, the inverse quantization processor 13008, the prediction/lifting/RAHT inverse transform processor 13009 and the color inverse transform processor 13010 perform attribute decoding. The attribute decoding is the same as or similar to the attribute decoding described with reference to FIGS. 1 to 10, and thus a detailed description thereof is omitted.

The arithmetic decoder 13007 according to the embodiments may decode the attribute bitstream by arithmetic coding. The arithmetic decoder 13007 may decode the attribute bitstream based on the reconstructed geometry. The arithmetic decoder 13007 performs an operation and/or coding the same as or similar to the operation and/or coding of the arithmetic decoder 11005.

The inverse quantization processor 13008 according to the embodiments may inversely quantize the decoded attribute bitstream. The inverse quantization processor 13008 performs an operation and/or method the same as or similar to the operation and/or inverse quantization method of the inverse quantizer 11006.

The prediction/lifting/RAHT inverse transform processor 13009 according to the embodiments may process the reconstructed geometry and the inversely quantized attributes. The prediction/lifting/RAHT inverse transform processor 13009 performs one or more of operations and/or decoding the same as or similar to the operations and/or decoding of the RAHT transformer 11007, the LOD generator 11008, and/or the inverse lifter 11009. The color inverse transform processor 13010 according to the embodiments performs inverse transform coding to inversely transform color values (or textures) included in the decoded attributes. The color inverse transform processor 13010 performs an operation and/or inverse transform coding the same as or similar to the operation and/or inverse transform coding of the color inverse transformer 11010. The renderer 13011 according to the embodiments may render the point cloud data.

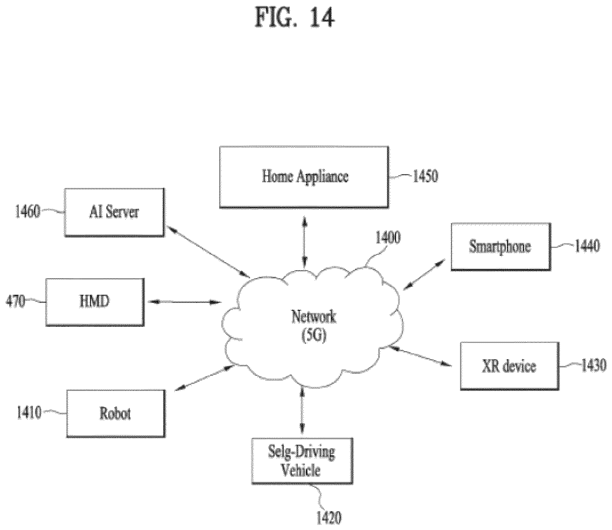

FIG. 14 illustrates an exemplary structure operable in connection with point cloud data transmission/reception methods/devices according to embodiments.

The structure of FIG. 14 represents a configuration in which at least one of a server 1460, a robot 1410, a self-driving vehicle 1420, an XR device 1430, a smartphone 1440, a home appliance 1450, and/or a head-mount display (HMD) 1470 is connected to the cloud network 1400. The robot 1410, the self-driving vehicle 1420, the XR device 1430, the smartphone 1440, or the home appliance 1450 is called a device. Further, the XR device 1430 may correspond to a point cloud data (PCC) device according to embodiments or may be operatively connected to the PCC device.

The cloud network 1400 may represent a network that constitutes part of the cloud computing infrastructure or is present in the cloud computing infrastructure. Here, the cloud network 1400 may be configured using a 3G network, 4G or Long Term Evolution (LTE) network, or a 5G network.

The server 1460 may be connected to at least one of the robot 1410, the self-driving vehicle 1420, the XR device 1430, the smartphone 1440, the home appliance 1450, and/or the HMD 1470 over the cloud network 1400 and may assist in at least a part of the processing of the connected devices 1410 to 1470.

The HMD 1470 represents one of the implementation types of the XR device and/or the PCC device according to the embodiments. The HMD type device according to the embodiments includes a communication unit, a control unit, a memory, an I/O unit, a sensor unit, and a power supply unit.

Hereinafter, various embodiments of the devices 1410 to 1450 to which the above-described technology is applied will be described. The devices 1410 to 1450 illustrated in FIG. 14 may be operatively connected/coupled to a point cloud data transmission device and reception according to the above-described embodiments.

<PCC+XR>

The XR/PCC device 1430 may employ PCC technology and/or XR (AR+VR) technology, and may be implemented as an HMD, a head-up display (HUD) provided in a vehicle, a television, a mobile phone, a smartphone, a computer, a wearable device, a home appliance, a digital signage, a vehicle, a stationary robot, or a mobile robot.

The XR/PCC device 1430 may analyze 3D point cloud data or image data acquired through various sensors or from an external device and generate position data and attribute data about 3D points. Thereby, the XR/PCC device 1430 may acquire information about the surrounding space or a real object, and render and output an XR object. For example, the XR/PCC device 1430 may match an XR object including auxiliary information about a recognized object with the recognized object and output the matched XR object.

<PCC+XR+Mobile phone>

The XR/PCC device 1430 may be implemented as a mobile phone 1440 by applying PCC technology.

The mobile phone 1440 may decode and display point cloud content based on the PCC technology.

<PCC+Self-driving+XR>

The self-driving vehicle 1420 may be implemented as a mobile robot, a vehicle, an unmanned aerial vehicle, or the like by applying the PCC technology and the XR technology.

The self-driving vehicle 1420 to which the XR/PCC technology is applied may represent a self-driving vehicle provided with means for providing an XR image, or a self-driving vehicle that is a target of control/interaction in the XR image. In particular, the self-driving vehicle 1420 which is a target of control/interaction in the XR image may be distinguished from the XR device 1430 and may be operatively connected thereto.

The self-driving vehicle 1420 having means for providing an XR/PCC image may acquire sensor information from sensors including a camera, and output the generated XR/PCC image based on the acquired sensor information. For example, the self-driving vehicle 1420 may have an HUD and output an XR/PCC image thereto, thereby providing an occupant with an XR/PCC object corresponding to a real object or an object present on the screen.

When the XR/PCC object is output to the HUD, at least a part of the XR/PCC object may be output to overlap the real object to which the occupant's eyes are directed. On the other hand, when the XR/PCC object is output on a display provided inside the self-driving vehicle, at least a part of the XR/PCC object may be output to overlap an object on the screen. For example, the self-driving vehicle 1220 may output XR/PCC objects corresponding to objects such as a road, another vehicle, a traffic light, a traffic sign, a two-wheeled vehicle, a pedestrian, and a building.

The virtual reality (VR) technology, the augmented reality (AR) technology, the mixed reality (MR) technology and/or the point cloud compression (PCC) technology according to the embodiments are applicable to various devices.

In other words, the VR technology is a display technology that provides only CG images of real-world objects, backgrounds, and the like. On the other hand, the AR technology refers to a technology that shows a virtually created CG image on the image of a real object. The MR technology is similar to the AR technology described above in that virtual objects to be shown are mixed and combined with the real world. However, the MR technology differs from the AR technology in that the AR technology makes a clear distinction between a real object and a virtual object created as a CG image and uses virtual objects as complementary objects for real objects, whereas the MR technology treats virtual objects as objects having equivalent characteristics as real objects. More specifically, an example of MR technology applications is a hologram service.

Recently, the VR, AR, and MR technologies are sometimes referred to as extended reality (XR) technology rather than being clearly distinguished from each other. Accordingly, embodiments of the present disclosure are applicable to any of the VR, AR, MR, and XR technologies. The encoding/decoding based on PCC, V-PCC, and G-PCC techniques is applicable to such technologies.

The PCC method/device according to the embodiments may be applied to a vehicle that provides a self-driving service.

A vehicle that provides the self-driving service is connected to a PCC device for wired/wireless communication.

When the point cloud data (PCC) transmission/reception device according to the embodiments is connected to a vehicle for wired/wireless communication, the device may receive/process content data related to an AR/VR/PCC service, which may be provided together with the self-driving service, and transmit the same to the vehicle. In the case where the PCC transmission/reception device is mounted on a vehicle, the PCC transmission/reception device may receive/process content data related to the AR/VR/PCC service according to a user input signal input through a user interface device and provide the same to the user. The vehicle or the user interface device according to the embodiments may receive a user input signal. The user input signal according to the embodiments may include a signal indicating the self-driving service.

As described with reference to FIGS. 1 to 14, point cloud data is composed of a set of points, and each of the points may have geometry data (geometry information) and attribute data (attribute information). The geometry data is a three-dimensional position (e.g., coordinate values on x, y, and z axes) of each point. That is, the position of each point is represented by parameters of a coordinate system representing a three-dimensional space (e.g., parameters x, y, and z for three axes representing the space, such as the X-axis, Y-axis, and Z-axis). In addition, the attribute information may represent a color (RGB, YUV, etc.), reflectance, normal vectors transparency, and the like of a point. The attribute information may be expressed as a scalar or a vector.

According to embodiments, the point cloud data may be classified into category 1 of static point cloud data, category 2 of dynamic point cloud data, and category 3, which is acquired through dynamic movement, according to the type and acquisition method of the point cloud data. Category 1 is composed of a point cloud of a single frame with a high density of points for an object or space. The data of category 3 may be divided into frame-based data having multiple frames acquired through movement and fused data of a single frame obtained by matching a point cloud acquired through a LiDAR sensor and a color image acquired as a 2D image for a large space.

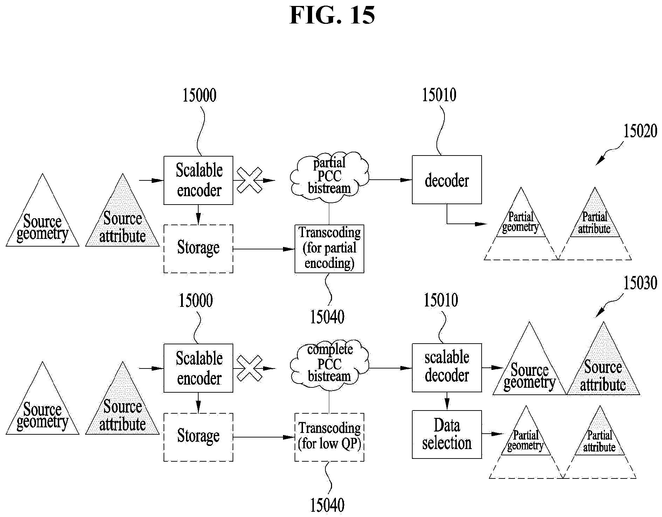

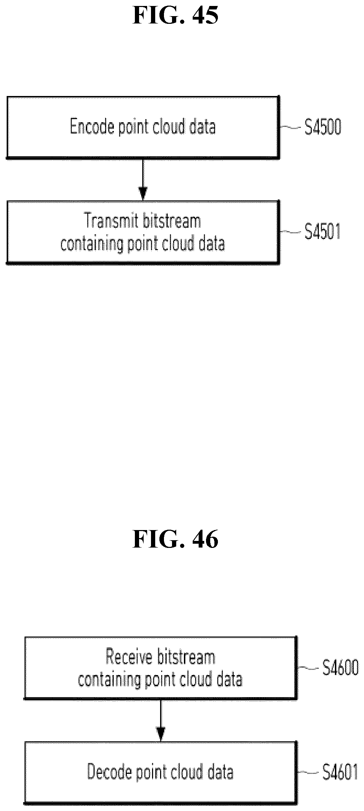

The point cloud data transmission method/device according to embodiments is construed as a term referring to the transmission device 10000, point cloud video encoder 10002, and transmitter 10003 of FIG. 1, the acquisition 20000/encoding 20001/transmission 20002 of FIG. 2, the encoder of FIG. 4, the transmission device of FIG. 12, the device of FIG. 14, the encoders of FIGS. 15 and 38 to 44, the transmission method of FIG. 45, and the like.

The point cloud data reception method/device according to embodiments is construed as a term referring to the reception device 10004, receiver 10005, and point cloud video decoder 10006 of FIG. 1, the transmission 20002/decoding 20003/rendering 20004 of FIG. 2, the decoder of FIGS. 10 and 11, the reception device of FIG. 13, the decoders of FIGS. 15 and 38 to 44, the reception method of FIG. 46, and the like.

The method/device for transmitting/receiving point cloud data according to the embodiments may be referred to as a method/device according to the embodiments.

According to embodiments, geometry data, geometry information, position information, and the like constituting the point cloud data are construed as having the same meaning. Attribute data, attribute information, and the like constituting point cloud data are construed as having the same meaning.

The method/device according to embodiments may perform a method of partitioning and transmitting/receiving point cloud data for local access (slice segmentation for spatial random access).

Embodiments include a method for efficiently supporting selective decoding of a part of data due to a receiver performance or a transmission speed in transmitting and receiving point cloud data, when necessary. Embodiments include a method for selecting necessary information or removing unnecessary information in a bitstream unit by dividing geometry and attribute data delivered in data units into semantic units such as geometry octree and Level of Detail (LoD).

The transmission/reception device//device according to the embodiments includes a method of configuring a data structure composed of a point cloud. More specifically, embodiments disclose a packing and signaling method for effectively transferring PCC data configured based on a layer, and include a method of applying the packing and signaling method to a scalable PCC based service. In particular, embodiments include a method of configuring a slice segment and transmitting and receiving the same to be more suitable for a scalable PCC service when a direct compression mode is used for position compression. Also, embodiments may provide a compression structure for efficiently storing and transmitting mass point cloud data having a wide distribution and high point density.

Referring to FIGS. 4 and 11, point cloud data is composed of a position (e.g., XYZ coordinates) and attributes (e.g., color, reflectance, intensity, grayscale, opacity, etc.) of each datum. In point cloud compression (PCC), octree-based compression is performed to efficiently compress distribution characteristics of uneven distribution in three-dimensional space, and attribute information is compressed based thereon. FIGS. 4 and 11 are flowcharts for the transmitting and receiving ends of the PCC. Operations according to embodiments may be processed by each component of the transmitting and receiving ends of the PCC.

FIG. 15 illustrates a process of encoding, transmission, and decoding point cloud data according to embodiments.

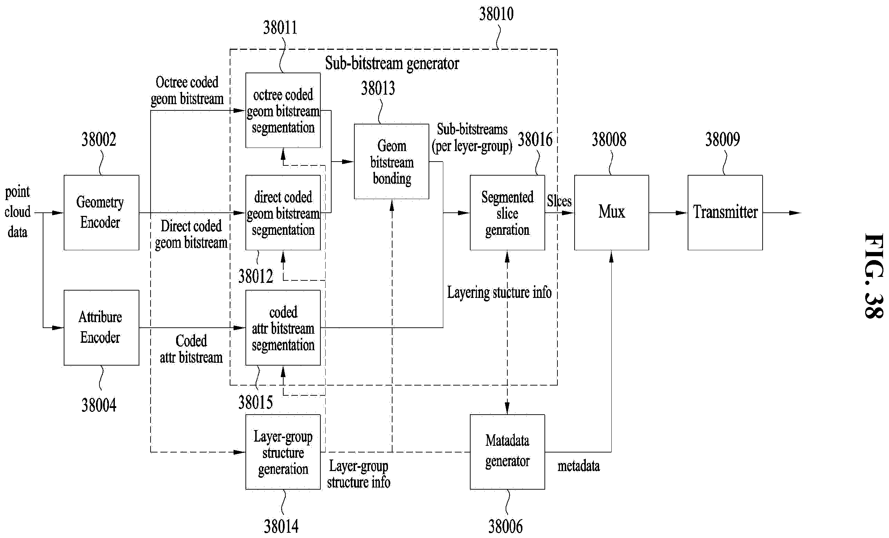

The device/method for transmitting/receiving point cloud data according to the embodiments may correspond to the transmission device 10000 and reception device 10004 of FIG. 1, the point cloud video encoder 10002, the transmitter 10003, the point cloud video decoder 10006, the receiver 10005, the acquisition 20000/encoding 20001/transmission 20002 of FIG. 2, the decoding 20003 of FIG. 2, the rendering 20004, the encoder of FIG. 4, the reception device of FIG. 11, the transmission device of FIG. 12, the reception device of FIG. 13, the device of FIG. 14, the encoder or decoder of FIG. 15, the encoder or decoder shown in FIGS. 38 to 44, the transmission method of FIG. 45, or the reception method of FIG. 46, or may correspond to any combination of the devices/methods shown in the figures.

The transmission/reception device/method according to the embodiments may perform the operations of the encoder 15000 or decoder 15010 shown in FIG. 15.

The point cloud encoder 15000 may scalably encode and transmit point cloud data.

The point cloud decoder 15010 may scalably decode the point cloud data.

Source data received by the encoder 15000 may be point cloud data including geometry data and/or attribute data.

The encoder 15000 may scalably encode the point cloud data, but may not immediately generate a partial PCC bitstream. Instead, when it receives full geometry data and full attribute data, it may store the data in a storage connected to the encoder. Then, the encoder may perform transcoding for partial encoding, and generate and transmit a partial PCC bitstream.

The decoder 15010 may receive and decode the partial PCC bitstream to reconstruct partial geometry and/or partial attributes.

Upon receiving the full geometry and full attributes, the encoder 15000 may store the data in the storage connected to the encoder, and transcode the point cloud data with a low quantization parameter (QP) to generate and transmit a complete PCC bitstream. The decoder 15010 may receive and decode the complete PCC bitstream to reconstruct full geometry and/or full attributes. The decoder 15010 may select a partial geometry and/or a partial attribute from the complete PCC bitstream through data selection.

The method/device according to the embodiment compresses and transmits the point cloud data by dividing the position information about data points and feature information such as color/brightness/reflectance, which are the point cloud data, into geometry information and attribute information. In this case, an octree structure having layers may be configured according to the degree of detail or PCC data may be configured according to levels of detail (LoDs). Then, scalable point cloud data coding and representation may be performed based the configured structure or data. In this case, only a part of the point cloud data may be decoded or represented due to the performance of the receiver or the transfer rate.

In this process, the method/device according to the embodiments may remove unnecessary data in advance. In other words, when only a part of the scalable PCC bitstream needs to be transmitted (i.e., only some layers are decoded in scalable decoding), there is no way to select and send only the necessary part. Therefore, 1) the necessary part needs to be re-encoded (15020) after decoding, or 2) the receiver must selectively apply an operation after the whole data is transferred thereto (15030). However, in case 1), delay may occur due to the time for decoding and re-encoding (15020). In case 2), bandwidth efficiency may be degraded due to transmission of unnecessary data. Further, when a fixed bandwidth is used, data quality may need to be lowered for transmission (15030).

Accordingly, the method/device according to the embodiments may define a slice segmentation structure of point cloud data, and signal a scalable layer and slice structure for scalable transmission.

In embodiments, to ensure efficient bitstream delivery and decoding, the bitstream may be divided into specific units to be processed.

For octree-based geometry compression, the method/device for transmitting/receiving point cloud data according to the embodiments may use entropy-based coding and direct coding together. In this case, a slice configuration for efficiently utilization of scalability is needed.

In addition, the point cloud data transmission/reception method/device according to embodiments may address a delay issue caused by a large amount of bitstream processed to access a region of interest in processing a large amount of point cloud data having a wide distribution and high point density.

For the point cloud data according to the embodiments, layers may be formed, which is a concept corresponding to one depth or a bundle of two or more depths based on the hierarchical structure, for example, depths (levels) of an octree or varous tree structures. A layer is provided to generate a unit of a sub-bitstream, and is a concept that corresponds to one depth or a bundle of two or more depths, and may correspond to one LOD or two or more LODs

Also, a slice is a unit for configuring a unit of a sub-bitstream, and may correspond to one depth, a part of one depth, or two or more depths. Also, it may correspond to one LOD, a part of one LOD, or two or more LODs. Also, a unit according to embodiments may include an LOD, a layer, a slice, a layer group, and a subgroup, which may be complementary to each other.

In the method/device according to embodiments, a segmentation structure of slices for point cloud data is proposed.

In the methods/devices according to embodiments, signaling information related to a scalable layer and slice structure for scalable transmission is proposed.

In the method/device according to embodiments, a definition of a layer group and/or a subgroup and slice segmentation is proposed.

Regarding the methods/devices according to embodiments, a hierarchical point cloud data structure for low-delay compression of mass point cloud data is proposed.

Regardng the methods/devices according to the embodiments, efficient context buffer management for a plurality of slices is proposed. Specifically, methods for reducing the context memory of a decoder, signaling and operations for managing the context memory, and methods for improving compression efficiency through a context atlas are proposed.

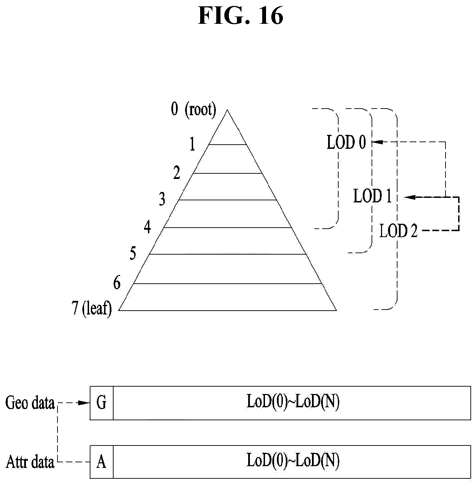

FIG. 16 shows a layer-based point cloud data configuration and a structure of geometry and attribute bitstreams according to embodiments.

The transmission/reception method/device according to the embodiments may configure layer-based point cloud data as shown in FIG. 16 to encode and decode the point cloud data.

Layering of point cloud data may have a layer structure in terms of SNR, spatial resolution, color, temporal frequency, bit depth, or the like depending on the application field, and may construct layers in a direction in which data density increases based on the octree structure or LoD structure.

The method/device according to the embodiments may configure, encode, and decode a geometry bitstream and an attribute bitstream based on the layering as shown in FIG. 16.

The transmission device/method according to the embodiments may divide a bitstream acquired through point cloud compression into a geometry data bitstream and an attribute data bitstream according to the type of data and transmitted.

Each bitstream according to the embodiments may be composed of slices. Regardless of layer information or LoD information, the geometry data bitstream and the attribute data bitstream may each be configured as one slice and delivered. In this case, when only a part of the layer or LoD is to be used, operations of 1) decoding the bitstream, 2) selecting only a desired part and removing unnecessary parts, and 3) performing encoding again based on only the necessary information should be performed.

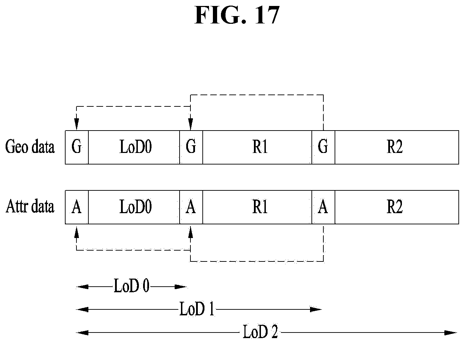

FIG. 17 shows a configuration of a bitstream according to embodiments.

The transmission method/device according to the embodiments may generate a bitstream as shown in FIG. 17, and the reception method/device according to the embodiments may decode point cloud data included in the bitstream as shown in FIG. 17.

Bitstream configuration according to embodiments

In embodiments, in order to avoid unnecessary intermediate processes, a bitstream may be divided into layers (or LoDs) and transmitted.

For example, in the LoD-based PCC structure, a lower LoD is included in a higher LoD. Information included in the current LoD but not included in the previous LoD, that is, information newly included in each LoD may be referred to as R (Rest). As shown in FIG. 17, the initial LoD information and the information R newly included in each LoD may be divided and transmitted in each independent unit.

The transmission method/device according to the embodiments may encode geometry data and generate a geometry bitstream. The geometry bitstream may be configured for each LOD or layer. The geometry bitstream may include a header (geometry header) for each LOD or layer. The header may include reference information for the next LOD or the next layer. The current LOD (layer) may further include information R (geometry data) not included in the previous LOD (layer).

The reception method/device according to the embodiments may encode attribute data and generate an attribute bitstream. The attribute bitstream may be configured for each LOD or layer, and the attribute bitstream may include a header (attribute header) for each LOD or layer. The header may include reference information for the next LOD or the next layer. The current LOD (layer) may further include information R (attribute data) not included in the previous LOD (layer).

The reception method/device according to the embodiments may receive a bitstream composed of LODs or layers and efficiently decode only necessary data without a complicated intermediate process.

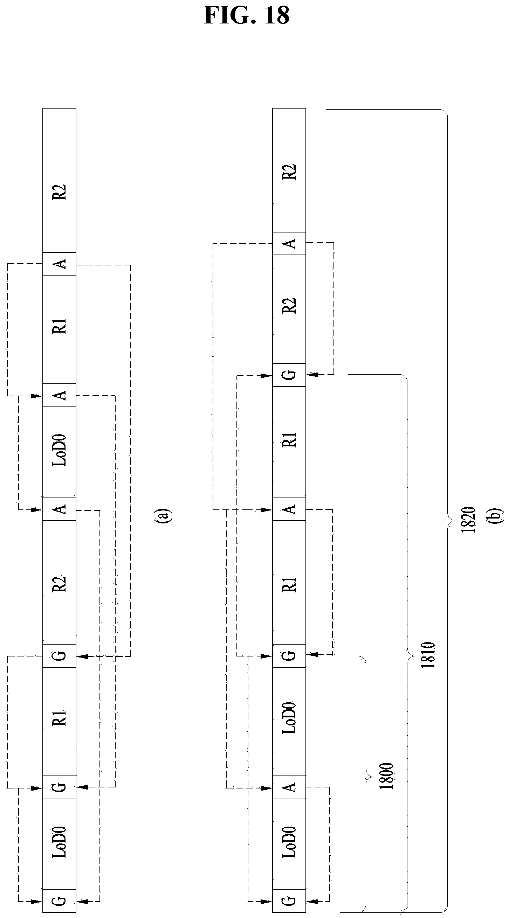

FIG. 18 illustrates a bitstream sorting method according to embodiments.

The method/device according to the embodiments may sort the bitstreams of FIG. 17 as shown in FIG. 18.

Bitstream sorting method according to embodiments

In transmitting a bitstream, the transmission method/device according to the embodiments may serially transmit geometry and attributes as shown in FIG. 18. In this case, depending on the type of data, the whole geometry information (geometry data) may be transmitted first, and then the attribute information (attribute data) may be transmitted. In this case, the geometry information may be quickly reconstructed based on the transmitted bitstream information.

In FIG. 18-(a), for example, layers (LODs) containing geometry data may be positioned first in the bitstream, and layers (LODs) containing attribute data may be positioned after the geometry layers. Since the attribute data is dependent on the geometry data, the geometry layer may be placed first. In addition, the positions may be changed differently according to embodiments. Reference may also be made between geometry headers and between an attribute header and a geometry header.

Referring to FIG. 18-(b), bitstreams constituting the same layer including geometry data and attribute data may be collected and delivered. In this case, by using a compression technique capable of parallel decoding of geometry and attributes, the decoding execution time may be shortened. In this case, information that needs to be processed first (lower LoD, wherein geometry must precede attribute) may be placed first.

A first layer 1800 includes geometry data and attribute data corresponding to the lowest LOD 0 (layer 0) together with each header. A second layer 1810 includes LOD 0 (layer 0), and also includes the geometry data and attribute data of points for a new and more detailed layer 1 (LOD 1), which are not included in LOD 0 (layer 0), as information R1. A third layer 1820 may be subsequently placed in a similar manner.

The transmission/reception method/device according to the embodiments may efficiently select a layer (or LoD) desired in an application field at a bitstream level when a bitstream is transmitted and received. In the bitstream sorting method according to the embodiments, collecting and transmitting geometry information (FIG. 18) may produce an empty part in the middle after bitstream level selection. In this case, the bitstream may need to be rearranged. In the case where geometry and attributes are bundled and delivered according to each layer (FIG. 18), unnecessary information may be selectively removed according to the application field as follows.

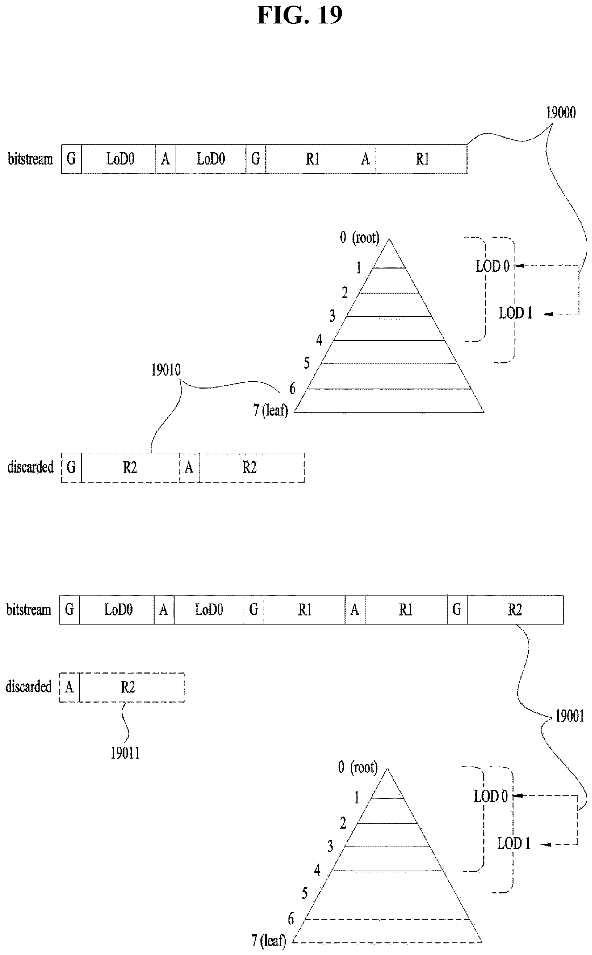

FIG. 19 illustrates a method of selecting geometry data and attribute data according to embodiments.

Bitstream selection according to embodiments

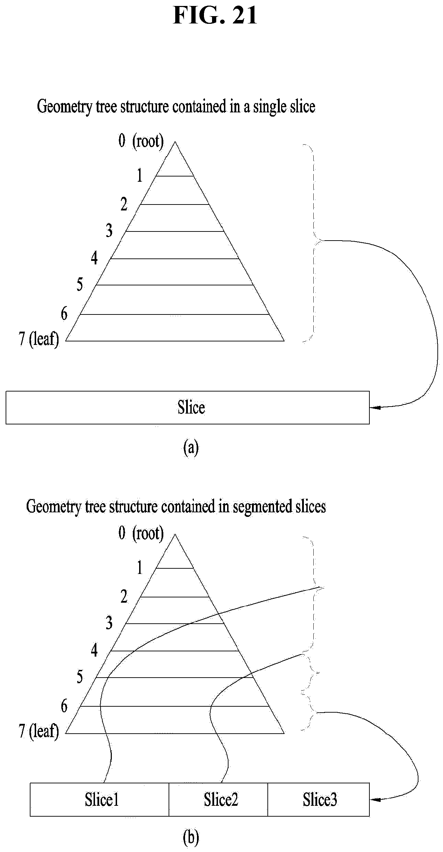

When a bitstream needs to be selected as described above, the method/device according to the embodiments may select data at the bitstream level as shown in FIG. 21: 1) symmetric selection of geometry and attributes; 2) asymmetrical selection of geometry and attributes; or 3) A combination of the above two methods.

1) Symmetric selection of geometry and attributes

Referring to FIG. 19, which illustrates a case where LoDs only up to LoD1 (LOD 0 +R1) are selected (19000) and transmitted or decoded, information corresponding to R2 (new portion in LOD 2) corresponding to an upper layer is removed for transmission/decoding.

2) Asymmetric selection of geometry and attributes

A method/device according to embodiments may transmit geometry and attributes asymmetrically. Only the attribute of the upper layer (Attribute R2) is removed (19001), and the full geometry (from level 0 (root level) to level 7 (leaf level) in the triangular octree structure) may be selected and transmitted/decoded (19011).

Referring to FIG. 16, when point cloud data is represented in an octree structure and hierarchically divided into LODs (or layers), scalable encoding/decoding (scalability) may be supported.

The scalability function according to the embodiments may include slice level scalability and/or octree level scalability.

The LoD (level of detail) according to the embodiments may be used as a unit for representing a set of one or more octree layers. In addition, it may mean a bundle of octree layers to be configured as a slice.

In attribute encoding/decoding, the LOD according to the embodiments may be extended and used as a unit for dividing data in detail in a broader sense.

That is, spatial scalability by an actual octree layer (or scalable attribute layer) may be provided for each octree layer. However, when scalability is configured in slices before bitstream parsing, selection may be made in LoDs according to embodiments.

In the octree structure, LOD0 may correspond to the root level to level 4, LOD1 may correspond to the root level to level 5, and LOD2 may correspond to the root level to level 7, which is the leaf level.

That is, as shown in FIG. 16, when scalability is utilized in slices, as in the case of scalable transmission, the provided scalable step may correspond to three steps of LoD0, LoD1, and LoD2, and the scalable step that may be provided by the octree structure in the decoding operation may correspond to eight steps from the root to the leaf.

According to embodiments, for example, in FIG. 16, when LoD0 to LoD2 are configured as respective slices, a transcoder (the transcoder 15040 of FIG. 15) of the receiver or the transmitter may select 1) LoD0 only, select 2) LoD0 and LoD1, or select 3) LoD0, LoD1, and LoD2 for scalable processing.

Example 1: When only LoD0 is selected, the maximum octree level may be 4, and one scalable layer may be selected from among octree layers 0 to 4 in the decoding process. In this case, the receiver may consider a node size obtainable through the maximum octree depth as a leaf node, and may transmit the node size through signaling information.

Example 2: When LoD0 and LoD1 are selected, layer 5 may be added. Thus, the maximum octree level may be 5, and one scalable layer may be selected from among octree layers 0 to 5 in the decoding process. In this case, the receiver may consider a node size obtainable through the maximum octree depth as a leaf node, and may transmit the node size through signaling information.

According to embodiments, an octree depth, an octree layer, and an octree level may be a unit in which data is divided in detail.

Example 3: When LoD0, LoD1, and LoD2 are selected, layers 6 and 7 may be added. Thus, the maximum octree level may be 7, and one scalable layer may be selected from among octree layers 0 to 7 in the decoding process. In this case, the receiver may consider a node size obtainable through the maximum octree depth as a leaf node, and may transmit the node size through signaling information.

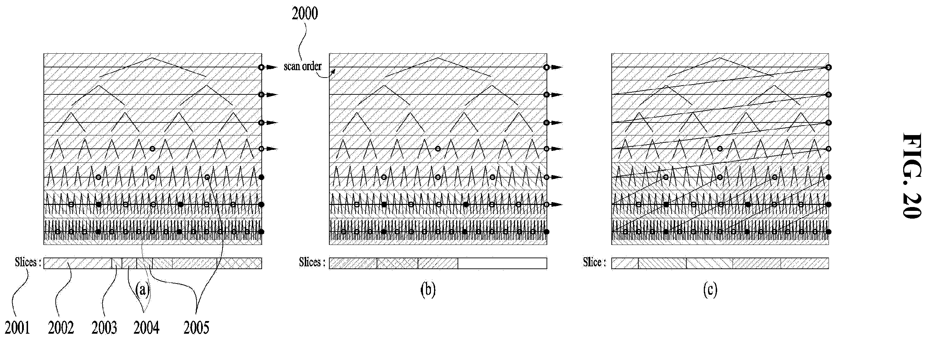

FIG. 20 illustrates a method of configuring a slice including point cloud data according to embodiments.

Slice configuration according to embodiments

The transmission/reception device/method according to the embodiments may configure a G-PCC bitstream by segmenting the bitstream in a slice structure. A data unit for detailed data representation may be a slice.

According to embodiments, a slice may refer to a unit of data into which the point cloud data is partitioned. That is, a slice represents a portion of the point cloud data. The term slice may be referred to by any of the terms that refer to a certain portion or unit

For example, one or more octree layers may be matched to one slice.

The transmission method/device according to the embodiments, for example, the encoder, may configure a slice 2001-based bitstream by scanning a node (point) included in an octree in the direction of scan order 2000.

In FIG. 20-(a), some nodes in an octree layer may be included in one slice.

The octree layer (e.g., level 0 to level 4) may constitute one slice 2002.

Partial data of an octree layer, for example, level 5 may constitute each slice 2003, 2004, 2005.

Partial data of an octree layer, for example, level 6 may constitute each slice.

In FIGS. 20-(b) and 20-(c), when multiple octree layers are matched to one slice, only some nodes of each layer may be included. In this way, when multiple slices constitute one geometry/attribute frame, information necessary to configure a layer may be delivered for the receiver. The information may include information about layers included in each slice and information about nodes included in each layer.

In FIG. 20-(b), octree layers, for example, level 0 to level 3 and partial data of level 4 may be configured as one slice.

Octree layers, for example, partial data of level 4 and partial data of level 5 may be configured as one slice.

Octree layers, for example, partial data of level 5 and partial data of level 6 may be configured as one slice.

An octree layer, for example, partial data of level 6 may be configured as one slice.

In FIG. 20-(c), octree layers, for example, data of level 0 to level 4 may be configured as one slice.

Partial data from each of octree layer level 5, level 6, and level 7 may be configured as one slice.

A slice may contain data that corresponds to multiple octree layers. For example, a slice may contain partial data from octree layer level 5 and data from octree layer level 6 or octree layer level 7 corresponding to the child nodes of that data.

The device/method according to the embodiments may encode the point cloud data, and may generate and transmit a bitstream further containing the encoded data and parameter information related to the point cloud data.

Furthermore, in generating the bitstream, the bitstream may be generated based on the bitstream structure according to embodiments (see, for example, FIGS. 16 to 20). Accordingly, the reception device, the decoder, and a corresponding device according to the embodiments may receive and parse a bitstream configured to be suitable for selective partial data decoding, and partially decode and efficiently provide the point cloud data (see FIG. 15).

Scalable transmission according to embodiments

The point cloud data transmission method/device according to the embodiments may scalably transmit a bitstream including point cloud data, and the point cloud data reception method/device according to the embodiments may scalably receive and decode the bitstream.

When the bitstream according to embodiments shown in FIGS. 16 to 20 is used for scalable transmission, information needed to select a slice required by the receiver may be transmitted to the receiver. Scalable transmission may mean transmitting or decoding only a part of a bitstream, rather than decoding the entire bitstream, and the result thereof may be low resolution point cloud data.

When scalable transmission is applied to the octree-based geometry bitstream, point cloud data may need to be configured with information ranging only up to a specific octree layer for the bitstream of each octree layer (FIG. 16) from a root node to a leaf node.

To this end, the target octree layer should have no dependency on information about the lower octree layer. This may be a constraint applied to geometry coding and attribute coding in common.

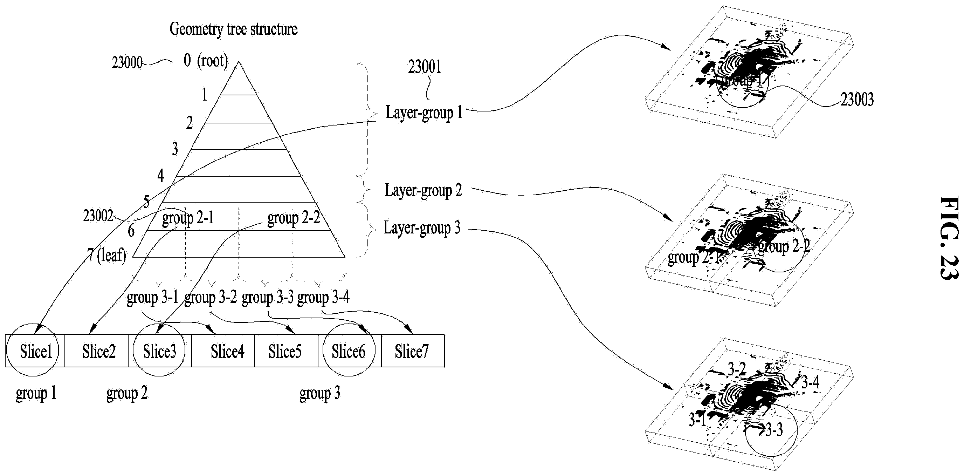

In addition, in scalable transmission, a scalable structure used for the transmitter/receiver to select a scalable layer needs to be delivered. Considering the octree structure according to the embodiments, all octree layers may support the scalable transmission, or the scalable transmission may be allowed only for a specific octree layer or lower layers. When a slice includes some of the octree layers, a scalable layer in which the slice is included may be indicated. Thereby, it may be determined whether the slice is necessary/not necessary in the bitstream stage. In the example of FIG. 20-(a), the part starting from the root node constitutes one scalable layer without supporting scalable transmission. Following octree layers may be matched to scalable layers in a one-to-one correspondence. In general, scalability may be supported for a part corresponding to the leaf node. As shown in FIG. 23-(c), when multiple octree layers are included in a slice, it may be defined that one scalable layer shall be configured for the layers.

In this case, scalable transmission and scalable decoding may be used separately according to the purpose. The scalable transmission may be used at the transmitting/receiving side for the purpose of selecting information up to a specific layer without involving a decoder. The scalable decoding is used to select a specific layer during coding. That is, the scalable transmission may support selection of necessary information without involving a decoder in a compressed state (in the bitstream stage), such that the information may be transmitted or determined by the receiver. On the other hand, the scalable decoding may support encoding/decoding data only up to a required part in the encoding/decoding process, and may thus be used in such a case as scalable representation.

In this case, the layer configuration for scalable transmission may be different from the layer configuration for scalable decoding. For example, the three bottom octree layers including leaf nodes may constitute one layer in terms of scalable transmission. However, in terms of scalable decoding, when all layer information is included, scalable decoding may be performed for each of leaf node layer, leaf node layer -1, leaf node layer -2.

FIG. 21 illustrates a single slice-based geometry tree structure and a segmented slice-based geometry tree structure according to embodiments.

The method/device according to the embodiments may configure slices for transmitting point cloud data as shown in FIG. 21.

FIG. 21 shows a geometry tree structure contained in different slice structures. According to G-PCC technology, the entire coded bitstream may be included in a single slice. For multiple slices, each slice may contain a sub-bitstream. The order of the slices may be the same as the order of the sub-bitstreams. The bitstreams may be accumulated in breadth-first order of the geometry tree, and each slice may be matched to a group of tree layers (see FIG. 21). The segmented slices may inherit the layering structure of the G-PCC bitstream.

Following slices may not affect the previous slices, just as a higher layer does not affect lower layers in the geometry tree.

The segmented slices according to the embodiments are effective in terms of error robustness, effective transmission, support of region of interest, and the like.

1) Error resilience

Compared to a single slice structure, a segmented slice may be more resilient to errors. When a slice contains the entire bitstream of a frame, data loss may affect the entire frame data. On the other hand, when the bitstream is segmented into multiple slices, some slices that are not affected by the loss even may be decoded even when some other slices are lost.

2) Scalable transmission

Multiple decoders having different capabilities may be supported. When coded data is in a single slice, the LOD of the coded point cloud may be determined prior to encoding. Accordingly, multiple pre-encoded bitstreams having different resolutions of the point cloud data may be independently transmitted. This may be inefficient in terms of large bandwidth or storage space.

When a PCC bitstream is generated and included in segmented slices, the single bitstream may support decoders of different levels. From the decoder perspective, the receiver may select target layers and may deliver the partially selected bitstream to the decoder. Similarly, by using a single PCC bitstream without partitioning the entire bitstream, a partial PCC bitstream may be efficiently generated at the transmitter side.

3) Region based spatial scalability

Regarding the G-PCC requirement, region based spatial scalability may be defined as follows. A compressed bitstream may be configured to have one or more layers. A particular region of interest may have a high density with additional layers, and the layers may be predicted from lower layers.

To support this requirement, it is necessary to support different detailed representations of a region. For example, in a VR/AR application, a distant object may be represented with low accuracy and a nearby object may be represented with high accuracy. Alternatively, the decoder may increase the resolution of the region of interest according to a request. This operation may be implemented using the scalable structure of G-PCC, such as the geometry octree and scalable attribute coding scheme. Decoders should access the entire bitstream based on the current slice structure including the entire geometry or attributes. This may lead to inefficiency in terms of bandwidth, memory, and decoder. On the other hand, when the bitstream is segmented into multiple slices, and each slice includes sub-bitstreams according to scalable layers, the decoder according to the embodiments may select slices as needed before efficiently parsing the bitstream.

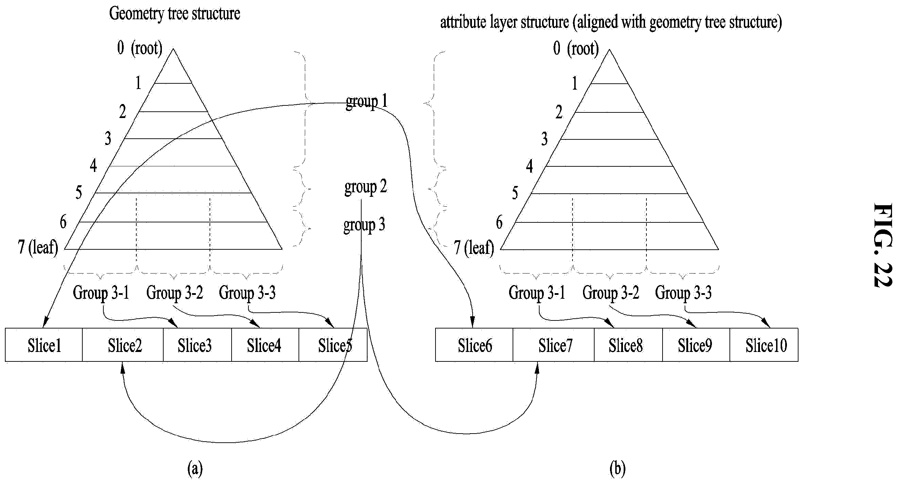

FIG. 22 shows a layer group structure of a geometry coding tree and an aligned layer group structure of an attribute coding tree according to embodiments.

The method/device according to the embodiments may generate a slice layer group using a hierarchical structure or a tree structure of point cloud data as shown in FIG. 22.

The method/device according to the embodiments may apply segmentation of geometry and attribute bitstreams included in different slices. In addition, from the perspective of tree depth, a coding tree structure of geometry and attribute coding and each slice included in the partial tree information may be used.

FIG. 22-(a) shows an example of a geometry tree structure and a proposed slice segments.

For example, 8 layers (layer 0 to layer 7) may be configured in an octree, and 5 slices may be used to contain sub-bitstreams of one or more layers. A group represents a group of geometry tree layers. For example, group 1 includes layers 0 to 4, group 2 includes layer 5, and group 3 includes layers 6 and 7. Also, a group may be divided into three subgroups. Parent and child pairs exist in each subgroup. Groups 3-1 to 3-3 are subgroups of group 3. When scalable attribute coding is used, the tree structure is identical to the geometry tree structure. The same octree-slice mapping may be used to create attribute slice segments (FIG. 22-(b)).

A layer group represents a bundle of layer structure units generated in G-PCC coding, such as an octree layer and a LoD layer.

A subgroup may represent a set of neighboring nodes based on position information for one layer group. Alternatively, a set of neighbor nodes may be configured based on the lowest layer (which may be the layer closest to the root side, and may be layer 6 in the case of group 3 in FIG. 22) in the layer group, may be configured by Morton code order, may be configured based on distance, or may be configured according to coding order. Additionally, a rule may be defined such that nodes having a parent-child relationship are present in the same subgroup.

When a subgroup is defined, a boundary may be formed in the middle of a layer. Rearding whether continuity is maintained at the boundary, sps_entropy_continuation_enabled_flag, gsh_entropy_continuation_flag, and the like may be used to indicate whether entropy is used continuously, and ref slice_id may be provided. Thereby, a continuation from the previous slice may be maintained.

The tree structure of geometry according to embodiments may be an octree structure, and the attribute layer structure or attribute tree structure according to embodiments may include a level of detail (LOD) structure. That is, the tree structure for the point cloud data may include layers corresponding to a depth or level, and the layers may be grouped.

The octree analyzer 40002 or the LOD generator 40009 of FIG. 4, and the octree synthesizer 11001 or the LOD generator 11008 of FIG. 11 may generate an octree structure of the geometry or may generate an LOD tree structure of the attribute. In addition, as shown in FIGS. 21 and 22, point cloud data may be grouped based on layers in a tree structure.

Referring to FIG. 21, multiple layers are grouped to form first to third groups. One group may be divided again to form subgroups. FIG. 21 illustrates that the third group is divided into three subgroups.

The method/device according to the embodiments may generate geometry-based slice layers and attribute-based slice layers.

The attribute coding layer may have a structure different from that of the geometry coding tree.

For efficient use of the layered structure of the G-PCC, segmentation of slices paired with the geometry and attribute layered structure may be provided.

For the geometry slice segments, each slice segment may contain coded data from a layer group. Here, the layer group is defined as a group of consecutive tree layers, the start and end depths of the tree layers may be a specific number in the tree depth, and the start depth is less than the end depth.

For the attribute slice segments, each slice segment may contain coded data from a layer group. Here, the layers may be tree depths or LODs according to an attribute coding scheme.

The order of the coded data in the slice segments may be the same as the order of the coded data in a single slice.

As parameter sets included in the bitstream, the following may be provided.

FIG. 23 illustrates a structure of a layer group and subgroups according to embodiments.

The layer structure-based point cloud data and bitstream may represent a bounding box, as shown in FIG. 23.

FIG. 23 shows the subgroup structure and the bounding box corresponding to the subgroup. Layer group 2 is divided into two subgroups (group2-1 and group2-2) and layer group 3 is divided into four subgroups (group3-1, group3-2, group3-3, and group3-4). The subgroups of layer group 2 and the subgroups of layer group 3 are included in different slices. Given slices of a layer group and subgroups with bounding box information, 1) the bounding box of each slice may be compared with the ROI, and 2) the slice whose subgroup bounding box correlates with the ROI may be selected and spatial access may be performed. Then, 3) the selected slice is selected. When the ROI is considered in region 3-3, slices 1, 3, and 6 are selected as subgroup bounding boxes of layer group 1 and subgroups 2-2 and 3-3 to cover the ROI region. For effective spatial access, it is assumed that there is no dependency between the subgroups of the same layer group. In live streaming or low-latency use cases, when each slice segment is received, the selection and decoding operations may be performed to increase temporal efficiency.

The method/device according to the embodiments may represent data as layers (which may be referred to as depths or levels) as a layer tree 23000 during geometry and/or attribute encoding. Point cloud data corresponding to layers (depths/levels) may be grouped into a layer group (or group) 23001. Each layer group may be further divided (segmented) into subgroups 23002. A bitstream may be generated by configuring each subgroup as a slice. The reception device according to the embodiments may receive the bitstream, select a specific slice, decode a subgroup included in the slice, and decode a bounding box corresponding to the subgroup. For example, when slice 1 is selected, a bounding box 23003 corresponding to group 1 may be decoded. Group 1 may be data corresponding to the largest region. When the user wants to additionally view a detailed region for group 1, the method/device according to the embodiments may select slice 3 and/or slice 6, and may partially and hierarchically access the bounding box (point cloud data) of group 2-2 and/or group 3-3 for the detailed regions included in the region of group 1.

The device/method according to the embodiments may group point cloud data into layer groups (or subgroups) as described above, and encode and decode the data based thereon.

According to embodiments, the geometry or attribute bitstream may be divided into slices on a per layer group/subgroup basis, and the geometry or attribute information may be efficiently compressed and reconstructed. In this case, continuity of context reference may be used to reduce the loss of coding efficiency.

A context table used in coding one slice may be used when coding another slice. The context table, which is based on a correlation between nodes present in one geometry tree, may be used to enhance coding efficiency. In this case, as a method for considering a local correlation between layer-groups, a restriction may be applied such that a context reference relationship is established when a subgroup bounding box of a reference slice includes or is the same as a subgroup bounding box of a referenced slice. That is, the coding efficiency may be further increased by using a context table of a slice which is in a child subgroup relationship with a parent subgroup or a child subgroup relationship with an ancestor subgroup. Alternatively, as a method for reducing the burden of a buffer storing a context table, a context table of a first slice may be used for coding of a following slice.

Next, an embodiment applying continuity of context reference among the previously proposed criteria is described. In order to use continuity of context reference information, a layer-group index and a subgroup index of each node are determined, and a reference context reference according to each index is used as an initial value of the context table at the start of each subgroup. In the encoding operation, a node may be present regardless of a subgroup order, and a context table may be ensured to be continuously used in a subgroup through a process of storing and loading an encoder context state in and from the buffer.

This process is performed in two steps. At the time when the depth is changed, it is determined whether a layer-group is changed, and different operations are performed according to the determination.

The figure illustrates a tree structure (e.g., octree or LOD). A parent node-child node relationship between nodes included in the tree structure may be represented as a connection between a node of a higher level and a node of a lower level. The transmission/reception device/method according to the embodiments may generate a tree structure and group the point cloud data into a plurality of groups based on layers of the tree structure. The groups may be layer groups, subgroups, etc., and may correspond to slices according to embodiments.

In encoding/decoding a layer group, a subgroup, or a slice, the point cloud data transmission/reception device/method according to embodiments may perform encoding/decoding by loading context information based on a reference layer group, a reference subgroup, or a reference slice. That is, the grouped point cloud data may be encoded/decoded based on the context information.

It may correspond to a layer group, subgroup, or slice. The transmission/reception device/method according to the embodiments may perform an arithmetic encoding on the grouped point cloud data and store the context in a buffer. Further, the transmission/reception device/method according to the embodiments may load the stored context information from the buffer in order to perform the arithmetic encoding on the grouped point cloud data.

In encoding/decoding point cloud data belonging to a layer group, a subgroup, or a slice, the point cloud data transmission/reception device/method according to embodiments may perform encoding/decoding by loading stored contexts of a reference layer group, a reference subgroup, or a reference slice. Here, the reference layer group, the reference subgroup, or the reference slice may include nodes corresponding to a parent of nodes belonging to the layer group, subgroup, or slice to be encoded/decoded.

In other words, the point cloud data transmission/reception device/method according to the embodiments encodes/decodes a second group based on the context information related to a first group and stores the context information related to the second group in the buffer. The stored context information related to the second group may be used to encode/decode a third group. Here, the first to third groups may be grouped based on any layers. In addition, the first group may be a group corresponding to a parent of the second group.

In addition, the point cloud data transmission/reception device/method according to embodiments may store the context of a parent layer group, a parent subgroup, or a parent slice in the buffer, and may use the stored contexts in encoding/decoding of a child layer group, a child subgroup, or a child slice. The parent group or slice may be positioned at a higher level than the child group or slice in the tree structure, and a node belonging to the parent group (layer group or subgroup)/slice may have a parent-child relationship with a node belonging to the child group/slice.

The point cloud data transmission device/method according to the embodiments may set or initialize a context, a neighbor search range, or planar buffer information whenever a depth or a level of a tree structure (e.g., octree or LOD) starts, or at a start point of a layer group (or a subgroup or a slice) or an octree depth in which layer groups (or subgroups, slices) are consecutive. The time when the depth (or layer) of the tree structure starts may indicate when the leftmost node is reached in the depth (or layer) of the tree structure. When the octree depth (or level) changes within the same group (layer group, subgroup, or slice), the initialization or setting of the aforementioned information may not be performed.

Embodiments may improve the efficiency of transmission and reception of point cloud data by encoding/decoding a current layer group, subgroup, or slice by continuously using the context of a reference layer group, a reference subgroup, or a reference slice based on the association between layer groups, subgroups, or slices in encoding and decoding the point cloud data. The device/method for transmitting and receiving point cloud data according to embodiments may improve the efficiency of compression of a bitstream by using information related to the reference layer group, the reference subgroup, or the reference slice.

Applying context continuity may mean continuously using context information (context model, arithmetic model, or probability section information) about a related reference layer group, a related reference subgroup, or a related reference slice in the encoding/decoding operation. In encoding/decoding point cloud data, the point cloud data transmission/reception device/method according to the embodiments may continuously use a context based on a reference group (a reference layer group or a reference subgroup) or a reference slice related to a current group (layer group or subgroup) or slice. Whether continuity of context is available (whether there is a relation between slices or groups) may be defined through signaling information. According to embodiments, when there is a reference slice or a reference group in encoding/decoding a current slice or group is encoded/decoded, the transmission/reception device/method may encode/decode the current slice or the current group based on the context information related to the reference slice or the reference group. That is, the current slice or group may be encoded/decoded by applying context continuity.

The context information according to the embodiments may refer to point cloud data, for example, additional information generated in encoding and/or decoding geometry data and/or attribute data by by the arithmetic encoder and/or arithmetic decoder of FIGS. 4 and 11. According to embodiments, in encoding/decoding current point cloud data in the encoding and/or decoding according to the embodiments, the current point cloud data may be efficiently compressed and reconstructed based on context information calculated based on previous point cloud data.

Hereinafter, arithmetic encoding will be described.

Arithmetic encoding is one of the entropy encoding algorithms used for lossless compression. Arithmetic encoding may replace the entire message with a single real number n.

Arithmetic coding may divide a range of 0.0 to 1.0 based on the probability of appearance of symbols appearing in the message. For example, suppose that the probability of appearance of symbol "a" in the message is 60%, the probability of appearance of symbol "b" in the message is 20%, and the probability of appearance of symbol "c" in the message is 20%. In the first step, the range of 0.0 to 1.0 is may be divided into a range of 0.0 to 0.6 representing the probability of appearance of symbol "a," a range of 0.6 to 0.8 representing the probability of appearance of symbol "b," and a range of 0.8 to 1.0 representing the probability of appearance of symbol "c." In this case, the ratio for dividing the probability range such as 0.0 to 1.0 is called a probability model (or probability mode) or a context model.

For example, in applying arithmetic coding to symbol "abc," the first coded symbol is "a," and thus it corresponds to the range of 0.0 to 0.6. In the next step, the range of 0.0 to 0.6 corresponding to "a" is again divided into proportions of 60% 20%, and 20%. Accordingly, the range of 0.0 to 0.6 may be divided into a range of 0.0 to 0.36, a range of 0.36 to 0.48, and a range of 0.48 to 0.6. Next, the second encoded symbol is "b," and thus it corresponds to the range of 0.36 to 0.48. When the range of 0.36 to 0.48 corresponding to "b" is further divided into proportions of 60%, 20%, and 20%, it may be divided into a range of 0.36 to 0.432, a range of 0.432 to 0.456, and a range of 0.456 to 0.48. Then, the third encoded symbol is "c," and thus it corresponds to the range of 0.456 to 0.48. That is, in the arithmetic encoding, a range corresponding to an encoded symbol is divided again according to a probability model or a context model, and then any one of the ranges divided according to the next encoded symbol is selected. By repeating this process, arithmetic encoding is operated.

In the example above, the probability range derived after encoding the message "abc" corresponds to the range of 0.456 to 0.48. Accordingly, the message "abc" may be encoded into a real value within the range. For example, the real number 0.47 may represent "abc." The value of 0.47 is transmitted to the decoder according to the embodiments. The decoder may check a probability range to which the value of 0.47 belongs in the probability range divided according to the context model, and decode the message into a symbol corresponding to the probability range.

For the probability model (or probability mode) or context model, may be a model that is initially determined according to an arithmetic encoding algorithm, or a model configured by checking the probability of appearance of symbols in encoding/decoding. The probability model or the context model may be updated during the encoding/decoding operation.

The point cloud data transmission/reception device according to the embodiments applies context continuity in performing encoding/decoding, which means continuously encoding the current slice or the current group in continuation with a probability range calculated by arithmetic coding of the reference slice or the reference group. For example, when the probability range derived at last in arithmetic encoding of the reference slice is 0.456 to 0.48, the range from 0.456 to 0.48 may be divided again according to the context model or the probability model to continuously encode the current slice. That is, a probability range or a context model may not be initialized for every slice or group (layer group or subgroup). Instead, the current slice may be encoded/decoded in continuation with the probability range of the reference slice derived through relation search.

In encoding/decoding, the point cloud data transmission/reception device/method according to the embodiments may use context-adaptive binary arithmetic coding (CABAC). A context model (or probability mode) used for arithmetic encoding of a slice or a group may be initialized for every slice or group, or a probability mode used in a related reference slice or reference group may be reused in the current slice or the current group.

In addition, the current slice may be encoded continuously in the probability range derived from the related reference slice, or may be decoded using the probability range information. In the case where slices have similar characteristics, inter-symbol redundancy may be utilized by reusing the probability mode. Thereby, the compression efficiency may be increased. Using the same probability mode as the probability mode used in the reference slice has the same meaning as using the context model of the reference slice. Even in arithmetic coding, Huffman coding, or range coding other than CABAC, the probability mode or context model of the reference slice may be reused.

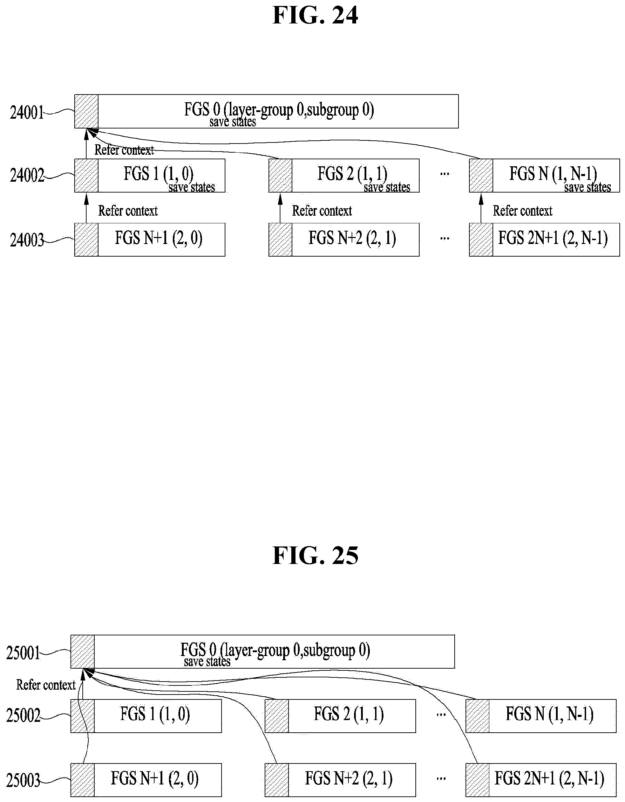

FIG. 24 illustrates an example of context reference between layer groups according to embodiments.

The device/method for transmitting/receiving point cloud data according to the embodiments may correspond to the the transmission device 10000 and reception device 10004 of FIG. 1, the point cloud video encoder 10002, the transmitter 10003, the point cloud video decoder 10006, the receiver 10005, the acquisition 20000/encoding 20001/transmission 20002 of FIG. 2, the decoding 20003 of FIG. 2, the rendering 20004, the encoder of FIG. 4, the reception device of FIG. 11, the transmission device of FIG. 12, the reception device of FIG. 13, the device of FIG. 14, the encoder or decoder of FIG. 15, the encoder or decoder shown in FIGS. 38 to 44, the transmission method of FIG. 45, or the reception method of FIG. 46, or may correspond to any combination of the devices/methods shown in the figures.

Components of the device/method for transmitting/receiving point cloud data according to the embodiments may be devices/methods corresponding to hardware, software, processors, modules, and/or combinations thereof. The point cloud data transmission/reception device/method according to the embodiments may encode or decode the point cloud data with reference to inter-group context information described in FIG. 24.

Referring to FIG. 24, FGS may represent a subgroup or slice, wherein the subgroup or slice may be a group of point cloud data according to embodiments.

In FIG. 24, FGS 1(1,0) represents subgroup 0 of layer group 1, and FGS 2(1,1) represents subgroup 1 of layer group 1. FGS N+1(2,0) represents subgroup 0 of layer group 2, and FGS N+2(2,1) represents subgroup 1 of layer group 2.

In FIG. 24, "Save states" indicates encoding or decoding the corresponding subgroup and storing context information, and "Refer context" indicates referencing the stored context information to encode or decode the corresponding subgroup.

Thus, in the example of FIG. 24, FGS 1 reference context information related to FGS 0 (24001), and FGS N+1 (24003) references context information related to FGS 1 (24002). As shown in FIG. 24, a subgroup (or slice) belonging to layer group 2 may reference the context of a subgroup (or slice) belonging to layer group 1. Also, a subgroup belonging to layer group 1 may be the parent of the subgroups belonging to layer group 2.

Context inheritance

FIG. 24 illustrates a context reference structure for layer group slicing according to embodiments. In the figure, FGSs may correspond to subgroups according to embodiments, and subgroups in the same row are considered to be in the same layer group. Subgroups may correspond to slices. In the figure, an arrow pointing from one slice to another slice indicates a context reference relationship between the two slices. The context of the current slice may be a slice decoded prior to the current slice.

Considering an embodiment of spatial random access, referencing a parent subgroup may be a good choice to ensure independence between subgroups. However, as the number of subgroups or layer groups increases, the number of context buffers may increase. When the number of context buffers is considered as the number of referenced slices, the number of context buffers may be the sum of all subgroups except those belonging to the first and last layer groups. This is expressed as the following equation, where N denotes the number.

$$N\_(context\ buffer) = 1 + N\_subgroup \times (N\_(layer\text{-}group) - 2)$$

FIG. 25 illustrates an example of context reference between groups according to embodiments.

In FIG. 25, FGS 1 (25002) to FGS N and FGS N+1 (25003) to FGS 2N+1 reference the context information related to FGS 0 (25001). That is, all subgroups (or slices) except FGS 0 (25001) reference FGS 0 (25001).

One method to reduce the size of the context buffers according to embodiments may be to reduce the number of subgroups referenced by following slices. An extreme example of this method is to reference the root slice as shown in FIG. 25. This approach, which is based on the number of context buffers described above, results in a single context buffer because the number of subgroup slices referenced is 0

$$N\_(context\ buffer) = 1$$

That is, all slices reference the first slice. Compared to the case of FIG. 24, the number of stored context states is reduced to one, and all dependent slices reference the first slice.

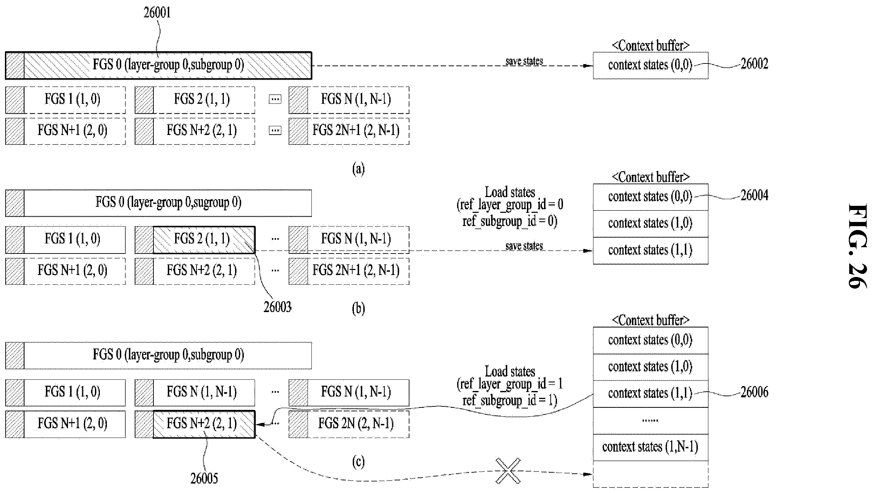

FIG. 26 illustrates an example of context buffer management according to embodiments.

The device/method for transmitting/receiving point cloud data according to the embodiments may correspond to the transmission device 10000 and reception device 10004 of FIG. 1, the point cloud video encoder 10002, the transmitter 10003, the point cloud video decoder 10006, the receiver 10005, the acquisition 20000/encoding 20001/transmission 20002 of FIG. 2, the decoding 20003 of FIG. 2, the rendering 20004, the encoder of FIG. 4, the reception device of FIG. 11, the transmission device of FIG. 12, the reception device of FIG. 13, the device of FIG. 14, the encoder or decoder of FIG. 15, the encoder or decoder shown in FIGS. 38 to 44, the transmission method of FIG. 45, or the reception method of FIG. 46, or may correspond to any combination of the devices/methods shown in the figures.

Components of the device/method for transmitting/receiving point cloud data according to the embodiments may be devices/methods corresponding to hardware, software, processors, modules, and/or combinations thereof. The point cloud data transmission/reception device/method according to the embodiments may encode/decode the point cloud data with reference to inter-group context information by storing context information corresponding to the groups in a context buffer, as shown in FIG. 26.

Referring to (a) of FIG. 26, the transmission/reception device according to the embodiments processes FGS 0(0,0) (26001) and stores context information (26002) related to the group (FGS 0) in the context buffer.

Referring to (b) of FIG. 26, the transmission/reception device according to the embodiments may load the context information 26004 related to the FGS 0 stored in the context buffer in order to process (encode or decode) FGS 2(1,1) (26003), and may process FGS 2(1,1) and store the context information related to FGS 2(1,1) in the context buffer (Save states). Here, the loading of the context information may be performed by referencing parameters ref_layer_group_id and ref_subgroup_id.

Referring to (c) of FIG. 26, the transmission/reception device according to the embodiments may load the context information (context states(1,1)) related to FGS 2 (1,1) to process (encode or decode) FGS N+2 (2,1) (26005). Since FGS N+2 (2,1) belongs to the last layer group, the context information related thereto is not stored in the context buffer.

FIG. 26 illustrates the change in the context buffer for the method of referencing a parent subgroup. When the bitstream of a slice is decoded, the context state is stored in the context buffer, as shown in FIG. 26-(a). When context inheritance is enabled, the context states of the following slices are initialized to one of the stored context states of the previous slices as indicated by ref layer_group_id and ref_subgroup_id (FIG. 26-(b)). Thus, the context state of the slice belonging to the last layer group is initialized by the stored context state of the previous slice, as shown in FIG. 26-(c). However, in the case where there is a restriction that subgroups belonging to the same layer group should not be referenced, the reception device (or decoder) according to the embodiments may determine not to store the context of FGS N+1 to 2N, Based on the previous information, the smart decoder may save the context buffer.

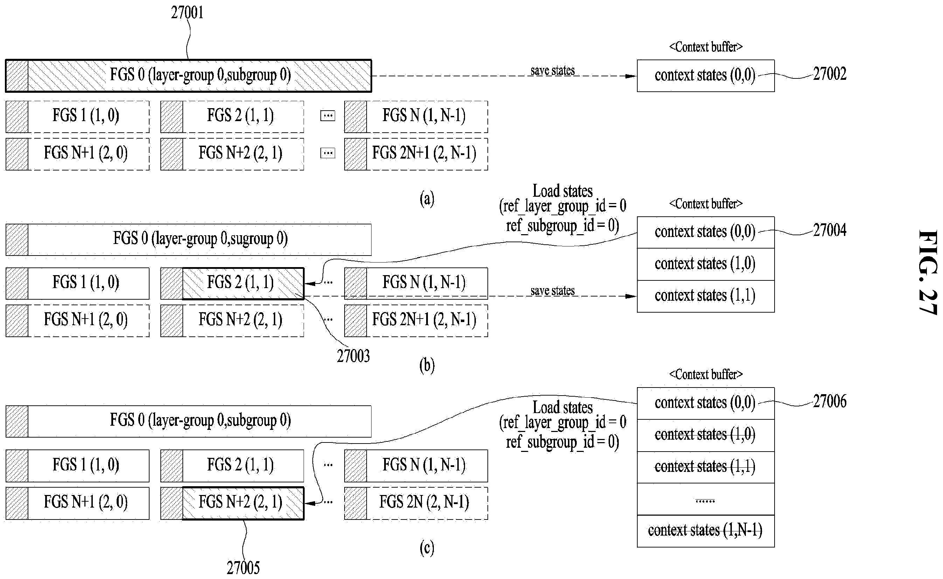

FIG. 27 illustrates an example of context buffer management according to embodiments.

The device/method for transmitting/receiving point cloud data according to the embodiments may correspond to the transmission device 10000 and reception device 10004 of FIG. 1, the point cloud video encoder 10002, the transmitter 10003, the point cloud video decoder 10006, the receiver 10005, the acquisition 20000/encoding 20001/transmission 20002 of FIG. 2, the decoding 20003 of FIG. 2, the rendering 20004, the encoder of FIG. 4, the reception device of FIG. 11, the transmission device of FIG. 12, the reception device of FIG. 13, the device of FIG. 14, the encoder or decoder of FIG. 15, the encoder or decoder shown in FIGS. 38 to 44, the transmission method of FIG. 45, or the reception method of FIG. 46, or may correspond to any combination of the devices/methods shown in the figures.

Components of the device/method for transmitting/receiving point cloud data according to the embodiments may be devices/methods corresponding to hardware, software, processors, modules, and/or combinations thereof. The point cloud data transmission/reception device/method according to the embodiments may encode/decode the point cloud data with reference to inter-group context information by storing context information corresponding to the groups in a context buffer, as shown in FIG. 27.

Referring to (a) of FIG. 27, the transmission/reception device according to the embodiments processes FGS 0(0,0) (27001) and stores context information (27002) related to the group (FGS 0) in the context buffer.

Referring to (b) of FIG. 27, the transmission/reception device according to the embodiments may load the context information 27004 related to the FGS 0 stored in the context buffer in order to process (encode or decode) FGS 2(1,1) (27003), and may process FGS 2(1,1) and store the context information related to FGS 2(1,1) in the context buffer (Save states). Here, the loading of the context information may be performed by referencing parameters ref_layer_group_id and ref_subgroup_id.

Referring to (c) of FIG. 27, the transmission/reception device according to the embodiments may load the context information (context states(0,0)) 27006 related to FGS 0(0,0) (27001) to process (encode or decode) FGS N+2 (2,1) (27005). Since FGS N+2 (2,1) (27005) belongs to the last layer group, the context information related thereto is not stored in the context buffer.

When flexible context reference is allowed, a context state that is not used by following slices is present. For example, a root layer-group referencing may be considered where all context states of the dependent slices are initialized by the context state stored from the first slice. The decoders are not aware of the overall reference structure and are likely to use the current context of the following slices. However, as expected, the context states stored from (1,0) to (1,N-1) are not used by any of the slices. In this example, the inefficiency is caused by a lack of information from the decoder perspective.

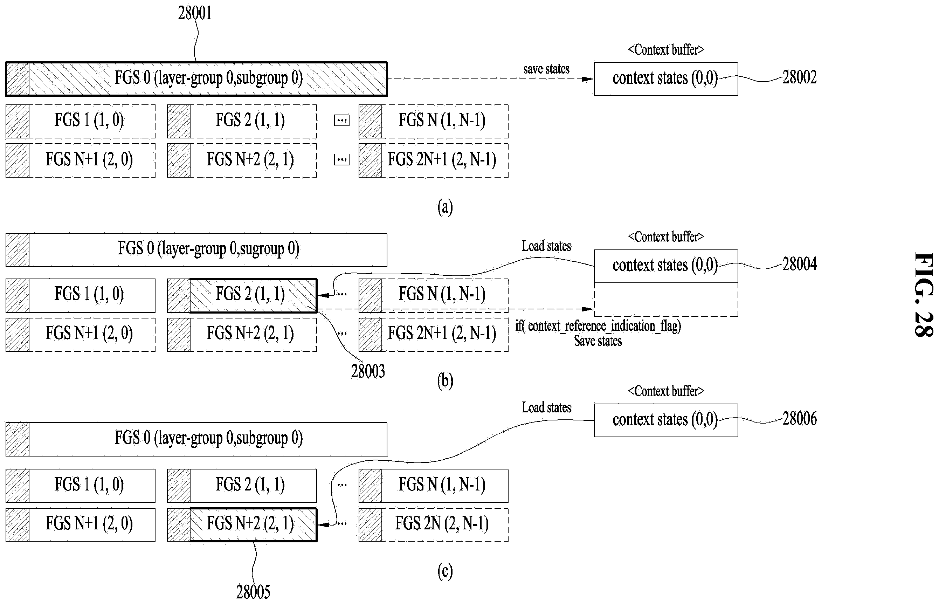

FIG. 28 illustrates an example of context buffer management according to embodiments.

The device/method for transmitting/receiving point cloud data according to the embodiments may correspond to the the transmission device 10000 and reception device 10004 of FIG. 1, the point cloud video encoder 10002, the transmitter 10003, the point cloud video decoder 10006, the receiver 10005, the acquisition 20000/encoding 20001/transmission 20002 of FIG. 2, the decoding 20003 of FIG. 2, the rendering 20004, the encoder of FIG. 4, the reception device of FIG. 11, the transmission device of FIG. 12, the reception device of FIG. 13, the device of FIG. 14, the encoder or decoder of FIG. 15, the encoder or decoder shown in FIGS. 38 to 44, the transmission method of FIG. 45, or the reception method of FIG. 46, or may correspond to any combination of the devices/methods shown in the figures.

Components of the device/method for transmitting/receiving point cloud data according to the embodiments may be devices/methods corresponding to hardware, software, processors, modules, and/or combinations thereof. The point cloud data transmission/reception device/method according to the embodiments may encode/decode the point cloud data with reference to inter-group context information by storing context information corresponding to the groups in a context buffer, as shown in FIG. 28.

Referring to (b) of FIG. 28, the transmission/reception device/method according to the embodiments may load context information (context states(0,0)) 28004 related to FGS 0(0,0) (28001) from the context buffer to process (encode or decode) FGS 2(1,1) (28003). Also, the context information related to FGS 2(1,1) may be stored in the context buffer based on context_reference_indication_flag information. In other words, the context information related to FGS 2(1,1) may or may not be stored in the buffer depending on context_reference_indication_flag. The context_reference_indication_flag may be generated and delivered by the transmission device/method according to the embodiments, and may be used by the reception device/method according to the embodiments.

Referring to (c) of FIG. 28, the transmission/reception device/method according to the embodiments may load context information (context states(0,0)) 28006 related to FGS 0(0,0) (28001) from the context buffer to process (encode or decode) FGS N+2(2,1) (28005).

Since the context buffer always stores only the context information related to FGS 0, the transmission/reception device according to the embodiments may use the memory of the buffer efficiently.

To increase the efficiency of management of the context buffer, the transmission/reception device according to the embodiments proposes a new signal to indicate whether the current context of the followed slices is used and to determine whether to store the context for the decoder.

A followed slice according to embodiments may represent a slice that is referenced by other slices. A following slice according to embodiments may represent a slice that references another slice.

To improve context buffer management on the decoder side, context reference information is proposed from the current slice perspective. That is, context state reference indication by the followed slice is proposed.

FIG. 28-(b) shows an example of buffer management of the proposed signal. Compared to the previous cases with no other information, storing the context states in the context buffer is determined by a context reference indicator (context_reference_indication_flag). When the context reference indicator is ON, the decoder stores the current context state in the context buffer to allow the context state to be used by followed slices. On the other hand, when the context reference indicator is OFF, the decoder does not store the current context state in the context buffer in order to save context memory. Comparing (c) of FIG. 28 with (c) of FIG. 27, the context buffer in the example of the root layer reference has only one context compared to the context buffer in the example of the parent subgroup reference. The saved context memory size is N units, where N denotes the number of subgroups.

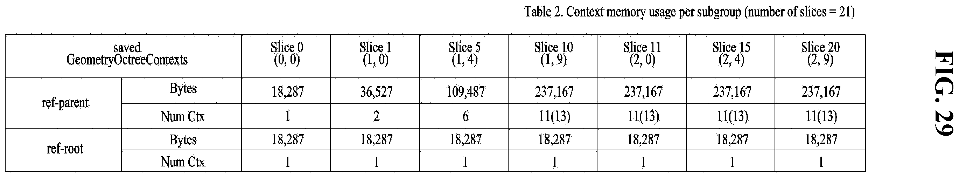

FIG. 29 shows a table comparing the context memory usage of context buffers according to embodiments.

To identify the effect of using flexible context inheritance according to embodiments, the fixed and flexible context reference approaches were compared for memory usage and compression losses. The context reference of the parent subgroup, ref-parent, and the context reference of the root layer-group, ref-root, are considered as representative of the fixed and flexible context reference approaches.

For each method, the amount of memory used to store GeometryOctreeContext was measured for each decoding process of the slices. In this experiment, Statue_Klimt_vox12.ply is used as input, and 10 subgroups are provided under the test conditions in Section 3.1. At each step, memory usage is measured using Visual Studio 15 2017 as a tool.

Referring to FIG 29, the memory usage in each method is expressed in bytes and the number of contexts. The number of contexts is derived based on the size of one GeometryOctreeContext, which is 18,230 bytes. For parent reference, the number of stored contexts increases monotonically from slice 1 to slice 5. In slice 10, the expected number of contexts was 11 (=1+10), but the number of the contexts measured as the actual size was 13, which results from the memory allocation strategy of the compiler. Also, the size of the context storing memory did not change for the slices in the last layer group (i.e., slice 1 to slice 20). On the other hand, the number of context memories did not change in the root reference case. This means that only one context is used for all slices from slice 1 to slice 20.

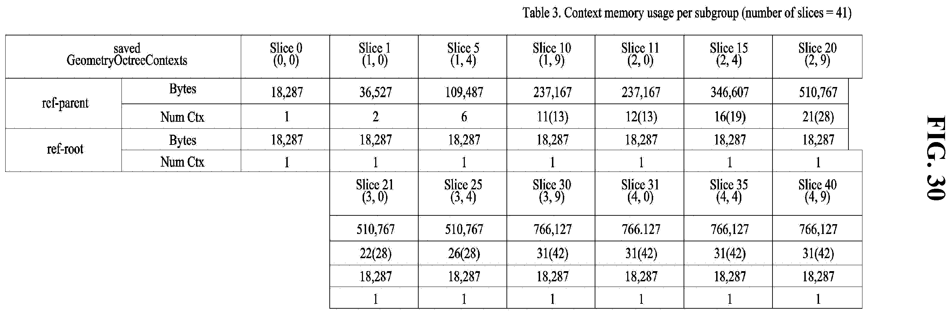

FIG. 30 shows a table comparing context memory usage of a context buffer according to embodiments.

To see how memory usage changes with the number of slices, the same memory check was performed for an increased number of layer groups with the same content. The layer group structure changes from 8-3-1 to 8-1-1-1-1. In the table in FIG 30, the number of contexts referenced by ref-parent increases except for slices 31 to 40 in layer group 4. On the other hand, for ref-root, the context memory remains unchanged for all slices.

Referring to FIG 30, for the parent group reference method (ref-parent), as the number of slices (or subgroups) increases, the number of stored contexts increases, and memory usage increases. In contrast, for the root group reference method (ref-root), the number of stored contexts remains constant at one even when the number of slices (or subgroups) increases.

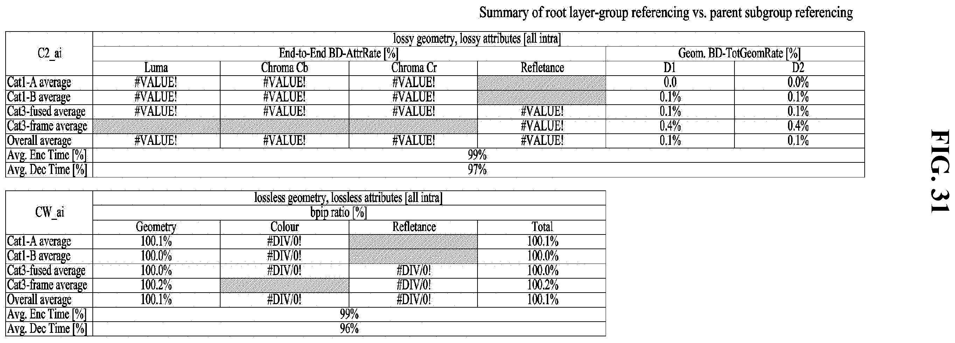

FIG. 31 shows a table presenting a result of context buffer management according to embodiments.

The average bitrates in the two methods are compared to investigate the compression loss as context reference changes. Referring to the table in FIG. 31, the average compression loss is 0.1% for the conditions of C2 and CW. Regarding time consumption, the root layer-group referencing exhibits a decoding time that is 3% and 4% less than that of the parent subgroup referencing.

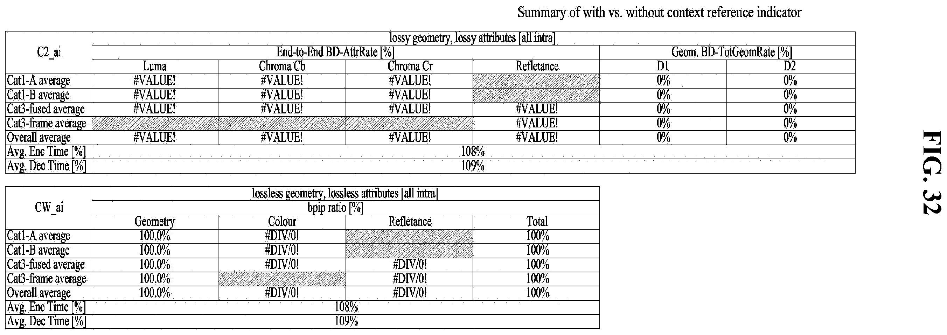

FIG. 32 shows a table presenting a result of context buffer management according to embodiments.

Referring to FIG. 32, the overall compression difference between using and not using a context reference indicator is summarized. The results show that the effect of the additional signaling is marginal. It was also found that the bit rate did not change in a few cases where the 1-bit signal was not increased due to bit alignment at the end of the dependent data unit header.

The transmission/reception device/method according to the embodiments may use context, phiBuffer, Planar context, and buffer continuity between slices to avoid a decrease in coding efficiency caused by dividing slices. To this end, a dependent geometry brick may be implemented as shown in the following example.

```
int
PCCTMC3Decoder3::decodeDependentGeometryBrick(const
PayloadBuffer& buf)
{
assert(buf.type == PayloadType::kDependentGeometryDataUnit);
std::cout << "positions bitstream size " << buf.size() << " B\n";

// todo(df): replace with attribute mapping
bool hasColour = std::any_of(
_sps->attributeSets.begin(), _sps->attributeSets.end(),
[](const AttributeDescription& desc) {
return desc.attributeLabel == KnownAttributeLabel::kColour;
});

bool hasReflectance = std::any_of(
_sps->attributeSets.begin(), _sps->attributeSets.end(),
[](const AttributeDescription& desc) {
return desc.attributeLabel == KnownAttributeLabel::kReflectance;
});

PCCPointSet3 tmpPoints;
tmpPoints.clear();
tmpPoints.addRemoveAttributes(hasColour, hasReflectance);

pcc::chrono::Stopwatch<pcc::chrono::utime_inc_children_clock>
clock_user;
clock_user.start();

int gbhSize, gbfSize;
_dep_gbh = parseDepGbh(*_sps, *_gps, _gbh, buf, &gbhSize, &gbfSize);

if (_dep_gbh.layer_group_id > _sps->num_layer_groups_minus1 -
_params.numSkipLayerGroups) {
return 0;
}

bool isOutputLayerGroup = false;
```

```
if (_dep_gbh.layer_group_id == _sps->num_layer_groups_minus1 -
_params.numSkipLayerGroups)
    isOutputLayerGroup = true;

bool selectedSlice = true;
auto curBboxMin = _dep_gbh.subgroupBboxOrigin;
auto curBboxMax = _dep_gbh.subgroupBboxOrigin +
_dep_gbh.subgroupBboxSize;
auto roiMin = _params.roiOrigin;
auto roiMax = _params.roiOrigin + _params.roiSize;

if (_sps->subgroup_enabled_flag[_dep_gbh.layer_group_id]) {
if (_params.roiEnabledFlag) {
for (int i = 0; i < 3; i++) {
if ((roiMin[i] < curBboxMax[i] && roiMax[i] >= curBboxMin[i])) {
continue;
}
else {
selectedSlice = false;
break;
}
}
}
if (!selectedSlice) {
return 0;
}
}

// set default attribute values (in case an attribute data unit is lost)
// NB: it is a requirement that geom_num_points_minus1 is correct
tmpPoints.resize(_dep_gbh.footer.geom_num_points_minus1 + 1);

if (hasColour) {
auto it = std::find_if(
_outCloud.attrDesc.cbegin(), _outCloud.attrDesc.cend(),
[](const AttributeDescription& desc) {
return desc.attributeLabel == KnownAttributeLabel::kColour;
```

```
});

Vec3<attr_t> defAttrVal = 1 << (it->bitdepth - 1);
if (!it->params.attr_default_value.empty())
for (int k = 0; k < 3; k++)
defAttrVal[k] = it->params.attr_default_value[k];
for (int i = 0; i < tmpPoints.getPointCount(); i++)
tmpPoints.setColor(i, defAttrVal);
}

if (hasReflectance) {
auto it = std::find_if(
_outCloud.attrDesc.cbegin(), _outCloud.attrDesc.cend(),
[](const AttributeDescription& desc) {
return desc.attributeLabel == KnownAttributeLabel::kReflectance;
});
attr_t defAttrVal = 1 << (it->bitdepth - 1);
if (!it->params.attr_default_value.empty())
defAttrVal = it->params.attr_default_value[0];
for (int i = 0; i < tmpPoints.getPointCount(); i++)
tmpPoints.setReflectance(i, defAttrVal);
}

int refLayerGroup = _dep_gbh.ref_layer_group_id;
int curLayerGroup = _dep_gbh.layer_group_id;
assert(refLayerGroup < curLayerGroup);

if (_accNumSubgroupsPerLayerGroup[curLayerGroup] == 0) {
int numSubgroups = 1;
if (_sps->subgroup_enabled_flag[_dep_gbh.layer_group_id])
for (int k = 0; k < 3; k++)
numSubgroups *= std::ceil((double)_rootBboxSize[k] /
_dep_gbh.subgroupBboxSize[k]);

_nodesSaved[curLayerGroup].resize(numSubgroups);
_subgroupIdToArrayIdx[curLayerGroup].resize(numSubgroups, -1);
_refIdxToSavedArrayIdx[curLayerGroup].resize(numSubgroups, -1);
```

```
        _accNumSubgroupsPerLayerGroup[curLayerGroup] = 1;


        _bboxMinVector[curLayerGroup].resize(numSubgroups);
        _bboxMaxVector[curLayerGroup].resize(numSubgroups);
        }
        else
        _accNumSubgroupsPerLayerGroup[curLayerGroup]++;


        int curSubgroup = _accNumSubgroupsPerLayerGroup[curLayerGroup] - 1;
        _subgroupIdToArrayIdx[curLayerGroup][_dep_gbh.subgroup_id] =
curSubgroup;


        int refArrayIdx =
_refIdxToSavedArrayIdx[_dep_gbh.ref_layer_group_id][_dep_gbh.ref_subgroup_id];
        auto cur_ctxtMem = _ctxtMemSaved[refArrayIdx];
        std::vector<int> cur_phiBuffer;
        pcc::OctreePlanarState cur_planar;
        if (_gps->geom_angular_mode_enabled_flag)
        cur_phiBuffer = _phiBufferSaved[refArrayIdx];
        if (_gps->geom_planar_mode_enabled_flag)
        cur_planar = _planarSaved[refArrayIdx];


        EntropyDecoder aec;
        aec.setBuffer(buf.size() - gbhSize - gbfSize, buf.data() + gbhSize);
        aec.enableBypassStream(_sps->cabac_bypass_stream_enabled_flag);
        aec.start();


        assert(_dep_gbh.layer_group_id > 0);
        int startDepth = 0;
        for (int i = 0; i < _dep_gbh.layer_group_id; i++)
        startDepth += _sps->num_layers_minus1[i] + 1;
        int endDepth = startDepth + _sps-
>num_layers_minus1[_dep_gbh.layer_group_id] + 1;


        if (_dep_gbh.layer_group_id == _sps->num_layer_groups_minus1) {
        std::vector<Vec3<int>>
```

```
lvlNodeSizeLog2{ _gbh.trisoupNodeSizeLog2(*_gps) };
                for (auto split : inReverse(_gbh.tree_lvl_coded_axis_list)) {
                Vec3<int> splitStv = { !!(split & 4), !!(split & 2), !!(split & 1) };
                lvlNodeSizeLog2.push_back(lvlNodeSizeLog2.back() + splitStv);
                }
                std::reverse(lvlNodeSizeLog2.begin(), lvlNodeSizeLog2.end());
                int maxDepth = lvlNodeSizeLog2.size() - 1;


                if (endDepth < maxDepth
                || (endDepth > maxDepth && startDepth < maxDepth)) {
                endDepth = maxDepth;
                }
                else if (startDepth >= maxDepth)
                assert(startDepth < maxDepth);
                }


                int accNumLaysers = 0;
                for (int i = 0; i <= _sps->num_layer_groups_minus1; i++)
                accNumLaysers += _sps->num_layers_minus1[i] + 1;



                Vec3<int> bboxMin = { 0, 0, 0 };
                Vec3<int> bboxMax = _rootBboxSize;
                if (_sps->subgroup_enabled_flag[_dep_gbh.layer_group_id]) {
                bboxMin = _dep_gbh.subgroupBboxOrigin;
                bboxMax = bboxMin + _dep_gbh.subgroupBboxSize;
                }
                _bboxMinVector[curLayerGroup][curSubgroup] = bboxMin;
                _bboxMaxVector[curLayerGroup][curSubgroup] = bboxMax;
```

In this regard, the reception device according to the embodiments may determine the position of the parent node based on the bounding box information without separate signaling, as follows. This is based on that the parent bounding box includes a child subgroup bounding box.

According to embodiments, the parent bounding box may be referred to as an upper group bounding box, and the child bounding box may be referred to as a lower group bounding box. According to embodiments, the upper group bounding box information may be inferred using the structure of the bounding box rather than being directly signaled.

```
 // find parent
nt parentLayerGroup = curLayerGroup - 1;
 int parentSubgroup = -1;
   for (int i = 0; i < _bboxMinVector[parentLayerGroup].size(); i++) {
```

```
if (_bboxMinVector[parentLayerGroup][i][0] <= bboxMin[0]
 &&_bboxMinVector[parentLayerGroup][i][1] <= bboxMin[1]
&&_bboxMinVector[parentLayerGroup][i][2] <= bboxMin[2]

 && _bboxMaxVector[parentLayerGroup][i][0] > bboxMin[0]
 && _bboxMaxVector[parentLayerGroup][i][1] > bboxMin[1]
&& _bboxMaxVector[parentLayerGroup][i][2] > bboxMin[2]) {
parentSubgroup = i;
break;
}
}
```

Based on the subgroup parameter and context/buffer initialization information configured above, geometry octree decoding may be performed as follows.

```
decodeGeometryOctreeGranularitySlicing(
*_gps, _gbh, tmpPoints, cur_ctxtMem, aec,
 &_nodesSaved[curLayerGroup][curSubgroup],
 &_nodesSaved[parentLayerGroup][parentSubgroup], &cur_phiBuffer,
 &cur_planar, startDepth, endDepth, bboxMin, bboxMax, isOutputLayerGroup,
 _dep_gbh.footer.geom_num_points_minus1 + 1);


 currentPointCloud.append(tmpPoints);// The operation of storing output
 points.
```

The receiver may determine whether to save the context, phi Buffer, and Planar context based on whether to reuse the context, as shown below.

```
if (_dep_gbh.context_reuse_flag) {
_refIdxToSavedArrayIdx[curLayerGroup][_dep_gbh.subgroup_id] =
_ctxtMemSaved.size();
_ctxtMemSaved.push_back(cur_ctxtMem);
  if(_gps->geom_angular_mode_enabled_flag)
 _phiBufferSaved.push_back(cur_phiBuffer);
 if(_gps->geom_planar_mode_enabled_flag)
 _planarSaved.push_back(cur_planar);

 int idx =
_refIdxToSavedArrayIdx[curLayerGroup][_dep_gbh.subgroup_id];
 }
```

The transmission/reception device/method according to the embodiments may fixedly use the context of the root layer-group across all slices to manage the decoder context buffer. In this case, the decoder (or receiving device) uses the context/buffer information related to the first slice (or group) and thus may not need memory to store the context/buffer related to subsequent slices (or groups). In this case, SPS, GPS, APS, or the like may indicate that the root layer group is used for separate signaling.

Furthermore, the transmission/reception device/method according to the embodiments may use a predetermined context atlas without using continuity of context. In other words, depending on the characteristics of the point cloud data, a pre-generated context initialization value may be pre-stored in the encoder and decoder, or a context initialization value may be delivered through separate signaling. The context atlas may be configured as follows: init / dense content / sparse content / scant content / LiDAR content, etc. In this case, to obtain the context atlas, the context exhibiting the best performance according to methods such as deep learning may be used universally for the content according to each classification.

The context information according to the embodiments may be information generated by encoding or decoding the grouped point cloud data, or may be predetermined and stored information. In the case where the contest information is predetermined information, the context information may include optimal values derived by methods such as deep learning based on characteristics of the content.

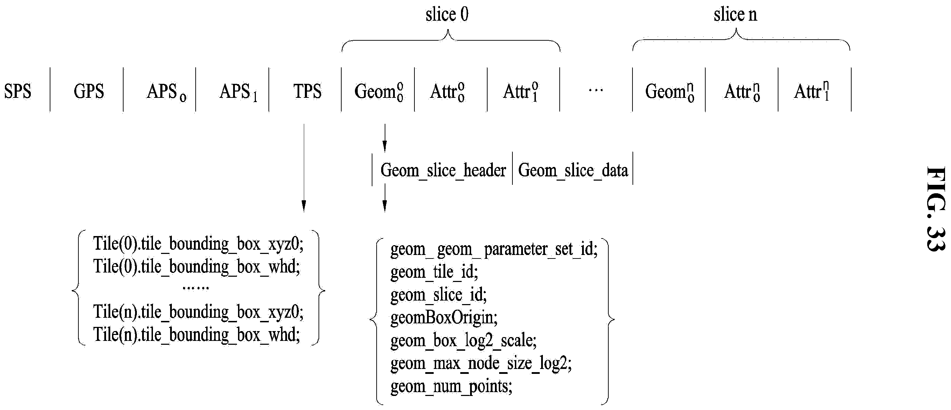

FIG. 33 illustrates a bitstream according to embodiments.

The transmission/reception device/method according to the embodiments may generate, transmit, or receive and use the bitstream illustrated in FIG. 33.

The transmission/reception device/method according to the embodiments may define information about the separated slices in a parameter set and SEI message as described below. The information may be defined in the sequence parameter set, geometry parameter set, attribute parameter set, geometry slice, header and attribute slice header, and may be defined in corresponding or separate positions depending on the application, system, or the like to provide different scopes and methods of application.

Signaling information may have different meanings depending on the position where the signal is transmitted. If the information is defined in the SPS, it may be equally applied to the entire sequence. If the information is defined in the GPS, this may indicate that the signaling is used for reconstruction of geometry information. If the information is defined in the APS, this may indicate that the signaling is applied to attribute reconstruction. If the information is defined in the TPS, this may indicate that the signaling is applied only to points within a tile. If the information is delivered in a slice, this may indicate that the signaling is applied only to the slice. In addition, the range and method to be applied may be defined in a corresponding position or a separate position depending on the application or system so as to be used differently. In addition, when the syntax elements defined below are applicable to multiple point cloud data streams as well as the current point cloud data stream, they may be carried in a superordinate parameter set.

Each abbreviation has the following meaning. Each abbreviation may be referred to by other terms within the scope of equivalent meaning.

```
SPS: Sequence Parameter Set
  GPS: Geometry Parameter Set
 APS: Attribute Parameter Set
  TPS: Tile Parameter Set
  Geom: Geometry Bitstream = Geometry Slice Header + Geometry Slice
 Data
  Attr: Attribute Bitstream = Attribute Slice Header + Attribute Slice Data
```

In this embodiment, it has been described that information is defined independently of the coding technique. However, the information may be defined in connection with the coding technique. In order to support regionally different scalability, the information may be defined in the tile parameter set. Also, when the syntax elements defined below is applicable not only to the current point cloud data stream but also to multiple point cloud data streams, they may be delivered through a superordinate parameter set, etc.

Alternatively, a network abstract layer (NAL) unit may be defined and relevant information for selecting a layer, such as layer _id, may be delivered. Thereby, a bitstream may be selected at a system level.

Parameters (which may be referred to as metadata, signaling information, or the like) according to embodiments may be generated in the process of the transmission device/method according to the embodiments described below and used by the reception device/method according to the embodiments to reconstruct point cloud data.

For example, the parameters may be generated by a metadata processor (or metadata generator) of the transmission device according to the embodiments, which will be described later, and may be acquired by a metadata parser of the reception device according to the embodiments.

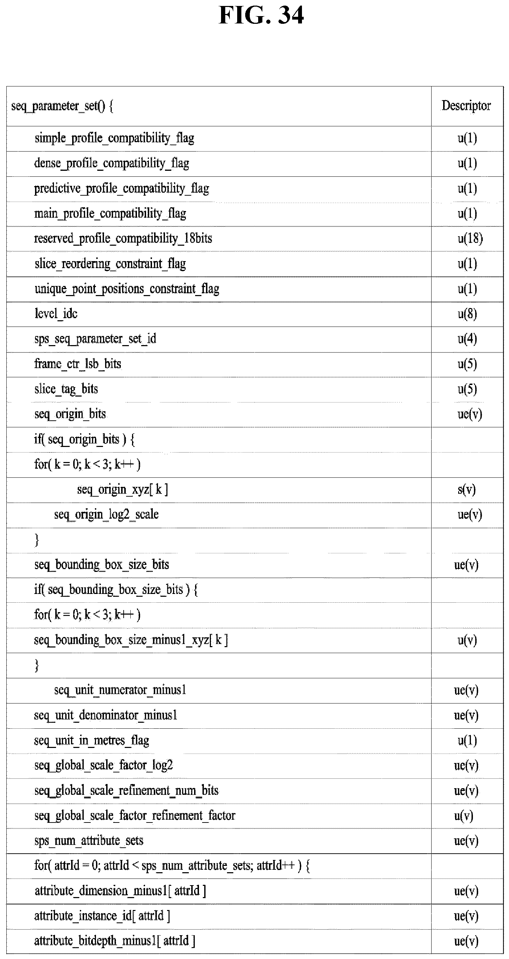

FIG. 34 shows a syntax of a sequence parameter set according to embodiments.

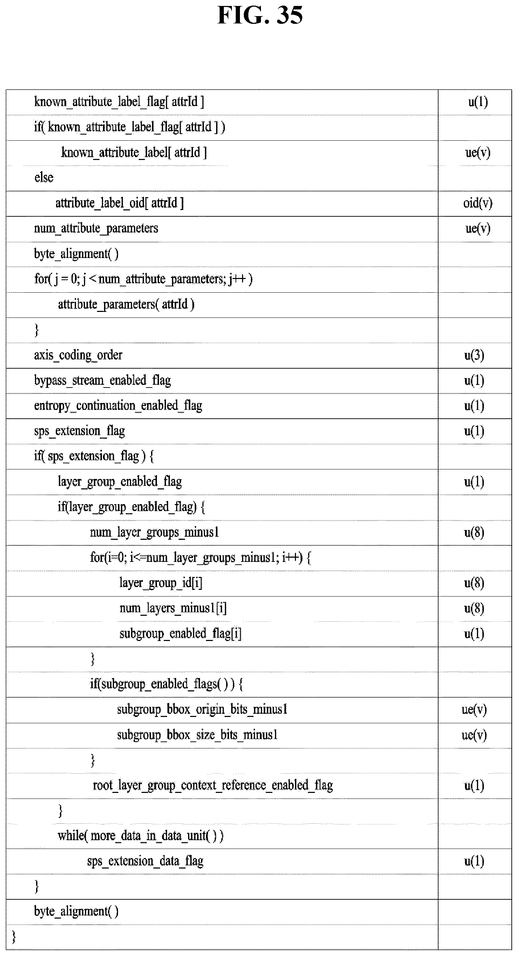

FIG. 35 shows a syntax of a sequence parameter set according to embodiments.

The parameters according to the embodiments may be defined in a sequence parameter set of a bitstream. They may be defined in a geometry parameter set, an attribute parameter set, or a file parameter set. Further, the parameters according to the embodiments may be defined in a data unit or data unit header.

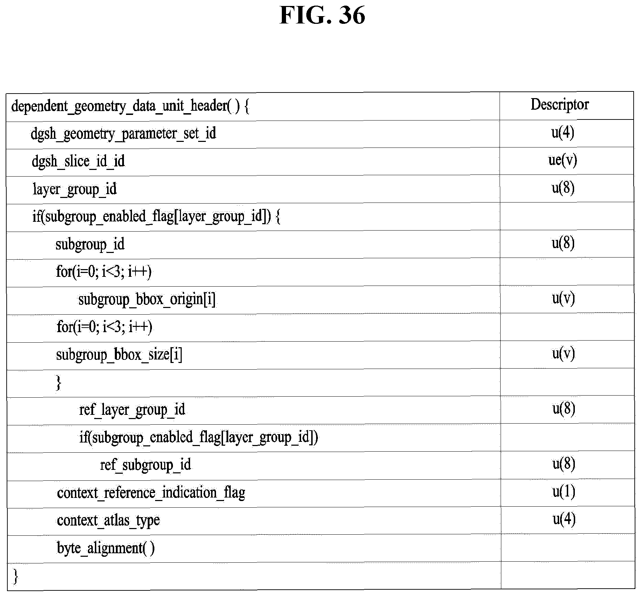

FIG. 36 shows a syntax of a geometry data unit header according to embodiments.

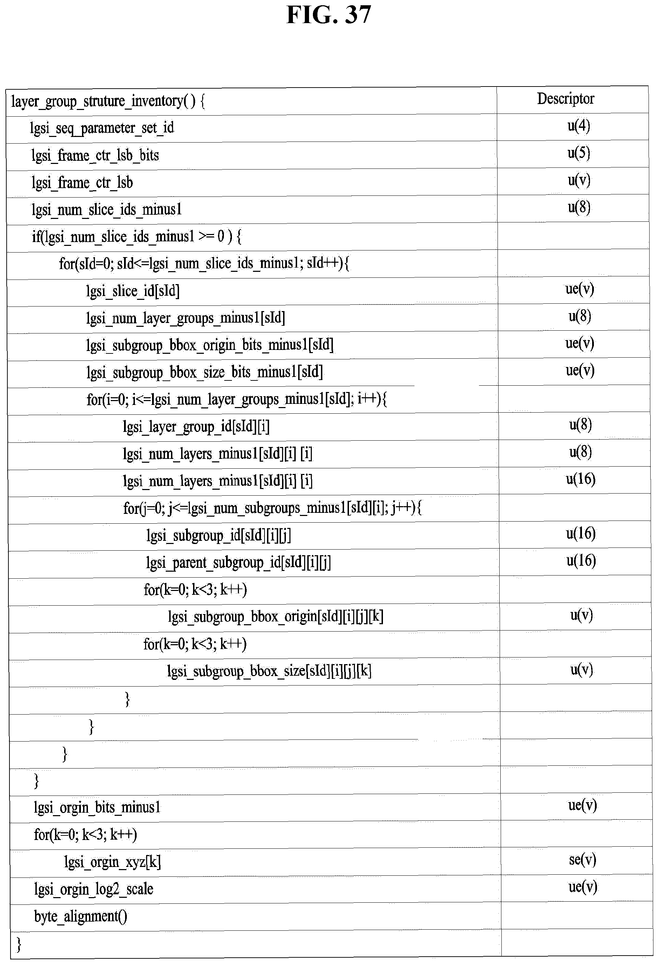

FIG. 37 shows a syntax of a layer group structure inventory according to embodiments.

The parameter information described below may be contained in a bitstream according to embodiments. Specifically, the parameter information may be defined as sub-parameters of the parent parameters described with reference to FIGS. 34 to 37.

layer_group enabled flag equal to 1 indicates that the geometry bitstream of a frame or a tile is contained in multiple slices which is matched to a coding layer group or a subgroup thereof. layer_group_enabled_flag equal to 0 indicates that the geometry bitstream of a frame or a tile is contained in a single slice.

num_layer_groups_minus1 plus 1 indicates the number of layer groups, where a layer group represents a contiguous tree layer group that is part of a geometry coding tree structure. num_layer_groups_minus1 may be in the range of 0 to number of coding tree layers..

layer_group_id specifies the identifier of a layer-group of a frame or a tile. layer_group_id may be in the range of 0 to num_layer_groups_minus1.

num_layers_minus1 plus 1 specifies the number of coding layers contained in the i-th layer-group. The total number of layer-groups may be derived by adding all (num_layers_minus1[i] + 1) for i from 0 to num_layer_groups_minus1.

subgroup_enabled_flag equal to 1 specifies that the current layer-group consists of subgroups which may be contained in multiple slices. subgroup_enabled_flag equal to 0 specifies that the current layer-group is contained in a single slice. The subgroups are mutually exclusive and the sum of subgroups is identical to the layer-group.

subgroup_bbox origin_bits_minus1 plus 1 indicates the length in bits of the syntax element subgroup_bbox_origin.

subgroup_bbox_size_bits_minus1 plus 1 indicates the length in bits of the syntax element subgroup_bbox_size.

root_layer_group context_reference enabled flag indicates that the context/buffer information related to the root layer-group is referenced to initialize all slices. When necessary, a specific layer-group/subgroup/slice may be specified that precedes the root layer-group. When inter prediction is allowed, a layer-group/subgroup/slice in a specific frame may be specified.

Dependent Geometry Data Unit Header Semantics

Parameters according to embodiments may be defined in dependent_geometry_data_unit_header. Dependent_geometry_data_unit_header may be defined in the SPS, GPS, APS, TPS, data unit, or data unit header in a bitstream according to embodiments. A slice or slice header according to the embodiments may correspond to a data unit or data unit header.

dgsh_slice_id

layer_group_id specifies the identifier of a layer-group of a frame or a tile. layer_group_id may be in the range of 0 to num_layer_groups_minus1.

subgroup_id specifies the identifier of the subgroup of the layer group indicated by layer_group_id. subgroup_id may be in the range of 0 to num_subgroups_minus1[layer_group_id]. subgroup_id may represent the order of the slices in the same layer_group_id. When not present, subgroup_id may be inferred to be 0.

subgroup_bbox_origin specifies the origin of the subgroup bounding box of the subgroup indicated by subgroup_id of the layer-group indicated by layer_group_id.

subgroup_bbox_size indicates the size of the subgroup bounding box of the subgroup indicated by subgroup_id of the layer-group indicated by layer_group_id.

ref layer_group_id specifies the identifier of the reference layer-group. ref_layer_group_id may be in the range of 0 to num_layer_group_minus1 of the current frame or the current tile.

ref_subgroup_id specifies the identifier of the reference subgroup of the layer-group indicated by ref layer_group_id. ref_subgroup_id may be in the range of 0 to num_subgroup_id_minus1 of the current layer-group. When not present, subgroup_id may be inferred to be 0.

context_reference_indication_flag equal to 1 indicates that the context state (or context information) related to the current dependent slice is inherited by one or more of the followed dependent slices. context_reference_indication_flag equal to 0 indicates that the context state (or context information) related to the current dependent slice is not inherited by any followed dependent slices.

The transmission/reception device/method according to the embodiments may manage the context buffer based on context_reference_indication_flag. When context_reference_indication_flag is equal to 1, the context state of the current dependent slice is stored in the buffer at the end of decoding. When context_reference_indication_flag is equal to 0, the context state of the current dependent slice is not stored in the context buffer.

A dependent slice according to the embodiments may be referred to as a layer-group, subgroup, or slice. The current dependent slice may represent the slice that the transmission/reception device according to the embodiments intends to process (encode or decode).

context_atlas_type may specify, on the context atlas, the context used in coding a slice. The context atlas type may be specified as a context initial value according to content characteristics, and may be configured as init / dense content / sparse content / scant content / LiDAR content, etc.

Layer-group Structure Inventory Syntax

Parameters according to embodiments may be defined in a layer-group structure inventory syntax. The layer-group structure inventory syntax may be defined in the SPS, GPS, APS, TPS, data unit, or data unit header in a bitstream according to embodiments. A slice or slice header according to the embodiments may correspond to a data unit or data unit header.

lgsi_seq_parameter_set_id indicates the value of sps_seq_parameter_set_id. It is the requirement of bitstream conformance that lgsi_seq_parameter_set_id is equal to 0.

lgsi_frame_ctr_lsb_bits indicates the length in bits of the syntax element lgsi_frame_ctr_lsb..

lgsi_frame_ctr_lsb specifies the least significant bits of lgsi_frame_ctr_lsb_bits of FrameCtr in which the group structure inventory is valid. The layer group structure inventory is valid until it is replaced with another layer group structure inventory.

lgsi_num slice_ids_minus1 plus 1 may indicate the number of slices in the layer group structure inventory.

gi slice_id may indicate the slice ID of the sid-th slice in the layer group structure inventory. It is a requirement of bitstream conformance that all values of lgsi_slice_id be unique within the layer group structure inventory.

lgsi_num_layer_groups_minus1 plus 1 indicates the number of layer groups.

lgsi_layer_group_id specifies the indicator of the layer group. lgsi_layer_group_id is in the range of 0 to lgsi_num_layer_groups_minus1.

lgsi_num_layers_minus1 plus 1 specifies the number of coded layers in the slices of the i-th layer-group in the sid-th slice. The total number of coded layers required to decode the n-th layer-group may be equal to the sum of lgsi_num_layers_minus1[sid][i] + 1 for i from 0 to n.

lgsi_num_subgroups_minus1 plus 1 indicates the number of subgroups of the i-th layer-group in the sid-th slice.

lgsi_subgroup_id specifies the identifier of the layer-group. lgsi_subgroup_id may be in the range of 0 to lgsi_num_subgroups_minus1.

lgsi_parent_subgroup_id specifies the identifier of a subgroup in the layer-group indicated by lgsi_subgroup_id. lgsi_parent_subgroup_id may be in the range of 0 to gi_num_subgroups_minus1 in the layer group indicated by lgsi_subgroup_id.

lgsi_subgroup_bbox_origin and lgsi_subgroup_bbox_size indicate the bounding box of the current subgroup.

lgsi_subgroup_bbox_origin indicates the origin of the subgroup bounding box of the subgroup indicated by lgsi_subgroup_id of the layer group indicated by lgsi_layer_group_id.

lgsi_subgroup_bbox_size indicates the size of the subgroup bounding box of the subgroup indicated by lgsi_subgroup_id of the layer group indicated by lgsi_layer_group_id.

lgsi_origin_bits_minus plus 1 may indicate the length in bits of the shintax element lgsi_origin_xyz.

lgsi_origin_xyz indicates the origin of all partitions. The value of lgsi origin_>cyz[k] may be equal to sps_bounding_box_offset[ k ].

lgsi origin_log2 scale may indicate the scaling factor for scaling the components of lgsi origin_>cyz. The value of lgsi origin_log2_scale may be equal to sps_bounding_box offset_log2 scale.

FIG. 38 illustrates a point cloud data transmission device/method according to embodiments.

The point cloud data transmission device/method according to the embodiments may correspond to the transmission device 10000, point cloud video encoder 10002, and transmitter 10003 of FIG. 1, the acquisition 20000/encoding 20001/transmission 20002 of FIG. 2, the encoder of FIG. 4, the transmission device of FIG. 12, the device of FIG. 14, the encoders of FIGS. 15 and 38 to 44, the transmission method of FIG. 45, and the like. Each of the components of FIG. 38 may correspond to hardware, software, a processor, and/or a combination thereof.

Hereinafter, the components of the transmission/reception device/method according to the embodiments will be described. Each of the components may correspond to a processor, software, or hardware. Further, the components may be combined with a PCC transmission/reception side structure and/or signaling information.

FIG. 38 illustrates an embodiment of detailed functional components for encoding/transmitting PCC data is illustrated. Once the point cloud data is input, the encoder may encode position information (geometry data) (e.g., XYZ coordinates, phi-theta coordinates, etc.) and attribute information (attribute data) (e.g., color, reflectance, intensity, grayscale, opacity, medium, material, glossiness, etc.), respectively. The compressed data is divided into units for transmission. The data may be packed by a sub-bitstream generator 38010 into units suitable for selecting necessary information in a bitstream unit based on layering structure information.

In some embodiments, when different types of bitstreams are included in a single slice, the encoder may separate the generated bitstreams (AEC bitstream or DC bitstream) according to their purpose. Then, depending on the layer group information, the respective slices or neighboring information may be included in one slice. Then, information such as a bitstream type, bitstream_offset, bitstream_length, and bitstream direction, along with layer-group information, layer information included in the layer-group, the number of nodes, layer depth information, the number of nodes included in the sub-group, may be delivered by a metadata generator 38006 according to the respective slice IDs.

When point cloud data is input to the transmission device according to the embodiments, a geometry encoder 38002 encodes position information (geometry data) (e.g., XYZ coordinates, phi-theta coordinates, etc.) and an attribute encoder 38004 encodes attribute information (attribute data) (e.g., color, reflectance, intensity, grayscale, opacity, medium, material, glossiness, etc.).

The compressed (encoded) data is divided into units for transmission. The data may be packed by the sub-bitstream generator 38010 into units suitable for selecting necessary information in a bitstream unit based on layering structure information.

According to embodiments, the octree-coded geometry bitstream is input to an octree-coded geometry bitstream segmentation part 38011, and the direct-coded geometry bitstream is input to a direct coded geometry bitstream segmentation part 38012.

The octree-coded geometry bitstream segmentation part 38011 divides the octree-coded geometry bitstream into one or more groups and/or subgroups based on information about the segmented (separated) slices generated by a layer-group structure generation part 38014 and/or information related to direct coding.

Also, the direct-coded geometry bitstream segmentation part 38012 divides the direct-coded geometry bitstream into one or more groups and/or subgroups based on information about the segmented (separated) slices generated by the layer-group structure generation part 38014 and/or information related to direct coding.

The output of the octree-coded geometry bitstream segmentation part 38011 and the output of the direct-coded geometry bitstream segmentation part 38012 are input to the geometry bitstream bonding part 38013.

The geometry bitstream bonding part 38013 performs a geometry bitstream bonding operation based on information about the segmented (separated) slices generated by the layer-group structure generation part 38014 and/or information related to direct coding and outputs sub-bitstreams to the segmented slice generation part on a layer-group basis. For example, the geometry bitstream bonding part 38013 concatenate an AEC bitstream and a DC bitstream in a single slice. Final slices are created by the geometry bitstream bonding part.

A coded attribute bitstream segmentation part 38015 divides the coded attribute bitstream into one or more groups and/or subgroups based on the information about the segmented (separated) slices generated by the layer-group structure generation part 38014 and/or the information related to direct coding. The one or more groups and/or subgroups for the attribute information may be associated with the one or more groups and/or subgroups for the geometry information, or may be generated independently.

A segmented slice generation part 38016 receives inputs from the geometry bitstream bonding part 38013 and/or the coded attribute bitstream segmentation part 38015, and segments a single slice into multiple slices based on the information about the segmented (separated) slices generated by the metadata generator 38006 and/or the information related to direct coding. Each sub-bitstream is transmitted through each slice segment. In this case, the AEC bitstream and the DC bitstream may be transmitted through one slice, or may be transmitted through different slices.

A multiplexer 38008 multiplexes the output of the segmented slice generation part 38016 and the output of the metadata generator 38006 layer by layer and outputs the multiplexing result to the transmitter 38009.

When different types of bitstreams (e.g., AEC bitstream and DC bitstream) are included in a slice, the geometry encoder 38002 may separate the generated bitstreams (e.g., AEC bitstream and DC bitstream) according to their purpose. Then, each slice or neighboring information may be included in one slice according to the information about the segmented (separated) slices generated by the layer-group structure generation part 38014 and/or the metadata generator 38006 and/or the information related to direct coding (i.e., layer-group information). According to embodiments, information about the segmented (separated) slices and/or information related to direct coding (e.g., information such as bitstream type, bitstream_offset, bitstream_length, and bitstream direction along with layer-group information, layer information included in the layer-group, the number of nodes, layer depth information, and the number of nodes included in the sub-group according to each slice id) may be delivered. The information about the segmented (separated) slices and/or information related to direct coding (e.g., information such as bitstream type, bitstream_offset, bitstream_length, and bitstream direction along with layer-group information, layer information included in the layer-group, the number of nodes, layer depth information, and the number of nodes included in the sub-group according to each slice id) may be signaled in the SPS, APS, GPS, geometry data unit header, attribute data unit header, or SEI message, etc.

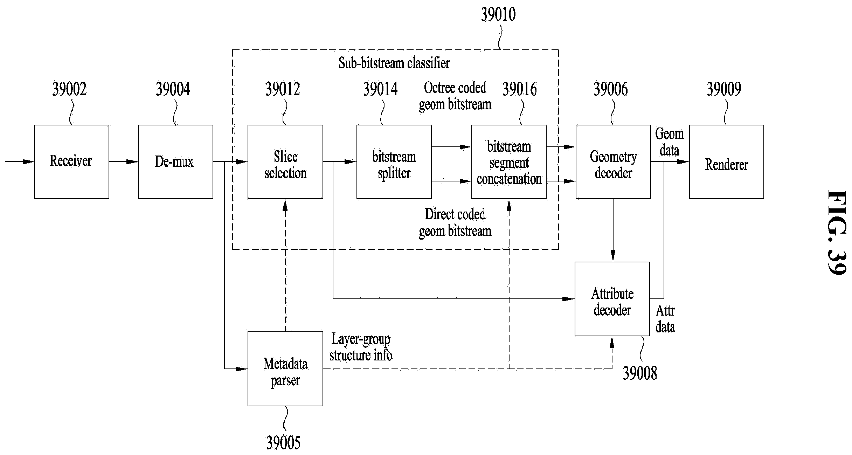

FIG. 39 illustrates a point cloud data reception device/method according to embodiments.

The operation of each component of the reception device/method of FIG. 39 may conform to the operation or reverse operation of the corresponding component of the transmission device/method of FIG. 38.

The point cloud data reception device/method according to the embodiments of FIG. 39 may correspond to the reception device 10004 of FIG. 1, the receiver 10005 of FIG. 1, the point cloud video decoder 10006 of FIG. 1, the transmission 20002/decoding 20003/rendering 20004 of FIG. 2, the decoder of FIGS. 10 and 11, the reception device of FIG. 13, the device of FIG. 14, the decoders of FIGS. 15 and 38 to 44, the reception device/method of FIG. 46, and the like. Each of the components of FIG. 39 may correspond to hardware, software, a processor, and/or a combination thereof.

FIG. 39 illustrates an embodiment of detailed functional components for receiving/decoding PCC data. When a bitstream is input, the reception device according to the embodiments may classify and process the bitstream for position information and the bitstream for attribute information. Then, a sub-bitstream classifier 39010 may pass the bitstreams to appropriate decoders based on the information in the bitstream header. Alternatively, it may select layers required by the receiver in the process. Geometry data and attribute data may be reconstructed from the classified bitstreams by a geometry decoder 39006 and an attribute decoder 39008, respectively, based on the characteristics of the data, and then transcoded to a format for final output by a renderer 39009.

When different kinds of geometry bitstreams are included, each bitstream may be decoded separately through a bitstream splitter 39014, as described below. In an embodiment of the present disclosure, an octree coding-based arithmetic entropy coded bitstream and a direct coded bitstream may be distinguished and processed by the geometry decoder. They may be separated based on information about the bitstream type, bitstream_offset, bitstream_length, and bitstream direction. For the separated bitstreams, an operation of concatenating (or connecting) bitstream segments of the same type may be included. It may be included as a process for processing bitstreams separated by layer-group into a contiguous bitstream, and the bitstreams may be arranged in order based on the layer-group information. When the bitstreams are processible in parallel, they may be processed by the decoder without the concatenation operation.

A receiver 39002 may receive a bitstream.

A demultiplexer 39004 may output point cloud data and metadata (signaling information) contained in the bitstream.

A sub-bitstream classifier 39010 may select slices, split the bitstream, and concatenate bitstream segments of the octree-coded geometry bitstream and the direct coded geometry bitstream.

A metadata parser 39005 may provide information about a slice and/or a layer-group.

A slice selector 39012 may select one or more slices contained in the bitstream.

A bitstream splitter 39014 may split the geometry bitstream. The geometry data may be encoded based on an octree and/or directly coded.

A bitstream segment concatenation part 39016 may concatenate each of the octree-coded geometry bitstream and the direct-coded geometry bitstream based on the encoding type. For the layer-group based geometry bitstream, bitstream segments including a plurality of groups/subgroups related to a decoding region may be concatenated.

A geometry decoder 39006 may decode the geometry bitstream and output geometry data.

An attribute decoder 39008 may decode the attribute data contained in the selected slice.

A renderer 39009 may render the point cloud data based on the geometry data and/or attribute data.

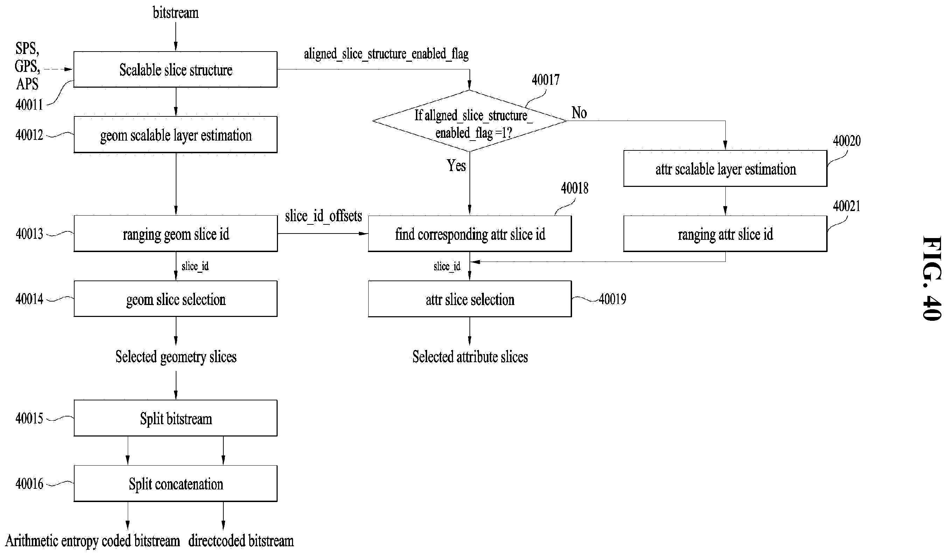

FIG. 40 illustrates a point cloud data reception method according to embodiments.

FIG. 40 illustrates in more detail the operation of the sub-bitstream classifier 39010 shown in FIG. 39.

The reception device receives the data per slice and the metadata parser delivers the parameter set information (e.g., information about the segmented (separated) slices and/or information related to direct coding) in the SPS, GPS, APS, TPS, etc. Based on the delivered information, it is determined whether the data is scalable. When the data is scalable, a slice structure for scalable transmission is determined (40011), as shown in FIG. 40. First, the geometry slice structure may be determined based on the information such as num scalable_layers, scalable_layer_id, tree_depth_start, tree_depth_end, node_size, num_nodes, num_slices_in_scalable_layer, slice_id, etc. delivered through the GPS.

When aligned_slice_structure_enabled_flag is equal to 1 (40017), the attribute slice structure may also be determined (e.g., when the geometry is based on an octree, the attributes are encoded based on scalable LoD or scalable RAHT, and the geometry/attribute slice pairs generated by the same slice partitioning have the same number of nodes for the same octree layer).

When the structure is the same, the range of the geometry slice id is determined according to the target scalable layer, the range of the attribute slice id is determined by slice_id_offset, and a geometry/attribute slice is selected according to the determined range (40012 to 40014, 40018, and 40019).

When aligned_slice_sturcutre_enabled_flag = 0, the attribute slice structure may be separately identified based on the information such as num scalable_layers, scalable_layer_id tree_depth_start, tree_depth_end, node_size, num_nodes, num slices_in scalable_layer, and slice_id delivered through the APS, and the range of the required range of attribute slice id may be limited according to the scalable purpose. Based on this, the required slice may be selected through each slice id before reconstruction (40020, 40021, and 40019). The geometry/attribute slice selected through the above-decribed opertions is delivered to the reception device according to the embodiments as input.

A decoding process according to a slice structure based on scalable transmission or scalable selection of the receiver has been described above. When scalable_transmission_enabled_flag is equal to 0, the process may also be used for a non-scalable process by omitting the operations of ranging geom/attribute slice id and selecting the entire slices. Even in this case, information about the preceding slice (e.g., the slice belonging to a higher layer or the slice specified by ref_slice_id) may be used through slice structure information delivered through a parameter set such as SPS, GPS, APS, or TPS.

As described above, a bitstream may be received based on the scalable transmission, and the scalable bitstream structure may be identified based on the parameter information contained in the bitstream. The geometry scalable layer may be estimated.

A geometry slice may be identified based on a geometry slice id. A geometry slice may be selected based on the slice id. The decoder may decode the selected geometry slice.

When aligned_slice_sturcutre_enabled_flag contained in the bitstream is equal to 1, an attribute slice id corresponding to the geometry slice may be identified. The attribute slice may be accessed based on slice_id_offset.

An attribute slice may be selected based on the slice id. The decoder may decode the selected attribute slice. When aligned_slice_sturcutre_enabled_flag is not equal to 1, the attribute scalable layer may be estimated. The attribute slice may be identified based on the attribute slice id. An attribute slice may be selected based on the slice id.

In some embodiments, when there are different types of geometry bitstreams (e.g., AEC bitstream, DC bitstream), all slices that are in a range may be selected for the different bitstreams in the slice selection operation. When different types of bitstreams are contained in a slice, each bitstream may be separated based on the offset and length information, and the separated bitstreams may be concatenated into a single bitstream in layer-group order for decoding. It may be included as a process for processing bitstreams separated by layer-group into a contiguous bitstream, and the bitstreams may be arranged in order based on the layer-group information. When the bitstreams are processible in parallel, they may be processed by the reception device according to the embodiments without the concatenation operation.

The transmission device according to the embodiments may have the following effects.

For point cloud data, compressed data may be divided and transmitted according to specific criteria. When layered coding is used according to embodiments, the compressed data may be divided according to layers and transmitted. Thus, the storage and transmission efficiency at the transmitting side may be increased.

The transmission/reception device/method according to the embodiments may compress geometry and attributes of a point cloud for service. In a PCC-based service, the compression rate or number of data may be adjusted based on the receiver performance or transmission environment.

If the receiver performance or transmission environment changes while point cloud data is configured in slices, it is necessary to either 1) pre-transcode the bitstream according to each environment and store the same separately and select the same at the time of transmission, or 2) perform transcoding before transmission. When the number of receiver environments that need to be supported increases or the transmission environment frequently changes, storage space or delay caused by transcoding may become an issue.

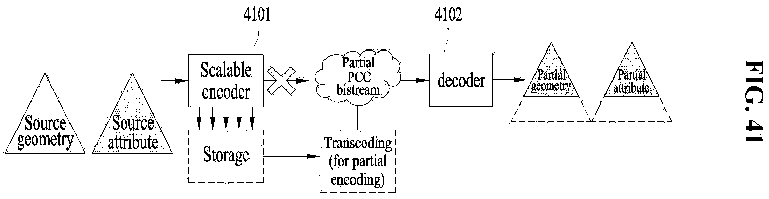

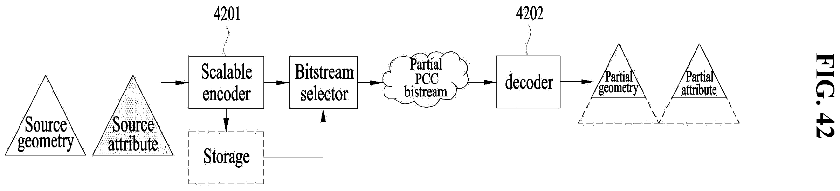

FIGS. 41 and 42 illustrate devices/methods for transmitting/receiving point cloud data according to embodiments.

The point cloud data transmission/reception device/method according to the embodiments may correspond to the transmission device 10000 and reception device 10004 of FIG. 1, the point cloud video encoder 10002, the transmitter 10003, the point cloud video decoder 10006, the receiver 10005, the acquisition 20000/encoding 20001/transmission 20002 of FIG. 2, the decoding 20003 of FIG. 2, the rendering 20004, the encoder of FIG. 4, the reception device of FIG. 11, the transmission device of FIG. 12, the reception device of FIG. 13, the device of FIG. 14, the encoder or decoder of FIG. 15, the encoder or decoder shown in FIGS. 38 to 44, the transmission method of FIG. 45, or the reception method of FIG. 46, or may correspond to any combination of the devices/methods shown in the figures. When layered coding is used, the point cloud data transmission/reception device/method according to the embodiments may divide and transmit compressed data according to layers, thereby increasing storage and transmission efficiency at the transmitting side. Each of the components in FIGS. 41 and 42 may correspond to hardware, software, a processor, a module, and/or a combination thereof.

The point cloud data transmission/reception device/method according to the embodiments may transmit and receive point cloud data in a PCC-based service by adjusting the compression rate or number of data according to the receiver performance or transmission environment. When the receiver performance or transmission environment changes while the point cloud data is bundled in a single slice, the bitstream may be pre-transcoded for each environment and stored separately to be selected at the time of transmission, or the transcoding may be performed prior to the transmission (see FIG. 41).

Referring to FIG. 42, dividing the compressed data according to layers for transmission may enable only the necessary parts of the the pre-compressed data to be selectively delivered at the bitstream stage without a separate transcoding operation. This is efficient in terms of storage space because only one storage space is needed per stream. It is also efficient in terms of bandwidth because only the necessary layers are selected (by the bitstream selector) before transmission.

The encoder 4201 according to the embodiments may select the necessary portion of the bitstream (bitstream selector). Further, the selected bitstream may be transmitted to the decoder 4202 according to the embodiments. The decoder 4202 may reconstruct the partial geometry and partial attributes based on the received bitstream.

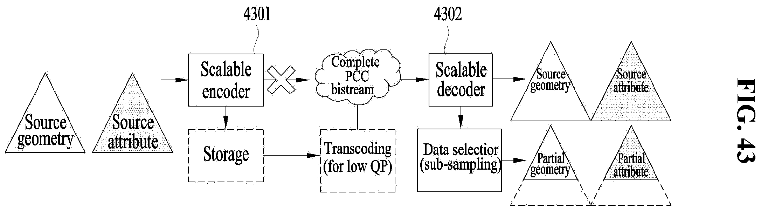

FIG. 43 illustrates devices/methods for transmitting and receiving point cloud data according to embodiments.

The point cloud data transmission/reception device/method according to the embodiments may correspond to the transmission device 10000 and reception device 10004 of FIG. 1, the point cloud video encoder 10002, the transmitter 10003, the point cloud video decoder 10006, the receiver 10005, the acquisition 20000/encoding 20001/transmission 20002 of FIG. 2, the decoding 20003 of FIG. 2, the rendering 20004, the encoder of FIG. 4, the reception device of FIG. 11, the transmission device of FIG. 12, the reception device of FIG. 13, the device of FIG. 14, the encoder or decoder of FIG. 15, the encoder or decoder shown in FIGS. 38 to 44, the transmission method of FIG. 45, or the reception method of FIG. 46, or may correspond to any combination of the devices/methods shown in the figures. When layered coding is used, the point cloud data transmission/reception device/method according to the embodiments may divide and transmit compressed data according to layers, thereby increasing storage and transmission efficiency at the transmitting side. Each of the components in FIG. 43 may correspond to hardware, software, a processor, a module, and/or a combination thereof. Additionally, the point cloud data may be segmented to be transmitted and received as shown in FIG. 43.

Embodiments include dividing and transmitting compressed data according to specific criteria for a point cloud. When layered coding is used, the compressed data may be divided according to layers and transmitted, which may increase efficiency at the receiving side.

FIG. 43 illustrates the operations at the transmitting side and receiving side in the case of transmitting layered point cloud data. In this case, when information enabling the entire point cloud data to be reconstructed is delivered regardless of the receiver performance the receiver needs to reconstruct the point cloud data through decoding and then perform an operation (data selection or subsampling) of selecting only the data corresponding to the required layer. In this case, since the bitstream is to be pre-decoded, a delay may occur in the receiver aiming at low-latency, or the data may not be decoded depending on the receiver performance.

In some embodiments, when the bitstream is divided into slices and delivered, the receiver may selectively pass the bitstream to the decoder based on the decoder performance or the density of the point cloud data to be represented, depending on the application. In this case, the selection is performed prior to the decoding, which may increase decoder efficiency and support decoders of different performance. In other words, the transmission device and reception device according to the embodiments may select bitstreams to transmit and receive, and reconstruct the selected bitstreams, thereby supporting decoders of different performance.

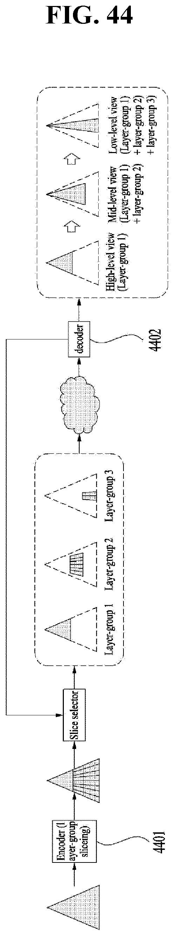

FIG. 44 illustrates devices/methods for transmitting and receiving point cloud data according to embodiments.

Referring to FIG. 44, multi-resolution ROIs may be supported by the scalability and spatial accessibility of hierarchical slicing. In FIG. 44, an encoder 4401 may generate spatial subgroups of each layer group or bitstream slices of octree layer groups. Upon request, slices matching the ROI of each resolution are selected and transmitted. The overall bitstream size is reduced compared to the tile-based approach because the bitstream does not contain details except for the requested ROI. At the receiving side, a decoder 4402 may combine the slices to produce three outputs: 1) a high-level view output from layer group slice 1, 2) a mid-level view output from layer group slice 1 and selected subgroups of layer group 2, and 3) a low-level view output with good-quality details from selected subgroups of layer groups 2 and 3 and layer group 1. Since the outputs may be generated progressively, the receiver may provide a zooming-like viewing experience with a progressive increase in resolution from the high-level view to the low-level view.

The encoder 4401 is a point cloud encoder according to embodiments and may correspond to a geometry encoder and an attribute encoder. The encoder may slice the point cloud data based on layer groups (or groups). A layer may be referred to as a depth in a tree, a level of LOD, etc. The depth of an octree of geometry and/or the level of an attribute LOD layer, for example, may be split into layer groups (or subgroups).

A slice selector, in connection with the encoder 4401, may select partitioned slices (or sub-slices) and selectively and partially transmit point cloud data such as layer group 1 to layer group 3.

The decoder 4402 may decode the selectively and partially transmitted point cloud data. For example, the decoder may decode a high-level view for layer group 1 (high depth/layer/level or index 0, close to the root). The decoder may decode a mid-level view based on layer group 1 and layer group 2 with an increased depth/level index than layer group 1 alone. The low-level view may be decoded based on layer group 1 to layer group 3.

FIG. 45 illustrates a method of transmitting point cloud data according to embodiments.

The method of transmitting point cloud data according to the embodiments may include encoding point cloud data (S4500) and transmitting a bitstream containing the point cloud data (S4501).

The encoding operation and the transmitting operation according to the embodiments may be performed by the transmission device 10000, point cloud video encoder 10002, and transmitter 10003 of FIG. 1, the acquisition 20000/encoding 20001/transmission 20002 of FIG. 2, the encoder of FIG. 4, the transmission device of FIG. 12, the device of FIG. 14, the encoder of FIG. 15, and the encoder illustrated in FIGS. 38 to 44.

Referring to FIGS. 15 to 23, the point cloud data includes groups grouped based on layers. The layers may include layers for a level of detail (LOD), octree structure, or other tree structure. The groups may be formed by grouping a plurality of layers. A group may be further divided into one or more subgroups. One or more layer groups and subgroups may be matched with a slice. The layer group and subgroup may refer to higher and lower levels of a group, but may all be referred to as groups in the ordinary sense representing a bundle of point cloud data.

The encoding of the point cloud data according to the embodiments may include generating a tree structure of the point cloud data, and grouping the point cloud data based on layers of the tree structure. Also, the encoding of the point cloud data according to the embodiments may include encoding the grouped point cloud data based on context information, as shown in FIGS. 24 to 28.

The transmission method according to the embodiments may include generating an octree or a tree structure with depths, layers, and LODs. The transmission method may include grouping the layers of the point cloud data into layer groups, and grouping the layers into subgroups within a layer group.

In the encoding of the point cloud data according to the embodiments, a plurality of groups may be encoded based on context information. Specifically, the encoding of the point cloud data may include, based on context information related to a first group, encoding a second group, and storing context information related to the second group. The first group and the second group may represent arbitrary groups of point cloud data formed by grouping based on layers of a tree structure. Here, the first group may be a group corresponding to a higher layer than the second group. In other words, the first group may include data corresponding to a parent of point cloud data belonging to the second group. Specifically, the first group may be a group containing parent nodes, and the second group may be a group containing child nodes. Alternatively, the first group may be a group including data sampled from the data belonging to the second group.

Referring to FIGS. 24 to 28, the encoding of the point cloud data may include encoding a current group based on context information related to a previous group. In encoding the groups (or layer groups, subgroups, or slices, etc.), indicated as FGS in FIGS. 24 to 28, the current group may be encoded by referencing context information stored (by Save Contexts[n]) in the previous group by loading context information (Load Context[n]). The previous group may be identified based on signaling information.

Further, referring to FIGS. 24 to 28, the encoding of the point cloud data according to the embodiments may include storing the context information related to the referenced group in a buffer. In this case, only the context information related to the root group may be stored in the buffer, and the other groups may be encoded with reference to the context information related to the root group.

The bitstream according to the embodiments may contain signaling information generated according to the encoding of the point cloud data.

The bitstream according to the embodiments may contain reference group information for identifying the group that a specific group references. The bitstream according to the embodiments may further contain reference context group information for identifying a group having a context referenced by the specific group. The reference context group information may be information for identifying a group that corresponds to a higher layer than the specific group. The transmission method according to the embodiments may include encoding a child group by referencing the context information related to a parent group.

Referring to FIGS. 34 to 37, the bitstream may contain flag information (dependent_slice_flag) indicating dependency of the current group. The flag information equal to 1 indicates that the current group is dependent on another group. Accordingly, the encoding according to the embodiments may include encoding the current group based on the context information related to the previous group according to the flag information.

The bitstream may contain reference group information indicating a group referenced by the current group. The bitstream may further contain reference context group information indicating a group having a context referenced by the current group in encoding the current group. In encoding the current group, the previous group for reference may be identified by the reference group information or the reference context group information.

The reference group information may indicate identification of a group that is referenced to encode or decode the current group. The reference context group information may indicate the identification of a group having a context referenced to encode or decode the current group. The point cloud data belonging to the reference context group may correspond to a parent level of the point cloud data belonging to the current group.

Further, the bitstream according to the embodiments may contain first information indicating whether context information related to a specific group is inherited. Here, the first information may represent context_reference_indication_flag. When context_reference_indication_flag is equal to 1, the context information related to the specific group is inherited for other groups, and accordingly the transmission/reception device according to the embodiments may store the context information related to the specific group in a buffer. When context_reference_indication_flag is equal to 0, the context information related to the specific group is not inherited for other groups, and thus the context information does not need to be stored in the buffer. Accordingly, the memory of the buffer may be managed efficiently.

Further, the bitstream according to the embodiments may contain second information indicating whether a plurality of groups references the context of a specific group. The second information may represent root_layer_group context_reference enabled flag. When root_layer_group context_reference enabled flag is equal to 1, other groups reference the context information related to the root group. Therefore, only the context information related to the root group is stored in the buffer, and thus the memory of the buffer may be saved. When multiple groups reference the context of the specific group, the specific group is not limited to the root group, but may correspond to any other group. In other words, multiple groups may reference any one group at the same time, and thus the memory of the buffer may be efficiently managed.

The transmission/reception device/method according to the embodiments may transmit information indicating a group whose context is referenced. Thus, not only a previously encoded/decoded group or slice or the like may be referenced, but also the context related to a highly relevant group or slice that is in a parent-child relationship may be referenced. Thereby, encoding/decoding efficiency may be enhanced. Furthermore, the memory of the buffer may be managed efficiently by allowing multiple groups to reference the context of a specific group or by signaling whether to store the context for every group.

A transmission device corresponding to the transmission method according to the embodiments may include an encoder configured to encode point cloud data and a transmitter configured to transmit a bitstream containing the point cloud data.

The encoder may generate a tree structure of the point cloud data, and group the point cloud data into a plurality of groups based on layers of the tree structure. Also, the encoder may encode the point cloud data by referencing context information between the plurality of groups, and the transmission device may further include a buffer configured to store context information related to a referenced group.

The buffer may store only the context information related to a specific group, or only the context information related to the referenced group, as described above. Thereby, the memory may be efficiently managed.

FIG. 46 illustrates a method of receiving point cloud data according to embodiments.

The reverse of the operations described with reference to FIG. 45 may be applied to the method of receiving point cloud data according to the embodiments.

The method of receiving point cloud data according to the embodiments of FIG. 46 may correspond to the reception device 10004 of FIG. 1, the receiver 10005 of FIG. 1, the point cloud video decoder 10006 of FIG. 1, the transmission 20002/decoding 20003/rendering 20004 of FIG. 2, the decoder of FIGS. 10 and 11, the reception device of FIG. 13, the device of FIG. 14, the decoders of FIGS. 15 and 38 to 44, the reception device/method of FIG. 46, and the like. Each of the components of FIG. 39 may correspond to hardware, software, a processor, and/or a combination thereof.

The method of receiving point cloud data according to the embodiments may include receiving a bitstream containing point cloud data (S4600) and decoding the point cloud data (S4601).

Referring to FIGS. 15 to 23, the point cloud data includes groups grouped based on layers. The layers may include layers for a level of detail (LOD), octree structure, or other tree structure. The groups may be formed by grouping a plurality of layers. A group may be further divided into one or more subgroups. One or more layer groups and subgroups may be matched with a slice. The layer group and subgroup may refer to higher and lower levels of a group, but may all be referred to as groups in the ordinary sense representing a bundle of point cloud data.

The decoding of the point cloud data according to embodiments may include generating a tree structure of the point cloud data, and grouping the point cloud data based on layers of the tree structure. Further, the decoding of the point cloud data may include decoding the grouped point cloud data based on context information, as shown in FIGS. 24 to 28.

The reception method according to the embodiments may include generating an octree or a tree structure with depths, layers, and LODs. The reception method may include grouping the layers of the point cloud data into layer groups, and grouping the layers into subgroups within a layer group.

In the decoding of the point cloud data according to the embodiments, a plurality of groups may be decoded based on context information. Specifically, the decoding of the point cloud data may include, based on context information related to a first group, decoding a second group, and storing context information related to the second group. The first group and the second group may represent arbitrary groups of point cloud data formed by grouping based on layers of a tree structure. Here, the first group may be a group corresponding to a higher layer than the second group. In other words, the first group may include data corresponding to a parent of point cloud data belonging to the second group. Specifically, the first group may be a group containing parent nodes, and the second group may be a group containing child nodes. Alternatively, the first group may be a group including data sampled from the data belonging to the second group.

Referring to FIGS. 24 to 28, the decoding of the point cloud data may include decoding a current group based on context information related to a previous group. In decoding the groups (or layer groups, subgroups, or slices, etc.), indicated as FGS in FIGS. 24 to 28, the current group may be decoded by referencing context information stored (by Save Contexts[n]) in the previous group by loading context information (Load Context[n]). The previous group may be identified based on signaling information.

Further, referring to FIGS. 24 to 28, the decoding of the point cloud data according to the embodiments may include storing the context information related to the referenced group in a buffer. In this case, only the context information related to the root group may be stored in the buffer, and the other groups may be decoded with reference to the context information related to the root group.

In the decoding of the point cloud data according to the embodiments, a plurality of groups may be decoded based on context information. Specifically, the decoding of the point cloud data may include, based on the context information related to a first group, decoding a second group, and storing context information related to the second group. The first group and the second group may represent arbitrary groups of point cloud data formed by grouping based on layers of a tree structure. Here, the first group may be a group corresponding to a higher layer than the second group. In other words, the first group may include data corresponding to a parent of point cloud data belonging to the second group. Specifically, the first group may be a group containing parent nodes, and the second group may be a group containing child nodes. Alternatively, the first group may be a group including data sampled from the data belonging to the second group.

Referring to FIGS. 24 to 28, the decoding of the point cloud data may include encoding a current group based on context information related to a previous group. In encoding the groups (or layer groups, subgroups, or slices, etc.), indicated as FGS in FIGS. 24 to 28, the current group may be decoded by referencing context information stored (by Save Contexts[n]) in the previous group by loading context information (Load Context[n]). The previous group may be identified based on signaling information.

Further, referring to FIGS. 24 to 28, the decoding of the point cloud data according to the embodiments may include storing the context information related to the referenced group in a buffer. In this case, only the context information related to the root group may be stored in the buffer, and the other groups may be decoded with reference to the context information related to the root group.

The bitstream according to the embodiments may contain signaling information for decoding the point cloud data.

The bitstream may contain flag information (dependent_slice_flag) indicating dependency of the current group. The flag information equal to 1 indicates that the current group is dependent on another group. Accordingly, the decoding according to the embodiments may include decoding the current group based on the context information related to the previous group according to the flag information.

The bitstream may contain reference group information indicating a group referenced by the current group. The bitstream may further contain reference context group information indicating a group having a context referenced by the current group in decoding the current group. In decoding the current group, the previous group for reference may be identified by the reference group information or the reference context group information.

The reference group information may indicate identification of a group that is referenced to encode or decode the current group. The reference context group information may indicate the identification of a group having a context referenced to encode or decode the current group. The point cloud data belonging to the reference context group may correspond to a parent level of the point cloud data belonging to the current group.

The bitstream according to the embodiments may contain reference group information for identifying the group that a specific group references. The bitstream according to the embodiments may further contain reference context group information for identifying a group having a context referenced by the specific group. The reference context group information may be information for identifying a group that corresponds to a higher layer than the specific group. The transmission method according to the embodiments may include encoding a child group by referencing the context information related to a parent group.

Referring to FIGS. 34 to 37, the bitstream may contain flag information (dependent_slice_flag) indicating dependency of the current group. The flag information equal to 1 indicates that the current group is dependent on another group. Accordingly, the decoding according to the embodiments may include decoding the current group based on the context information related to the previous group according to the flag information.

The bitstream may contain reference group information indicating a group referenced by the current group. The bitstream may further contain reference context group information indicating a group having a context referenced by the current group in decoding the current group. In decoding the current group, the previous group for reference may be identified by the reference group information or the reference context group information.

The reference group information may indicate identification of a group that is referenced to encode or decode the current group. The reference context group information may indicate the identification of a group having a context referenced to encode or decode the current group. The point cloud data belonging to the reference context group may correspond to a parent level of the point cloud data belonging to the current group.

Further, the bitstream according to the embodiments may contain first information indicating whether context information related to a specific group is inherited. Here, the first information may represent context_reference_indication_flag. When context_reference_indication_flag is equal to 1, the context information related to the specific group is inherited for other groups, and accordingly the transmission/reception device according to the embodiments may store the context information related to the specific group in a buffer. When context_reference_indication_flag is equal to 0, the context information related to the specific group is not inherited for other groups, and thus the context information does not need to be stored in the buffer. Accordingly, the memory of the buffer may be managed efficiently.

The decoding of the point cloud data may include storing the context information related to the first group in a buffer in response to the first information.

Further, the bitstream according to the embodiments may contain second information indicating whether a plurality of groups references the context of a specific group. The second information may represent root_layer_group context_reference enabled flag. When root_layer_group context_reference enabled flag is equal to 1, other groups reference the context information related to the root group. Therefore, only the context information related to the root group is stored in the buffer, and thus the memory of the buffer may be saved. When multiple groups reference the context of the specific group, the specific group is not limited to the root group, but may correspond to any other group.

In other words, multiple groups may reference any one group at the same time, and thus the memory of the buffer may be efficiently managed.

The decoding of the point cloud data may include decoding the plurality of groups by referencing the context information related to the first group in response to the second information.

The transmission/reception device/method according to the embodiments may transmit information indicating a group whose context is referenced. Thus, not only a previously encoded/decoded group or slice or the like may be referenced, but also the context related to a highly relevant group or slice that is in a parent-child relationship may be referenced. Thereby, encoding/decoding efficiency may be enhanced. Furthermore, the memory of the buffer may be managed efficiently by allowing multiple groups to reference the context of a specific group or by signaling whether to store the context for every group.

A reception device corresponding to the reception method according to the embodiments may include a receiver configured to receive point cloud data and a decoder configured to decode the point cloud data.

In this case, the decoder may generate a tree structure of the point cloud data, and group the point cloud data into a plurality of groups based on layers of the tree structure. Also, the decoder may decode the point cloud data by referencing context information between the plurality of groups, and the device may further include a buffer configured to store context information related to a referenced group.

The buffer may store only the context information related to a specific group, or only the context information related to the referenced group, as described above. Thereby, the memory may be efficiently managed.

Various elements of the devices of the embodiments may be implemented by hardware, software, firmware, or a combination thereof. Various elements in the embodiments may be implemented on a single chip, for example, a single hardware circuit. According to embodiments, embodiments may optionally be implemented on separate chips. According to embodiments, at least one of the components of the embodiments may be implemented within one or more processors that include instructions to perform operations according to the embodiments.

The operations according to the embodiments may be performed by a transmission device and/or a reception device according to embodiments. The transmission/reception device may include a transmitter/receiver configured to transmit or receive media data, a memory configured to store instructions (program code, algorithms, flowcharts, and/or data) for the processes according to embodiments, and a processor configured to control the operations of the transmission/reception device.

The processor may be referred to as a controller or the like, and may correspond to, for example, hardware, software, and/or a combination thereof. The operations according to the embodiments described above may be performed by the processor. Further, the processor may be implemented as an encoder/decoder or the like for the operations of the embodiments described above.

The embodiments have been described in terms of a method and/or a device, and the description of the method and the description of the device may be applied complementary to each other.

Although the accompanying drawings have been described separately for simplicity, it is possible to design new embodiments by combining the embodiments illustrated in the respective drawings. Designing a recording medium readable by a computer on which programs for executing the above-described embodiments are recorded as needed by those skilled in the art also falls within the scope of the appended claims and their equivalents. The devices and methods according to embodiments may not be limited by the configurations and methods of the embodiments described above. Various modifications can be made to the embodiments by selectively combining all or some of the embodiments. Although preferred embodiments have been described with reference to the drawings, those skilled in the art will appreciate that various modifications and variations may be made in the embodiments without departing from the spirit or scope of the disclosure described in the appended claims. Such modifications are not to be understood individually from the technical idea or perspective of the embodiments.

Various elements of the devices of the embodiments may be implemented by hardware, software, firmware, or a combination thereof. Various elements in the embodiments may be implemented by a single chip, for example, a single hardware circuit. According to embodiments, the components according to the embodiments may be implemented as separate chips, respectively. According to embodiments, at least one or more of the components of the device according to the embodiments may include one or more processors capable of executing one or more programs. The one or more programs may perform any one or more of the operations/methods according to the embodiments or include instructions for performing the same. Executable instructions for performing the method/operations of the device according to the embodiments may be stored in a non-transitory CRM or other computer program products configured to be executed by one or more processors, or may be stored in a transitory CRM or other computer program products configured to be executed by one or more processors. In addition, the memory according to the embodiments may be used as a concept covering not only volatile memories (e.g., RAM) but also nonvolatile memories, flash memories, and PROMs. In addition, it may also be implemented in the form of a carrier wave, such as transmission over the Internet. In addition, the processor-readable recording medium may be distributed to computer systems connected over a network such that the processor-readable code may be stored and executed in a distributed fashion.

In the present disclosure, "/" and "," should be interpreted as indicating "and/or." For instance, the expression "A/B" may mean "A and/or B." Further, "A, B" may mean "A and/or B." Further, "A/B/C" may mean "at least one of A, B, and/or C." Also, "A/B/C" may mean "at least one of A, B, and/or C." Further, in this specification, the term "or" should be interpreted as indicating "and/or." For instance, the expression "A or B" may mean 1) only A, 2) only B, or 3) both A and B. In other words, the term "or" used in this document should be interpreted as indicating "additionally or alternatively."

Terms such as first and second may be used to describe various elements of the embodiments. However, various components according to the embodiments should not be limited by the above terms. These terms are only used to distinguish one element from another. For example, a first user input signal may be referred to as a second user input signal. Similarly, the second user input signal may be referred to as a first user input signal. Use of these terms should be construed as not departing from the scope of the various embodiments. The first user input signal and the second user input signal are both user input signals, but do not mean the same user input signals unless context clearly dictates otherwise.

The terms used to describe the embodiments are used for the purpose of describing specific embodiments, and are not intended to limit the embodiments. As used in the description of the embodiments and in the claims, the singular forms "a", "an", and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components. As used herein, conditional expressions such as "if" and "when" are not limited to an optional case and are intended to perform the related operation or interpret the related definition according to a specific condition when the specific condition is satisfied.

Operations according to the embodiments described in this specification may be performed by a transmission/reception device including a memory and/or a processor according to embodiments. The memory may store programs for processing/controlling the operations according to the embodiments, and the processor may control various operations described in this specification. The processor may be referred to as a controller or the like. In embodiments, operations may be performed by firmware, software, and/or combinations thereof. The firmware, software, and/or combinations thereof may be stored in the processor or the memory.

The operations according to the above-described embodiments may be performed by the transmission device and/or the reception device according to the embodiments. The transmission/reception device may include a transmitter/receiver configured to transmit and receive media data, a memory configured to store instructions (program code, algorithms, flowcharts and/or data) for the processes according to the embodiments, and a processor configured to control the operations of the transmission/reception device.

The processor may be referred to as a controller or the like, and may correspond to, for example, hardware, software, and/or a combination thereof. The operations according to the above-described embodiments may be performed by the processor. In addition, the processor may be implemented as an encoder/decoder for the operations of the above-described embodiments.

[Mode for Disclosure]

As described above, related details have been described in the best mode for carrying out the embodiments.

[Industrial Applicability]

As described above, the embodiments are fully or partially applicable to a point cloud data transmission/reception device and system. Those skilled in the art may change or modify the embodiments in various ways within the scope of the embodiments. Embodiments may include variations/modifications within the scope of the claims and their equivalents.

**Claims**

1. A method of transmitting point cloud data, the method comprising:

   encoding point cloud data; and
   transmitting a bitstream containing the point cloud data.

2. The method of claim 1, wherein the encoding of the point cloud data comprises:

   generating a tree structure of the point cloud data; and
   grouping the point cloud data into a plurality of groups based on layers of the tree structure.

**3.** The method of claim 2, wherein the encoding of the point cloud data comprises:
encoding the plurality of groups based on context information.

**4.** The method of claim 3, wherein the encoding of the point cloud data comprises:
encoding a group belonging to a lower layer by referencing context information related to a group belonging to a higher layer.

**5.** The method of claim 4, wherein encoding of the point cloud data comprises:
storing the context information related to the referenced group in a buffer.

**6.** The method of claim 5, wherein the bitstream contains first information indicating whether context information related to a specific group is inherited.

**7.** The method of claim 6, wherein the bitstream further contains second information indicating whether a plurality of groups references a context of the specific group.

**8.** A device for transmitting point cloud data, the device comprising:

an encoder configured to encode point cloud data; and
a transmitter configured to transmit a bitstream containing the point cloud data.

**9.** The device of claim 8, wherein the encoder is configured to:

generate a tree structure of the point cloud data; and
group the point cloud data into a plurality of groups based on layers of the tree structure.

**10.** The device of claim 9, wherein the encoder encodes the point cloud data by referencing context information between the plurality of groups,
the device further comprising:
a buffer configured to store context information related to a referenced group.

**11.** A method of receiving point cloud data, the method comprising:

receiving a bitstream containing point cloud data; and
decoding the point cloud data.

**12.** The method of claim 11, wherein the decoding of the point cloud data comprises:

generating a tree structure of the point cloud data; and
grouping the point cloud data into a plurality of groups based on layers of the tree structure.

**13.** The method of claim 12, wherein the decoding of the point cloud data comprises:
decoding the plurality of groups based on context information.

**14.** The method of claim 13, wherein the decoding of the point cloud data comprises:
decoding a group belonging to a lower layer by referencing context information related to a group belonging to a higher layer.

**15.** The method of claim 14, wherein the bitstream contains first information indicating whether context information related to a first group is inherited,
wherein the decoding of the point cloud data comprises:
storing the context information related to the first group in a buffer in response to the first information.

**16.** The method of claim 15, wherein the bitstream further contains second information indicating whether a plurality of groups references the context information related to the first group,
wherein the decoding of the point cloud data comprises:
decoding the plurality of groups by referencing the context information related to the first group in response to the second information.

17. A device for receiving Point cloud data, the device comprising:

a receiver configured to receive a bitstream containing point cloud data; and
a decoder configured to decode the point cloud data.

18. The device of claim 17, wherein the decoder is configured to:

generate a tree structure of the point cloud data; and
group the point cloud data into a plurality of groups based on layers of the tree structure.

19. The device of claim 18, wherein the decoder decodes the point cloud data by referencing context information between the plurality of groups,
the device further comprising:
a buffer configured to store context information related to a referenced group.

## FIG. 1

# FIG. 2

Acquisition (20000) → Ply file -geometry -attribute → Encoding (20001) → Encoded -geometry -attribute bitstream → Transmission (20002) → Decoding (20003) → Decoded -geometry -attribute → Rendering (20004)

Feedback (20005)

Head orientation information, viewport information

Head orientation information, viewport information

EP 4 412 208 A1

FIG. 3

# FIG. 4

# FIG. 5

FIG. 6

# FIG. 7

$$1+2+4+8=15$$

FIG. 8

Level of details

FIG. 9

| Original order | P0, P1, P2, P3, P4, P5, P6, P7, P8, P9 |
|---|---|
| LOD-based order | P0, P5, P4, P2 · P1, P6, P3 · P9, P8, P7 |

LOD0

LOD1

LOD2

FIG. 10

# FIG. 11

geomerty
bitstream

attributes
birsrteam

11000 — Arithmerix decode

Arithmerix decode — 11005

11001 — Synthesize octree

Inverse quantize — 11006

11002 — synthesize surface approximation

11007

11003 — Reconstruct geometry

RAHT

Gnnerate LOD — 11008

Inverse lifring — 11009

11004 — Inverse transform coordinates

Inverse transform colors — 11010

position

attributes

EP 4 412 208 A1

# FIG. 12

EP 4 412 208 A1

# FIG. 13

Receive

| 13000 | Receiver |

| 13001 | Reception processor |

Geometry bitstream    Set value, etc.    Attribute bitstream

13006

| 13002 | Arithmetic decoder |
| | Metadata parser |
| Arithmetic decoder | 13007 |

| 13003 | Occupancy code-based octree reconstruction processor |
| Inverse quantization processor | 13008 |

| 13004 | Surface model processor (triangle reconstruction, up-sampling, voxelization) |
| Prediction /lifting/RAHT inverse transform processor | 13009 |

| 13005 | Inverse quantization processor |
| Color inverse transform processor | 13010 |

Sharing reconstructed position values

| Renderer | 13011 |

65

FIG. 14

# FIG. 15

# FIG. 16

# FIG. 17

Geo data | G | LoD0 | G | R1 | G | R2 |

Attr data | A | LoD0 | A | R1 | A | R2 |

LoD 0

LoD 1

LoD 2

# FIG. 18

# FIG. 19

# FIG. 20

# FIG. 21

Geometry tree structure contained in a single slice

0 (root)
1
2
3
4
5
6
7 (leaf)

Slice

(a)

Geometry tree structure contained in segmented slices

0 (root)
1
2
3
4
5
6
7 (leaf)

| Slice1 | Slice2 | Slice3 |

(b)

# FIG. 22

# FIG. 23

# FIG. 24

24001 FGS 0 (layer-group 0,subgroup 0)
save states

Refer context

24002 FGS 1 (1, 0)
save states

FGS 2 (1, 1)
save states

...

FGS N (1, N-1)
save states

Refer context | Refer context | Refer context

24003 FGS N+1 (2, 0) | FGS N+2 (2, 1) | ... | FGS 2N+1 (2, N-1)

# FIG. 25

25001 FGS 0 (layer-group 0,subgroup 0)
save states

Refer context

25002 FGS 1 (1, 0) | FGS 2 (1, 1) | ... | FGS N (1, N-1)

25003 FGS N+1 (2, 0) | FGS N+2 (2, 1) | ... | FGS 2N+1 (2, N-1)

26001

FGS 0 (layer-group 0,subgroup 0)

save states

<Context buffer>

context states (0,0) —— 26002

FGS 1 (1, 0)  FGS 2 (1, 1)  ⋯  FGS N (1, N-1)

FGS N+1 (2, 0)  FGS N+2 (2, 1)  ⋯  FGS 2N+1 (2, N-1)

(a)

FGS 0 (layer-group 0,sugroup 0)

FGS 1 (1, 0)  FGS 2 (1, 1)  ⋯  FGS N (1, N-1)

FGS N+1 (2, 0)  FGS N+2 (2, 1)  ⋯  FGS 2N+1 (2, N-1)

26003    (b)

Load states
(ref_layer_group_id = 0
ref_subgroup_id = 0)

save states

<Context buffer>

context states (0,0) —— 26004

context states (1,0)

context states (1,1)

FGS 0 (layer-group 0,subgroup 0)

FGS 1 (1, 0)  FGS N (1, N-1)  ⋯  FGS N (1, N-1)

FGS N+1 (2, 0)  FGS N+2 (2, 1)  ⋯  FGS 2N (2, N-1)

26005    (c)

Load states
(ref_layer_group_id = 1
ref_subgroup_id = 1)

<Context buffer>

context states (0,0)

context states (1,0)

context states (1,1) —— 26006

......

context states (1,N-1)

FIG. 26

77

# FIG. 27

**FIG. 28**

28001

| FGS 0 (layer-group 0,subgroup 0) | - - save states - → | <Context buffer> |
|---|---|---|
| | | context states (0,0) — 28002 |

| FGS 1 (1, 0) | FGS 2 (1, 1) | ⋯ | FGS N (1, N-1) |
|---|---|---|---|

| FGS N+1 (2, 0) | FGS N+2 (2, 1) | ⋯ | FGS 2N+1 (2, N-1) |
|---|---|---|---|

(a)

| FGS 0 (layer-group 0,sugroup 0) |
|---|

| FGS 1 (1, 0) | FGS 2 (1, 1) | ⋯ | FGS N (1, N-1) |
|---|---|---|---|

| FGS N+1 (2, 0) | FGS N+2 (2, 1) | ⋯ | FGS 2N+1 (2, N-1) |
|---|---|---|---|

<Context buffer>

Load states

context states (0,0) — 28004

if( context_reference_indication_flag)
Save states

28003

(b)

| FGS 0 (layer-group 0,subgroup 0) |
|---|

| FGS 1 (1, 0) | FGS 2 (1, 1) | ⋯ | FGS N (1, N-1) |
|---|---|---|---|

| FGS N+1 (2, 0) | FGS N+2 (2, 1) | ⋯ | FGS 2N (2, N-1) |
|---|---|---|---|

<Context buffer>

Load states

context states (0,0) — 28006

28005

(c)

Table 2. Context memory usage per subgroup (number of slices = 21)

| saved GeometryOctreeContexts | | Slice 0 (0, 0) | Slice 1 (1, 0) | Slice 5 (1, 4) | Slice 10 (1, 9) | Slice 11 (2, 0) | Slice 15 (2, 4) | Slice 20 (2, 9) |
|---|---|---|---|---|---|---|---|---|
| ref-parent | Bytes | 18,287 | 36,527 | 109,487 | 237,167 | 237,167 | 237,167 | 237,167 |
| | Num Ctx | 1 | 2 | 6 | 11(13) | 11(13) | 11(13) | 11(13) |
| ref-root | Bytes | 18,287 | 18,287 | 18,287 | 18,287 | 18,287 | 18,287 | 18,287 |
| | Num Ctx | 1 | 1 | 1 | 1 | 1 | 1 | 1 |

FIG. 29

FIG. 30

Table 3. Context memory usage per subgroup (number of slices = 41)

| saved GeometryOctreeContexts | | Slice 0 (0, 0) | Slice 1 (1, 0) | Slice 5 (1, 4) | Slice 10 (1, 9) | Slice 11 (2, 0) | Slice 15 (2, 4) | Slice 20 (2, 9) |
|---|---|---|---|---|---|---|---|---|
| ref-parent | Bytes | 18,287 | 36,527 | 109,487 | 237,167 | 237,167 | 346,607 | 510,767 |
| | Num Ctx | 1 | 2 | 6 | 11(13) | 12(13) | 16(19) | 21(28) |
| ref-root | Bytes | 18,287 | 18,287 | 18,287 | 18,287 | 18,287 | 18,287 | 18,287 |
| | Num Ctx | 1 | 1 | 1 | 1 | 1 | 1 | 1 |

| Slice 21 (3, 0) | Slice 25 (3, 4) | Slice 30 (3, 9) | Slice 31 (4, 0) | Slice 35 (4, 4) | Slice 40 (4, 9) |
|---|---|---|---|---|---|
| 510,767 | 510,767 | 766,127 | 766.127 | 766,127 | 766,127 |
| 22(28) | 26(28) | 31(42) | 31(42) | 31(42) | 31(42) |
| 18,287 | 18,287 | 18,287 | 18,287 | 18,287 | 18,287 |
| 1 | 1 | 1 | 1 | 1 | 1 |

Summary of root layer-group referencing vs. parent subgroup referencing

| C2_ai | lossy geometry, lossy attributes [all intra] | | | | | |
| | End-to-End BD-AttrRate [%] | | | | Geom. BD-TotGeomRate [%] | |
| | Luma | Chroma Cb | Chroma Cr | Refletance | D1 | D2 |
| Cat1-A average | #VALUE! | #VALUE! | #VALUE! | | 0.0 | 0.0% |
| Cat1-B average | #VALUE! | #VALUE! | #VALUE! | | 0.1% | 0.1% |
| Cat3-fused average | #VALUE! | #VALUE! | #VALUE! | #VALUE! | 0.1% | 0.1% |
| Cat3-frame average | | | | #VALUE! | 0.4% | 0.4% |
| Overall average | #VALUE! | #VALUE! | #VALUE! | #VALUE! | 0.1% | 0.1% |
| Avg. Enc Time [%] | 99% | | | | | |
| Avg. Dec Time [%] | 97% | | | | | |

| CW_ai | lossless geometry, lossless attributes [all intra] | | | |
| | bpip ratio [%] | | | |
| | Geometry | Colour | Refletance | Total |
| Cat1-A average | 100.1% | #DIV/0! | | 100.1% |
| Cat1-B average | 100.0% | #DIV/0! | | 100.0% |
| Cat3-fused average | 100.0% | #DIV/0! | #DIV/0! | 100.0% |
| Cat3-frame average | 100.2% | | #DIV/0! | 100.2% |
| Overall average | 100.1% | #DIV/0! | #DIV/0! | 100.1% |
| Avg. Enc Time [%] | 99% | | | |
| Avg. Dec Time [%] | 96% | | | |

FIG. 31

Summary of with vs. without context reference indicator

| C2_ai | lossy geometry, lossy attributes [all intra] | | | | | |
|---|---|---|---|---|---|---|
| | End-to-End BD-AttrRate [%] | | | | Geom. BD-TotGeomRate [%] | |
| | Luma | Chroma Cb | Chroma Cr | Refletance | D1 | D2 |
| Cat1-A average | #VALUE! | #VALUE! | #VALUE! | | 0% | 0% |
| Cat1-B average | #VALUE! | #VALUE! | #VALUE! | | 0% | 0% |
| Cat3-fused average | #VALUE! | #VALUE! | #VALUE! | #VALUE! | 0% | 0% |
| Cat3-frame average | | | | #VALUE! | 0% | 0% |
| Overall average | #VALUE! | #VALUE! | #VALUE! | #VALUE! | 0% | 0% |
| Avg. Enc Time [%] | 108% | | | | | |
| Avg. Dec Time [%] | 109% | | | | | |

| CW_ai | lossless geometry, lossless attributes [all intra] | | | |
|---|---|---|---|---|
| | bpip ratio [%] | | | |
| | Geometry | Colour | Refletance | Total |
| Cat1-A average | 100.0% | #DIV/0! | | 100% |
| Cat1-B average | 100.0% | #DIV/0! | | 100% |
| Cat3-fused average | 100.0% | #DIV/0! | #DIV/0! | 100% |
| Cat3-frame average | 100.0% | | #DIV/0! | 100% |
| Overall average | 100.0% | #DIV/0! | #DIV/0! | 100% |
| Avg. Enc Time [%] | 108% | | | |
| Avg. Dec Time [%] | 109% | | | |

FIG. 32

83

slice 0  slice n

| SPS | GPS | APS$_0$ | APS$_1$ | TPS | Geom$_0^0$ | Attr$_0^0$ | Attr$_1^0$ | $\cdots$ | Geom$_0^n$ | Attr$_0^n$ | Attr$_1^n$ |

Geom_slice_header | Geom_slice_data

Tile(0).tile_bounding_box_xyz0;
Tile(0).tile_bounding_box_whd;
......
Tile(n).tile_bounding_box_xyz0;
Tile(n).tile_bounding_box_whd;

geom_ geom_ parameter_set_id;
geom_tile_id;
geom_slice_id;
geomBoxOrigin;
geom_box_log2_scale;
geom_max_node_size_log2;
geom_num_points;

FIG. 33

# FIG. 34

| seq_parameter_set() { | Descriptor |
|---|---|
| simple_profile_compatibility_flag | u(1) |
| dense_profile_compatibility_flag | u(1) |
| predictive_profile_compatibility_flag | u(1) |
| main_profile_compatibility_flag | u(1) |
| reserved_profile_compatibility_18bits | u(18) |
| slice_reordering_constraint_flag | u(1) |
| unique_point_positions_constraint_flag | u(1) |
| level_idc | u(8) |
| sps_seq_parameter_set_id | u(4) |
| frame_ctr_lsb_bits | u(5) |
| slice_tag_bits | u(5) |
| seq_origin_bits | ue(v) |
| if( seq_origin_bits ) { | |
| for( k = 0; k < 3; k++ ) | |
| seq_origin_xyz[ k ] | s(v) |
| seq_origin_log2_scale | ue(v) |
| } | |
| seq_bounding_box_size_bits | ue(v) |
| if( seq_bounding_box_size_bits ) { | |
| for( k = 0; k < 3; k++ ) | |
| seq_bounding_box_size_minus1_xyz[ k ] | u(v) |
| } | |
| seq_unit_numerator_minus1 | ue(v) |
| seq_unit_denominator_minus1 | ue(v) |
| seq_unit_in_metres_flag | u(1) |
| seq_global_scale_factor_log2 | ue(v) |
| seq_global_scale_refinement_num_bits | ue(v) |
| seq_global_scale_factor_refinement_factor | u(v) |
| sps_num_attribute_sets | ue(v) |
| for( attrId = 0; attrId < sps_num_attribute_sets; attrId++ ) { | |
| attribute_dimension_minus1[ attrId ] | ue(v) |
| attribute_instance_id[ attrId ] | ue(v) |
| attribute_bitdepth_minus1[ attrId ] | ue(v) |

# FIG. 35

| | |
|---|---|
| known_attribute_label_flag[ attrId ] | u(1) |
| if( known_attribute_label_flag[ attrId ] ) | |
|     known_attribute_label[ attrId ] | ue(v) |
| else | |
|     attribute_label_oid[ attrId ] | oid(v) |
| num_attribute_parameters | ue(v) |
| byte_alignment( ) | |
| for( j = 0; j < num_attribute_parameters; j++ ) | |
|     attribute_parameters( attrId ) | |
| } | |
| axis_coding_order | u(3) |
| bypass_stream_enabled_flag | u(1) |
| entropy_continuation_enabled_flag | u(1) |
| sps_extension_flag | u(1) |
| if( sps_extension_flag ) { | |
|     layer_group_enabled_flag | u(1) |
|     if(layer_group_enabled_flag) { | |
|         num_layer_groups_minus1 | u(8) |
|         for(i=0; i<=num_layer_groups_minus1; i++) { | |
|             layer_group_id[i] | u(8) |
|             num_layers_minus1[i] | u(8) |
|             subgroup_enabled_flag[i] | u(1) |
|         } | |
|         if(subgroup_enabled_flags( )) { | |
|             subgroup_bbox_origin_bits_minus1 | ue(v) |
|             subgroup_bbox_size_bits_minus1 | ue(v) |
|         } | |
|         root_layer_group_context_reference_enabled_flag | u(1) |
|     } | |
|     while( more_data_in_data_unit( ) ) | |
|     sps_extension_data_flag | u(1) |
| } | |
| byte_alignment( ) | |
| } | |

# FIG. 36

| dependent_geometry_data_unit_header( ) { | Descriptor |
|---|---|
| dgsh_geometry_parameter_set_id | u(4) |
| dgsh_slice_id_id | ue(v) |
| layer_group_id | u(8) |
| if(subgroup_enabled_flag[layer_group_id]) { | |
| subgroup_id | u(8) |
| for(i=0; i<3; i++) | |
| subgroup_bbox_origin[i] | u(v) |
| for(i=0; i<3; i++) | |
| subgroup_bbox_size[i] | u(v) |
| } | |
| ref_layer_group_id | u(8) |
| if(subgroup_enabled_flag[layer_group_id]) | |
| ref_subgroup_id | u(8) |
| context_reference_indication_flag | u(1) |
| context_atlas_type | u(4) |
| byte_alignment( ) | |
| } | |

# FIG. 37

| layer_group_struture_inventory( ) { | Descriptor |
|---|---|
| lgsi_seq_parameter_set_id | u(4) |
| lgsi_frame_ctr_lsb_bits | u(5) |
| lgsi_frame_ctr_lsb | u(v) |
| lgsi_num_slice_ids_minus1 | u(8) |
| if(lgsi_num_slice_ids_minus1 >= 0 ) { | |
| for(sId=0; sId<=lgsi_num_slice_ids_minus1; sId++){ | |
| lgsi_slice_id[sId] | ue(v) |
| lgsi_num_layer_groups_minus1[sId] | u(8) |
| lgsi_subgroup_bbox_origin_bits_minus1[sId] | ue(v) |
| lgsi_subgroup_bbox_size_bits_minus1[sId] | ue(v) |
| for(i=0; i<=lgsi_num_layer_groups_minus1[sId]; i++){ | |
| lgsi_layer_group_id[sId][i] | u(8) |
| lgsi_num_layers_minus1[sId][i] [i] | u(8) |
| lgsi_num_layers_minus1[sId][i] [i] | u(16) |
| for(j=0; j<=lgsi_num_subgroups_minus1[sId][i]; j++){ | |
| lgsi_subgroup_id[sId][i][j] | u(16) |
| lgsi_parent_subgroup_id[sId][i][j] | u(16) |
| for(k=0; k<3; k++) | |
| lgsi_subgroup_bbox_origin[sId][i][j][k] | u(v) |
| for(k=0; k<3; k++) | |
| lgsi_subgroup_bbox_size[sId][i][j][k] | u(v) |
| } | |
| } | |
| } | |
| } | |
| lgsi_orgin_bits_minus1 | ue(v) |
| for(k=0; k<3; k++) | |
| lgsi_orgin_xyz[k] | se(v) |
| lgsi_orgin_log2_scale | ue(v) |
| byte_alignment() | |
| } | |

# FIG. 38

# FIG. 39

**FIG. 40**

bitstream

SPS,
GPS,
APS

Scalable slice structure — 40011

aligned_slice_structure_enabled_flag

40012 — geom scalable layer estimation

If allgned_slice_structure_enabled_flag =1? — 40017

No

Yes

attr scalable layer estimation — 40020

40013 — ranging geom slice id

slice_id_offsets

find corresponding attr slice id — 40018

ranging attr slice id — 40021

slice_id

slice_id

40014 — geom slice selection

attr slice selection — 40019

Selected geometry slices

Selected attribute slices

40015 — Split bitstream

40016 — Split concatenation

Arithmetic entropy coded bitstream   directcoded bitstream

# FIG. 41

# FIG. 42

# FIG. 43

**FIG. 44**

Encoder (layer-group sliceing)

Slice selector

Layer-group 1    Layer-group 2    Layer-group 3

decoder

High-level view (Layer-group 1)

Mid-level view (Layer-group 1) + layer-group 2)

Low-level view (Layer-group 1) + layer-group 2) + layer-group 3)

4401

4402

# FIG. 45

Encode point cloud data — S4500

Transmit bitstream
containing point cloud data — S4501

# FIG. 46

Receive bitstream
containing point cloud data — S4600

Decode point cloud data — S4601

## INTERNATIONAL SEARCH REPORT

| | International application No. |
|---|---|
| | **PCT/KR2022/015259** |

| A. | CLASSIFICATION OF SUBJECT MATTER |
|---|---|

**H04N 19/426**(2014.01)i; **H04N 19/70**(2014.01)i; **H04N 19/96**(2014.01)i; **H04N 19/119**(2014.01)i; **H04N 19/30**(2014.01)i; **H04N 19/54**(2014.01)i; **H04N 19/167**(2014.01)i

According to International Patent Classification (IPC) or to both national classification and IPC

| B. | FIELDS SEARCHED |
|---|---|

Minimum documentation searched (classification system followed by classification symbols)

H04N 19/426(2014.01); G06T 15/08(2011.01); G06T 9/00(2006.01); H04N 19/60(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 포인트 클라우드(point cloud), 트리(tree), 레이어(layer), 그룹(group), 컨텍스트 (context)

| C. | DOCUMENTS CONSIDERED TO BE RELEVANT |
|---|---|

| Category* | Citation of document, with indication, where appropriate, of the relevant passages | Relevant to claim No. |
|---|---|---|
| X<br>Y | G-PCC codec description. INTERNATIONAL ORGANIZATION FOR STANDARDIZATION. ISO/IEC JTC 1/SC 29/WG 7, N0151. 04 October 2021. [Retrieved on 10 January 2023]. Retrieved from <URL: https://www.mpeg.org/wp-content/uploads/mpeg_meetings/135_OnLine/w20626.zip>.<br>See sections 2, 3.2.2, 3.11.5, 3.15.3-3.15.4 and 3.15.8; and figures 1 and 15-16. | 1,8,11,17<br>2-7,9-10,12-16,18-19 |
| Y | US 2017-0347122 A1 (MICROSOFT TECHNOLOGY LICENSING, LLC) 30 November 2017 (2017-11-30)<br>See paragraphs [0293]-[0302]; and figures 27a-27d. | 2-7,9-10,12-16,18-19 |
| A | KR 10-2021-0089087 A (LG ELECTRONICS INC.) 15 July 2021 (2021-07-15)<br>See paragraphs [0010]-[0024]; and claims 1-5. | 1-19 |
| A | KR 10-2020-0141065 A (BLACKBERRY LIMITED) 17 December 2020 (2020-12-17)<br>See paragraph [0005]; and claims 1-11. | 1-19 |

☑ Further documents are listed in the continuation of Box C.    ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **20 January 2023** | **20 January 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

# EP 4 412 208 A1

## INTERNATIONAL SEARCH REPORT

| International application No. |
|---|
| **PCT/KR2022/015259** |

### C. DOCUMENTS CONSIDERED TO BE RELEVANT

| Category* | Citation of document, with indication, where appropriate, of the relevant passages | Relevant to claim No. |
|---|---|---|
| A | KR 10-2020-0141448 A (INTERDIGITAL VC HOLDINGS, INC) 18 December 2020 (2020-12-18) <br> See paragraphs [0020]-[0042]; and claims 1-7. | 1-19 |
| L | PCT/KR2022/015149 has the same priority date as the present application(PCT/KR2022/015259), and claims 1, 10 and 11 are the same as claims 1, 8 and 11 of present application, respectively. (Therefore, PCT/KR2022/015149 is related to category "L".) | 1,8,11 |

Form PCT/ISA/210 (second sheet) (July 2022)

**INTERNATIONAL SEARCH REPORT**
Information on patent family members

International application No.

**PCT/KR2022/015259**

| Patent document cited in search report | | | Publication date (day/month/year) | Patent family member(s) | | | Publication date (day/month/year) |
|---|---|---|---|---|---|---|---|
| US | 2017-0347122 | A1 | 30 November 2017 | US | 10694210 | B2 | 23 June 2020 |
| KR | 10-2021-0089087 | A | 15 July 2021 | CN | 114930397 | A | 19 August 2022 |
| | | | | EP | 4068213 | A2 | 05 October 2022 |
| | | | | US | 11308651 | B2 | 19 April 2022 |
| | | | | US | 2021-0209813 | A1 | 08 July 2021 |
| | | | | US | 2022-0319056 | A1 | 06 October 2022 |
| | | | | WO | 2021-141352 | A2 | 15 July 2021 |
| | | | | WO | 2021-141352 | A3 | 23 September 2021 |
| KR | 10-2020-0141065 | A | 17 December 2020 | CN | 112272922 | A | 26 January 2021 |
| | | | | EP | 3553745 | A1 | 16 October 2019 |
| | | | | EP | 3553745 | B1 | 01 September 2021 |
| | | | | EP | 3937132 | A1 | 12 January 2022 |
| | | | | JP | 2021-521679 | A | 26 August 2021 |
| | | | | US | 2021-0192797 | A1 | 24 June 2021 |
| | | | | WO | 2019-195920 | A1 | 17 October 2019 |
| KR | 10-2020-0141448 | A | 18 December 2020 | BR | 112020020003 | A2 | 26 January 2021 |
| | | | | CN | 111971969 | A | 20 November 2020 |
| | | | | EP | 3554082 | A1 | 16 October 2019 |
| | | | | EP | 3777181 | A1 | 17 February 2021 |
| | | | | JP | 2021-518689 | A | 02 August 2021 |
| | | | | RU | 2769719 | C1 | 05 April 2022 |
| | | | | US | 11477481 | B2 | 18 October 2022 |
| | | | | US | 2021-0152849 | A1 | 20 May 2021 |
| | | | | WO | 2019-199512 | A1 | 17 October 2019 |

Form PCT/ISA/210 (patent family annex) (July 2022)